# EUROPÄISCHE PATENTSCHRIFT

(11) **EP 4 133 327 B1**
(45) Veröffentlichungstag und Bekanntmachung des Hinweises auf die Patenterteilung: **22.10.2025**
(21) Anmeldenummer: 21718534.7
(22) Anmeldetag: 08.04.2021
(51) Int. Cl.: G02B 27/12, G02B 6/27

(54) **OPTISCHE KOPPLUNG UND MODENSELEKTIVE TRENNUNG ODER ÜBERLAGERUNG VON OPTISCHEN FELDERN**
OPTICAL COUPLING AND MODE-SELECTIVE SEPARATION OR SUPERPOSITION OF OPTICAL FIELDS
COUPLAGE OPTIQUE ET SÉPARATION OU SUPERPOSITION SÉLECTIVE DE MODE DE CHAMPS OPTIQUES

(30) Priorität: 09.04.2020 DE 102020204641
(43) Veröffentlichungstag der Anmeldung: 15.02.2023
(73) Patentinhaber: Karlsruher Institut für Technologie, 76131 Karlsruhe (DE)
(72) Erfinder: NESIC, Aleksandar, 76297 Stutensee (DE); BLAICHER, Matthias, 76275 Ettlingen (DE); KOOS, Christian, 74936 Siegelsbach (DE)
(74) Vertreter: Altmann Stößel Dick Patentanwälte PartG mbB
(86) Internationale Anmeldenummer: PCT/EP2021/059147
(87) Internationale Veröffentlichungsnummer: WO 2021/204933

(56) Entgegenhaltungen:
- WO-A1-2018/083191
- US-A1- 2008 019 637
- US-B2- 7 127 131
- US-B2- 7 228 015
- US-B2- 8 903 205

## Beschreibung

### Gebiet der Erfindung

Die vorliegende Erfindung liegt auf dem Gebiet der integrierten Photonik und Mikro-Optik und betrifft insbesondere mikrooptische und nanooptische Systeme, in denen Licht zwischen verschiedenen optischen Komponenten oder zwischen Freiraum-Strecken und optischen Komponenten durch optische Koppelstellen übertragen wird. Insbesondere betrifft die vorliegende Erfindung eine Anordnung zur optischen Kopplung und zur modenselektiven Trennung oder Überlagerung von optischen Feldern und deren Verwendung sowie ein Verfahren zur Herstellung eines wellenleiterbasierten optischen Koppelelements, das zur modenselektiven Trennung oder Überlagerung von optischen Feldern eingerichtet ist, an einer optischen Koppelstelle eines optischen Bauteils.

### Stand der Technik

Die Funktionsfähigkeit integriert-optischer oder mikrooptischer Systeme hängt oft entscheidend davon ab, dass das zu übertragende Licht an den jeweiligen optischen Koppelstellen eine bestimmte räumliche Verteilung und Polarisation aufweist; beispielsweise um eine hohe Koppeleffizienz zu erreichen, um bei wellenleiterbasierten Bauteilen eine effiziente Anregung bestimmter Wellenleitermoden zu ermöglichen oder um das von einem Bauteil emittierte Licht in eine gewünschte Feldverteilung im Freiraum zu transformieren. Die Verteilung und Polarisation des Lichtes wird dabei allgemein durch das vektorielle Modenfeld beschrieben, das sowohl die räumliche Verteilung des vektoriellen elektrischen Feldes *E(x,y)* als auch die räumliche Verteilung des vektoriellen magnetischen Feldes *H(x,y)* umfasst.

Zur Anpassung der Intensitätsverteilung des Modenfeldes werden gemäß dem Stand der Technik üblicherweise diskrete optische Elemente wie Linsen, Gradientenindexfasern, gekrümmte Spiegel oder andere refraktive, diffraktive oder reflektive optische Elemente verwendet. Zur Einstellung der Orientierung der Feldvektoren des elektrischen Feldes und des magnetischen Feldes kommen dagegen oftmals polarisationsmanipulierende optische Elemente, wie z.B. Polarisationsfilter oder doppelbrechende optische Elemente, u.a. Halb- oder Viertelwellenplatten, oder geeignete Glasfasern (z.B. polarisationserhaltende Glasfasern) zum Einsatz. In vielen praktischen Anwendungsfällen müssen diese Elemente in geeigneter Weise miteinander kombiniert werden, insbesondere um eine gewünschte vektorielle Modenfeldverteilung an der optischen Koppelstelle eines optischen Bauteils zu erhalten. Dies führt zum einen zu verhältnismäßig großen Anordnungen, deren Bauraum den des zugehörigen optischen Bauteils oft um ein Vielfaches übersteigt. Darüber hinaus müssen die einzelnen diskreten optischen Elemente mit hoher Genauigkeit zueinander und relativ zur optischen Koppelstelle des optischen Bauteils ausgerichtet werden. Dies erfordert oftmals zeit- und kostenintensive Justageverfahren, insbesondere aktive Justageverfahren, bei denen während des Positioniervorganges die optische Koppeleffizienz fortwährend gemessen und optimiert wird. Derartige Justageverfahren sind in der Anwendung komplex und nur bedingt zur Massenfertigung optischer oder mikrooptischer Systeme geeignet.

Das Problem stellt sich insbesondere dann, wenn Licht aus dem Freiraum, aus einer Glasfaser oder aus einem optischen Bauteil in einen bestimmten, u.a. durch die Polarisationsrichtung definierten Modus eines einmodigen Wellenleiters eines weiteren Bauteils eingekoppelt werden soll. Der Begriff "Wellenleitermodus" bezeichnet im Falle eines in axialer Richtung homogenen Wellenleiters, also eines Wellenleiters mit in Ausbreitungsrichtung invariantem Querschnittsprofil, eine Form des elektromagnetischen Feldes, die ihre transversale Ortsabhängigkeit bei Propagation in axialer Richtung nicht ändert. Wellenleitermoden können eine untere Grenzfrequenz aufweisen, bis zu welcher der Modus um den jeweiligen Wellenleiter geführt wird, während für kleinere Frequenzen keine Führung mehr möglich ist. Ein "Grundmodus" bezeichnet einen Wellenleitermodus, das verglichen mit anderen Moden derselben, beispielsweise durch die Polarisation bestimmten Modenfamilie, die geringste Grenzfrequenz aufweist. Bei Stufenprofilwellenleitern zeichnen sich Grundmoden in der Regel dadurch aus, dass die zum Modenfeld gehörende transversale Intensitätsverteilung ein einziges Maximum im Bereich des Wellenleiterkerns aufweist, und dass ansonsten keine Nullstellen in der transversalen Intensitätsverteilung auftreten.

In vielen Fällen lassen sich geführte Wellenleitermoden aufgrund ihres Polarisationszustandes in zwei verschiedene Modenfamilien unterteilen, die insbesondere als "transversalelektrisch" ("TE") oder als "transversalmagnetisch" ("TM") bezeichnet werden. In diesem Fall lässt sich für jede der Modenfamilien diejenige Feldverteilung mit der geringsten Grenzfrequenz bestimmen, so dass zwei Grundmoden mit unterschiedlichen Polarisationszuständen vorliegen. Unter einem "einmodigen Wellenleiter" wird im Folgenden ein Wellenleiter für elektromagnetische Strahlung verstanden, in dem sich bei der Betriebsfrequenz maximal zwei zueinander orthogonale Grundmoden unterschiedlicher Polarisation entlang der Wellenleiterachse ausbreiten können. Die Begriffe "Polarisation" oder "Polarisationsrichtung" eines Wellenleitermodus beschreiben die Orientierung der zu diesem Wellenleitermodus gehörenden elektrischen Feldvektoren, wobei oftmals die Richtung einer in vielen Fällen dominierenden transversalen Komponente des elektrischen Feldes herangezogen wird.

Bei Wellenleitern mit Querschnitten, die kontinuierlich oder diskret rotationssymmetrische, z.B. runde oder quadratische, Formen besitzen, treten oftmals entartete oder nahezu entartete Wellenleitermoden auf, die gleiche oder ähnliche Ausbreitungskonstanten aufweisen und deren Modefelder durch eine entsprechende Rotation genau oder näherungsweise ineinander überführt werden können. Im Fall entarteter oder nahezu entarteter Moden wird sich auch jede Linearkombination zweier Modenfelder in axialer Richtung mit derselben Ausbreitungskonstante wie die Ausgangsmoden ausbreiten und dabei ihre laterale Feldverteilung vollständig oder näherungsweise beibehalten. Die Polarisationseigenschaften einer Überlagerung zweier entarteter oder nahezu entarteter Wellenleitermoden lassen sich - ähnlich zur Überlagerung ebener Wellen im Freiraum - durch einen zugehörigen Polarisationszustand beschreiben. Bei der Kopplung verschiedener optischer Komponenten untereinander oder bei deren Anbindung an Glasfasern kann insbesondere auch der Fall auftreten, dass Licht von einem ersten einmodigen oder mehrmodigen Wellenleiter mit zwei entarteten oder nahezu entarteten Moden unterschiedlicher Polarisation derart in zwei weitere einmodige oder mehrmodige Wellenleiter mit jeweils nichtentarteten Eigenmoden eingekoppelt werden muss, dass in jedem der beiden letztgenannten Wellenleitern jeweils nur ein Eigenmodus angeregt wird. Dies ist z.B. bei einer Kopplung von Licht aus einer Glasfaser, z.B. einer Standard-Einmodenfaser, mit rotationssymmetrischem Querschnittsprofil und daher entarteten Moden unterschiedlicher Polarisation in oft als TE oder TM bezeichnete Grundmoden eines stark doppelbrechenden Wellenleiters auf einem integriert-optischen Chip der Fall.

US 7 127 131 B2 offenbart einen integriert-optischen Polarisationsstrahlteiler, der auf einem ebenen Halbleitersubstrat mit einem planaren Mikrostrukturierungsverfahren aus mehreren, darin als *"core layers"* bezeichneten Schichten hergestellt wird. Die Struktur erfordert damit nicht nur einen vergleichsweise komplexen Herstellungsprozess, der eine Bearbeitung von mindestens zwei Schichten mit hoher Überlagerungsgenauigkeit vorsieht, sondern ist auch den Einschränkungen einer aus ebenen, in vielen Fällen näherungsweise prismenähnlichen Teilstrukturen mit parallelen Grundflächen und Deckflächen aufgebauten Strukturgeometrie unterworfen, in welcher die Mittelinien aller Wellenleiter oder Teilwellenleiter in einer gemeinsamen oder in zueinander parallelen Ebene liegen. Dies schränkt die Funktionalität ein und führt z.B. zu asymmetrischen Verlusten der beiden voneinander getrennten Moden. Darüber hinaus ist das darin beschriebene Bauteil nur zur Trennung zweier Polarisationen auf einem optischen Chip geeignet.

US 7 228 015 B2 offenbart einen integriert-optischen Wellenleiter, der eine Drehung der Polarisation des in ihm propagierenden optischen Feldes um 90° bewirkt. Es ist ebenfalls aus mehreren diskreten als *"core layers"* bezeichneten Schichten aufgebaut, mit denen die ideale Form eines entlang seiner Längsachse tordierten optischen Wellenleiters mit rechteckigem Querschnitt nur grob angenähert werden kann. Sie ist damit genauso den Einschränkungen einer aus ebenen, näherungsweise prismenähnlichen Teilstrukturen mit parallelen Grundflächen und Deckflächen aufgebauten Strukturgeometrie unterworfen, bei der die Mittelinien aller Wellenleiter in einer gemeinsamen oder in zueinander parallelen Ebene liegen. Sie erfordert ferner einen komplexen Herstellungsprozess, der die Bearbeitung der einzelnen Schichten durch wiederholte Anwendung klassischer Mikrostrukturierungsverfahren, insbesondere mittels planar strukturierter Masken und anisotroper Ätzprozesse, vorsieht.

Watts et al., Polarization splitting and rotating through adiabatic transitions, in Integrated Photonics Research, A. Sawchuk, ed., Vol. 91 of OSA Trends in Optics and Photonics, 2003 beschreiben eine integriert-optische Struktur, welche den in US 7 127 131 B2 offenbarten Polarisationsstrahlteiler und den in US 7 228 015 B2 offenbart Polarisationsdreher miteinander kombiniert. Sie ist damit im Wesentlichen denselben Einschränkungen unterworfen wie die zugehörigen Teilstrukturen. Die Herstellung erfolgt aus mehreren diskreten Lagen, die auf einem ebenen Halbleitersubstrat aufgebracht sind und die mit klassischen planaren Mikrostrukturierungsverfahren bearbeitet werden.

Schumann et al., Hybrid 2D-3D optical devices for integrated optics by direct laser writing, Light Science and Applications, Vol. 3, No. 6, 2014, zeigen einen durch 3D Lithographie auf der Oberfläche eines Chips gefertigten Polymerwellenleiter, der eine Torsion entlang seiner Längsachse aufweist und dadurch eine Drehung der Polarisation erlaubt. Die hierein beschriebene Struktur wird lediglich dazu verwendet, zwei Si₃N₄ Wellenleiter auf dem optischen Chip miteinander zu verbinden.

Hahn et al., Polarizing beam splitter integrated onto an optical fiber facet, Optics Express, Vol. 26, No. 25, 2018 beschreiben einen durch 3D-Lithographie auf der Facette einer optischen Faser gefertigten Polarisationsstrahlteiler. Der Polarisationsstrahlteiler umfasst ein lamellenförmiges Gitter mit Gitterperioden in der Größenordnung der Vakuumwellenlänge des verwendeten Lichts oder darunter, das auch als *"sub-wavelength lamellar grating"* bezeichnet wird. In dem lamellenförmigen Gitter erfolgt eine Kopplung des eingestrahlten Lichtes einer als "TE" bezeichneten Polarisation an eine bestimmte Beugungsordnung, während eine andere, als "TM" bezeichnete Polarisation das Gitter weitgehend ungestört durchquert.

WO 92/00185 A1 offenbart die Herstellung eines Lichtwellenleiters, indem ein Lichtstrahl von einem Hochleistungslaser durch eine Linse in ein photostrukturierbares Material fokussiert wird um im Fokuspunkt eine photoinitiierte Polymerisation dieses Materials zu erreichen. Durch eine Bewegung des Fokuspunktes durch das photostrukturierbare Material wird ein Strang aus polymerisiertem Material entlang des Pfades erzeugt, wobei der Strang einen höheren Brechungsindex als der umgebende Materialkörper aufweist und als optischer Wellenleiter fungieren kann. Mit diesem Verfahren lassen sich optische Wellenleitervorrichtungen herstellen, die eine Vielzahl von Wellenleitersträngen umfassen.

US 2018/0314005 A1 offenbart einen auf planar integrierten Polarisationsstrahlteiler, der einen Wellenleiterkern aus Siliziumnitrid umfasst und der dazu eingerichtet ist, ein Eingangslichtsignal in zwei Wellenleitermoden unterschiedlicher Polarisationen aufzuteilen. Allerdings handelt es sich bei dieser Anordnung um eine durch planare Mikrostrukturierungsverfahren hergestellte Struktur, die gegenüber den in der vorliegenden Anmeldung verwendeten Freiformstrukturen ebenfalls die oben im Zusammenhang mit US 7 127 131 B2 und US 7 228 015 B2 beschriebenen Einschränkungen aufweist.

US 8 903 205 B2 und US 9 034 222 B2 offenbaren ein Verfahren und eine Anordnung, mit 3D-Lithographie an einer Zielposition gefertigte optische Freiformwellenleiter dazu zu nutzen, unterschiedliche optische Komponenten miteinander zu verbinden. Hierbei wird ausgenutzt, dass sich die Freiformwellenleiter in Position, Form und Größe auf einfache Weise an die Position, Form und Größe der zu verbindenden optischen Bauteile anpassen lassen.

### Aufgabe der Erfindung

Ausgehend hiervon, besteht die Aufgabe der vorliegenden Erfindung darin, eine Anordnung zur optischen Kopplung und zur modenselektiven Trennung oder Überlagerung von optischen Feldern, eine Verwendung der Anordnung, sowie ein Verfahren zur Herstellung eines wellenleiterbasierten optischen Koppelelements, das zur modenselektiven Trennung oder Überlagerung von optischen Feldern eingerichtet ist, an einer optischen Koppelstelle eines optischen Bauteils bereitzustellen, welche die Nachteile und Einschränkungen des Standes der Technik zumindest teilweise überwinden.

Die Aufgabe der vorliegenden Erfindung besteht insbesondere darin, mit der Anordnung und dem Verfahren Licht unter gleichzeitiger Anpassung von räumlicher Modenfeldverteilung und Polarisation in ein optisches Bauteil einzukoppeln und/oder zwischen zwei oder mehr optischen Bauteilen zu koppeln. Die Erfindung soll es ferner ermöglichen, in umgekehrter Richtung Licht aus einem optischen Bauteil auszukoppeln und in einer bestimmten Feldverteilung und Polarisation zur Verfügung zu stellen.

Die Anordnung soll möglichst kompakt sein und sich mit möglichst geringem Aufwand auch automatisiert in großen Stückzahlen herstellen lassen. Ferner soll sich die Anordnung präzise an Facetten mindestens eines Bauteils ausrichten lassen, ohne dass dazu ein aufwendiges Justageverfahren, insbesondere ein aktives Justageverfahren, erforderlich ist, und ohne dass der Fertigungsprozess der optischen Bauteile erschwert wird, insbesondere indem sich ein Einsatz komplexer integriert-optischer Modenfeldkonverter oder Polarisationskonverter vermeiden lässt.

Die Anordnung und das Verfahren sollen es weiterhin erlauben, räumlich überlappende, aber unterschiedlich polarisierte Feldanteile eines Eingangsfeldes zu trennen und die getrennten Feldanteile verschiedenen, räumlich nicht überlappenden Lichtwellenleitern zuzuführen; diese Funktion ist vergleichbar mit der eines "Polarisationsstrahlteilers" (engl. *polarizing beam splitter*) in aus diskreten Komponenten aufgebauten optischen Systemen.

Ferner sollen es die Anordnung und das Verfahren ermöglichen, in umgekehrter Richtung Licht aus verschiedenen, räumlich nicht überlappenden Lichtwellenleitern zusammenzuführen und in Form unterschiedlich polarisierter Feldanteile zu einem Ausgangsfeld zu überlagern; diese Funktion ist gleichbedeutend mit der eines "Polarisationsstrahlkombinierers" (engl. *polarizing beam combiner*).

Mit der Anordnung und dem Verfahren soll es insbesondere möglich werden, eine Glasfaser mit ggf. entarteten Eigenmoden, deren Polarisationsrichtungen senkrecht aufeinander stehen, derart an zwei integriert-optische Wellenleiter anzukoppeln, dass das Licht aus dem ersten der zwei zueinander orthogonalen Eigenmoden der Glasfaser auf einen bestimmten Grundmodus des ersten integriert-optischen Wellenleiters übertragen werden kann, während das Licht aus dem zweiten der zueinander orthogonalen Eigenmoden der Glasfaser auf einen Grundmodus des zweiten integriert-optischen Wellenleiters übertragen werden kann.

Durch eine Umkehrung der Propagationsrichtung soll es ferner möglich sein, Licht aus zwei räumlich getrennten Lichtwellenleitern in Form zweier zueinander orthogonaler Eigenmoden einer Glasfaser zu überlagern.

Die Anordnung soll hierbei flexibel auf eine große Vielfalt optischer Integrationsplattformen anwendbar sein und möglichst ohne zusätzliche diskrete optische Elemente auskommen, wobei sich das zugehörige Verfahren möglichst nahtlos in Prozessabläufe der optischen Aufbau- und Verbindungstechnik einfügen lassen sollte.

### Offenbarung der Erfindung

Diese Aufgabe wird durch eine Anordnung zur optischen Kopplung und zur modenselektiven Trennung oder Überlagerung von optischen Feldern, eine Verwendung der Anordnung, sowie ein Verfahren zur Herstellung eines wellenleiterbasierten optischen Koppelelements, das zur modenselektiven Trennung oder Überlagerung von optischen Feldern eingerichtet ist, an einer optischen Koppelstelle eines optischen Bauteils mit den Merkmalen der unabhängigen Patentansprüche gelöst. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, das das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "bevorzugt", "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden sollen. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt betrifft die vorliegende Erfindung eine Anordnung zur optischen Kopplung und zur modenselektiven Trennung oder Überlagerung von optischen Feldern, wobei die Anordnung wenigstens umfasst:
- mindestens ein wellenleiterbasiertes optisches Koppelelement, das mindestens drei optische Koppelstellen aufweist, wobei das wellenleiterbasierte optische Koppelelement einen Kernbereich und einen an den Kernbereich angrenzenden Mantelbereich umfasst, wobei zwischen dem Kernbereich und dem Mantelbereich ein Brechungsindexunterschied von mindestens 0,05 auftritt, wobei das wellenleiterbasierte optische Koppelelement in Form einer dreidimensionalen Freiformstruktur ausgestaltet ist, wobei die Freiformstruktur durch eine geschichtete Struktur aus mindestens sechs Schichten angenähert ist,
   ∘ wobei mindestens eine erste optische Koppelstelle mindestens zwei voneinander verschiedene, der ersten optischen Koppelstelle zugeordnete geführte Eigenmoden aufweist,
   ∘ wobei mindestens eine zweite optische Koppelstelle mindestens einen der zweiten optischen Koppelstelle zugeordneten geführten Eigenmodus aufweist, und
   ∘ wobei mindestens eine dritte optische Koppelstelle mindestens einen der dritten optischen Koppelstelle zugeordneten geführten Eigenmodus aufweist,
- mindestens ein optisches Bauteil, das mindestens eine weitere optische Koppelstelle aufweist;

wobei mindestens eine der optischen Koppelstellen des wellenleiterbasierten optischen Koppelelements an die mindestens eine weitere optische Koppelstelle des optischen Bauteils optisch angeschlossen ist, und
wobei das wellenleiterbasierte optische Koppelelement dazu eingerichtet ist, Licht mit hoher Effizienz bidirektional
   o zwischen mindestens einem ersten, der ersten optischen Koppelstelle zugeordneten geführten Eigenmodus und dem mindestens einen der zweiten optischen Koppelstelle zugeordneten geführten Eigenmodus sowie
   o zwischen mindestens einem zweiten, der ersten optischen Koppelstelle zugeordneten geführten Eigenmodus und dem mindestens einen der dritten optischen Koppelstelle zugeordneten geführten Eigenmodus zu übertragen.

Die Begriffe "optische Strahlung", "Strahlung" oder "Licht" betreffen jede Art von elektromagnetischen Wellen, die sich in einem Wellenleiter führen lassen. Neben dem sichtbaren optischen Bereich, der eine Vakuumwellenlänge λ zwischen 400 nm und 800 nm aufweist, gehören hierzu insbesondere der UV-Bereich von 1 nm ≤ λ ≤ 400 nm, der Infrarot-Bereich von 800 nm ≤ λ < 1 mm und der Mikrowellenbereich von 1 mm ≤ λ ≤ 1 m, wobei der Bereich von 30 µm ≤ λ ≤ 3 mm auch als "THz-Bereich" und der Bereich von 1 mm ≤ λ ≤ 1 cm auch als "Millimeterwellenbereich" bezeichnet werden. Im Folgenden angegebene Zahlenwerte, insbesondere für Abmessungen von Strukturen oder zur Beschreibung von Leistungsparameters von Mikrostrukturierungsverfahren, z.B. für Auflösung oder Genauigkeit, beziehen sich, soweit nicht anders erwähnt, auf Anordnungen, die für eine Vakuum-Betriebswellenlänge λ von ca. 1,5 µm eingerichtet sind. Für andere Betriebswellenlänge lassen sich die angegebenen Zahlenwerte proportional zur Wellenlänge, insbesondere unter Berücksichtigung der Brechungsindizes der verwendeten Materialien, skalieren.

Die weiterhin hierin verwendeten Begriffe "optische Koppelstelle", "optische Koppelstruktur" und "Facette" bezeichnen jeweils
- einerseits eine Fläche einer lichtabstrahlenden optischen Komponente oder einer Struktur der lichtabstrahlenden optischen Komponente, welche das Licht bei einer Abstrahlung des Lichtes als letztes durchstößt, und
- andererseits die Fläche einer lichtempfangenden optischen Komponente oder einer Struktur der lichtempfangenden optischen Komponente, welche bei einem Empfang von Licht als erstes von dem Licht beaufschlagt wird.

Im Folgenden bezeichnen die Begriffe "optisches Bauteil" und "optische Komponente" ein optisches Element, das zu Emission, Transport, Empfang, Detektion und/oder Manipulation von elektromagnetischer Strahlung eingerichtet ist, während der Begriff "optisches System" eine Anordnung von mindestens zwei optischen Komponenten oder eine Kombination einer oder mehrerer erfindungsgemäßer Anordnungen untereinander, mit mindestens einer optischen Komponente oder mit mindestens einer weiteren, in Kombination mit der erfindungsgemäßen Anordnung hergestellte Zusatzstruktur, insbesondere mindestens einem optischen Wellenleiter oder mindestens einem mikrooptischen Element bezeichnet. Vorzugsweise ist jede im Rahmen der vorliegenden Erfindung verwendete optische Komponente ausgewählt aus der Gruppe umfassend: optische Glasfasern, insbesondere Einmodenfasern oder Mehrmodenfasern aus organischen oder anorganischen Materialien; halbleiterbasierte integriert-optische Chips, insbesondere Fotodioden, lineare oder flächige Fotodiodenarrays, CCD-Arrays oder Bildsensoren, insbesondere auf der Basis von Halbleitern, vorzugsweise Silizium oder III-V-Verbindungshalbleitern, oder dielektrischen Materialien, bevorzugt Gläser, Siliziumdioxid, Silizium-Nitrid oder Polymeren; Bolometer; Laser, insbesondere oberflächenemittierende Laser (engl. *vertical cavity surface emitting lasers,* VCSEL) oder kantenemittierende Laser; Superlumineszenz-Dioden; optische Leiterplatten; Elemente für die Freistrahl-Optik, insbesondere Linsen, Strahlteiler, Isolatoren, Spiegel oder Beugungsgitter. Andere optische Komponenten sind denkbar. Die optischen Komponenten können bevorzugt optische Wellenleiter mit geringem Indexkontrast, insbesondere glasbasierte optische Wellenleiter, oder mit mittlerem oder hohem Indexkontrast, insbesondere halbleiterbasierte Wellenleiter, umfassen. Eine Einkopplung oder Auskopplung von Licht kann vorzugsweise an einer Kante oder auf einer Oberfläche der optischen Komponente erfolgen; insbesondere an einer Kante eines kantenemittierenden Laser, an einer Chipkante, oder an einer Facette eines wellenleiterbasierten Systems; alternativ an einer Oberfläche eines oberflächenemittierenden Lasers oder einer oberflächenbeleuchteten Fotodiode, oder auf der Oberfläche eines wellenleiterbasierten Chips, der über mindestens eine optische Koppelstelle, insbesondere ausgewählt aus einem Gitterkoppler oder einem Umlenkspiegel, verfügt. Andere Arten der Einkopplung oder der Auskopplung von Licht sind jedoch möglich.

Zur verlustarmen Kopplung von Licht in eine optische Koppelstelle einer optischen Komponente wird das Licht vorzugsweise an einer festgelegten Position und unter einer festgelegten Richtung derart in die optische Koppelstelle eingestrahlt, dass das Licht eine festgelegte Feldverteilung aufweist. Umgekehrt strahlt eine optische Koppelstelle Licht an einer festgelegten Position mit einer festgelegten Feldverteilung in eine festgelegte Richtung ab. Unter den Begriffen "vektorielle Feldverteilung" oder "Feldverteilung" wird hierin eine Kombination aus den komplexen vektoriellen elektrischen Feldern (E-Felder) und magnetischen Feldern (H-Felder) verstanden, die sowohl eine Intensitätsverteilung als auch die Polarisation des elektromagnetischen Feldes festlegen, wobei sich die "Polarisation" auf eine Orientierung der entsprechenden Feldvektoren bezieht. Der weiterhin verwendete Begriff der "Orthogonalität" von Feldverteilungen betrifft in der integrierten Optik üblicherweise verwendete Orthogonalitätsrelationen, siehe z.B. Katsunari Okamoto, Fundamentals of Optical Waveguides, Academic Press, 2006, S. 154-155.

Für Feldverteilungen, die mit optischen Wellenleitern in Zusammenhang stehen, werden die Begriffe "Modenfeld" und "Modenfeldverteilung" verwendet, die die vektorielle Feldverteilung eines mit dem Wellenleiterquerschnitt assoziierten Wellenleitermodus bezeichnen. Wie bereits erwähnt, bezeichnen die Begriffe "Wellenleitermodus", "Eigenmodus" oder einfach "Modus" im Falle eines in axialer Richtung homogenen Wellenleiters eine elektromagnetische Feldform, die ihre transversale Ortsabhängigkeit bei Propagation in axialer Richtung nicht ändert. Bei komplexeren Wellenleitern, deren Querschnittsprofil sich in axialer Richtung, beispielsweise periodisch, ändert, kann sich auch das zugehörige Modenfeld entsprechend periodisch ändern. Wellenleiter, deren Querschnittsprofil sich in axialer Richtung hinreichend langsam, d.h. adiabatisch ändert, können oft in guter Näherung auf Basis sich entsprechend langsam, d.h. adiabatisch, ändernder Modenfelder beschrieben werden.

Die vorliegende Anordnung zur optischen Kopplung und zur modenselektiven Trennung oder Überlagerung von optischen Feldern umfasst ein wellenleiterbasiertes optisches Koppelelement, das einfach auch als "optisches Koppelelement" bezeichnet wird, das es ermöglicht, Licht unter gleichzeitiger Anpassung von räumlicher Modenfeldverteilung und Polarisation in ein optisches Bauteil einzukoppeln und/oder zwischen mindestens zwei optischen Bauteilen zu übertragen. Der Begriff "wellenleiterbasiert" in Bezug auf das optische Koppelelement beschreibt hierbei eine Struktur, in der Licht zumindest abschnittsweise durch dafür eingerichtete Wellenleiter geführt wird. Grundsätzlich kann das wellenleiterbasierte optische Koppelelement hierzu auf Basis jeglicher Wellenleiterkonzepte realisiert werden. Vorzugsweise eignen sich dazu dielektrische Wellenleiter; alternativ können metallische Wellenleiter, insbesondere Hohlwellenleiter für den Mikrowellenbereich, oder plasmonische Strukturen verwendet werden.

Das wellenleiterbasierte optische Koppelelement eignet sich somit einerseits zu einer Aufteilung einer Überlagerung von mindestens zwei zueinander orthogonalen oder nahezu orthogonalen, an einer ersten optischen Koppelstelle des optischen Koppelelements vorliegenden Feldverteilungen und gleichzeitiger Manipulation der zugehörigen räumlichen Feldverteilung und/oder Polarisation. Andererseits kann das wellenleiterbasierte optische Koppelelement dazu dienen, mindestens zwei an räumlich getrennten optischen Koppelstellen eingestrahlte optische Signale in Bezug auf ihre Feldverteilung und/oder Polarisation zu manipulieren, die eingestrahlten optischen Signale in Form von räumlich überlappenden Teilfeldern unterschiedlicher Moden zu überlagern, und die Überlagerung der Teilfelder dann an mindestens einer Ausgangskoppelstelle bereitzustellen.

Darüber hinaus ist es möglich, das wellenleiterbasierte optische Koppelelement als Polarisationsfilter zu nutzen. Dazu kann das bzgl. der Polarisation zu filternde optische Signal über eine erste optische Koppelstelle in das optische Koppelement eingekoppelt werden. Das gewünschte in Bezug auf die Polarisation gefilterte Signal steht dann in einem der geführten Eigenmoden einer zweiten optischen Koppelstelle oder einer dritten optischen Koppelstelle zur Verfügung, während der durch die Polarisationsfilterung zu unterdrückende Signalanteil einem an der jeweils anderen optischen Koppelstelle angeschlossenen optischen Terminationselement zugeführt wird. Unter einem "optischen Terminationselement" (engl. *"Beamdump")* wird eine Struktur verstanden, die einfallendes Licht ohne nennenswerte Rückreflexion aufnimmt und absorbiert oder derart in eine Umgebung abstrahlt, dass keine erneute Einkopplung in das wellenleiterbasierte optische Koppelelement oder eines der daran angeschlossenen optischen Bauteile erfolgt. Die Leistungspegel der Rückreflexion am Eingang des Terminationselements liegen dabei bevorzugt um mindestens 10 dB, besonders bevorzugt um mindestens 20 dB oder 30 dB unter der einfallenden Leistung. In einer bevorzugten Ausführungsform lässt sich das Terminationselement in Form einer sich kontinuierlich verjüngenden Taperstruktur realisieren, durch die Licht insbesondere in Richtung einer absorbierenden Fläche abgestrahlt werden kann. Die Kopplung an ein optisches Bauteil kann entweder unmittelbar oder, wie vorstehend beschrieben, über mindestens einen Verbindungswellenleiter oder mindestens eine Freistrahl-Koppelstrecke erfolgen.

Das wellenleiterbasierte optische Koppelelement lässt sich durch ein dreidimensionales Freiform-Mikrostrukturierungsverfahren *in situ* an einer optischen Koppelstelle eines optischen Bauteiles oder zwischen mindestens zwei optischen Koppelstellen mindestens eines optischen Bauteils herstellen und dabei insbesondere in Position, Form und/oder Größe an die Position des einen oder der mindestens zwei optischen Bauteile anpassen. In den nachfolgenden Erläuterungen werden die mindestens zwei räumlich überlappenden, zueinander orthogonalen oder nahezu orthogonalen, an der ersten optischen Koppelstelle des optischen Koppelelements eingespeisten oder abgestrahlten Feldverteilungen grundsätzlich als Grundmoden unterschiedlicher Polarisationen interpretiert; die zugehörige Anordnung erfüllt dann die Funktion eines Polarisationsstrahlteilers oder eines Polarisationsstrahlkombinierers. Der Begriff "modenselektiv" bezeichnet die Tatsache, dass die erfindungsgemäße Anordnung durch entsprechende Anpassungen des Designs des wellenleiterbasierten optischen Koppelelements zur Trennung beliebiger Moden, insbesondere auch von zwei Moden derselben Polarisation, aber unterschiedlicher Feldverteilungen, verwendet werden kann.

Zur Trennung der Moden kann ausgenutzt werden, dass diese in geeignet geformten Wellenleiter unterschiedlich stark geführt werden, und dass somit eine Trennung durch ein geometrisches Auseinanderführen der Wellenleiter erreicht werden kann. Unter einem "stark geführten" Modus eines Wellenleiters wird in diesem Zusammenhang ein Wellenleitermodus verstanden, der eine wesentlich größere Ausbreitungskonstante und damit einen wesentlich größeren effektiven Brechungsindex besitzt, als andere in diesem Wellenleiter geführten Moden, die dementsprechend als "schwach geführt" bezeichnet. werden. Stark geführte Moden zeichnen sich insbesondere dadurch aus, dass sie sich wesentlich stärker an Änderungen der Wellenleitertrajektorie und/oder des Wellenleiterquerschnittes entlang der Propagationsrichtung, z.B. an eine Torsion oder an Änderungen des Durchmessers, anpassen als schwach geführte Moden. Es sind auch Fälle denkbar, in denen nur ein stark geführter Modus in einem Wellenleiter existiert. In vielen Fällen handelt es sich bei einem stark geführten Wellenleitermodus um einen Grundmodus, dessen elektrisches Feld vornehmlich entlang einer Richtung polarisiert ist, in welcher der Wellenleiterkern seine maximale Ausdehnung aufweist.

Alternativ zur Trennung von Moden durch geometrisch auseinandergeführte Wellenleiter sind Ausgestaltungen denkbar, in denen unterschiedlich starke Kopplungen der zu trennenden Moden an parallel verlaufende Wellenleiter, ähnlich zu so genannten "Richtkopplern", verwendet werden. Eine weitere Möglichkeit besteht in der gezielten Konversion von Moden durch eine in axialer Richtung periodische Modulation des Wellenleiterquerschnittes, wobei die Fundamentalwellenzahl dieser Modulation dem Unterschied der Wellenzahlen der zu koppelnden Moden entspricht. Damit können beliebige Moden in Feldformen konvertiert werden, die sich besonders verlustarm und zuverlässig voneinander trennen lassen. Ein potentielles Einsatzgebiet ist dabei vorzugsweise die Auftrennung von Moden an der Facette einer Mehrmodenfaser oder einer sogenannten *"Few-Mode-Faser"* und die Einkopplung der entsprechenden optischen Signale in verschiedene optische Koppelstellen eines optischen Bauteils. Die hierzu bevorzugten Ausgestaltungen des Koppelelements lassen sich unter anderem durch so genannte "Topologieoptimierungsverfahren" ermitteln, bei denen nicht einzelne Geometrieparameter, sondern die gesamte Form des optischen Koppelelements numerisch optimiert werden kann. Die dadurch enthaltenen Strukturgeometrien entziehen sich einer allgemeingültigen Beschreibung, ermöglichen aber ebenfalls die Ausführung der erfindungsgemäßen Anordnung zur optischen Kopplung und Modentrennung.

Für weitere Einzelheiten in Bezug auf die vorgeschlagene Anordnung wird auf die untenstehenden Ausführungsbeispiele verweisen.

In einem weiteren Aspekt betrifft die vorliegende Erfindung ein Verfahren zur Herstellung eines wellenleiterbasierten optischen Koppelelements, das zur modenselektiven Trennung oder Überlagerung von optischen Feldern eingerichtet ist, an einer optischen Koppelstelle eines optischen Bauteils. Die Schritte des Verfahrens sind im Einzelnen:
a) Bereitstellen mindestens eines optischen Bauteils und Lokalisierung mindestens einer weiteren optischen Koppelstelle des mindestens einen optischen Bauteils in einem Koordinatensystem einer zur Durchführung eines Freiform-Mikrostrukturierungsverfahrens eingerichteten Freiform-Mikrostrukturierungseinheit;
b) Erzeugen eines Datensatzes, welcher eine dreidimensionale Form des wellenleiterbasierten optischen Koppelelements in dem Koordinatensystem der Mikrostrukturierungseinheit beschreibt, wobei
   - das wellenleiterbasiertes optische Koppelelement mindestens drei optische Koppelstellen aufweist, wobei
      ∘ mindestens eine erste optische Koppelstelle mindestens zwei voneinander verschiedene, der ersten optischen Koppelstelle zugeordnete geführte Eigenmoden aufweist,
      o mindestens eine zweite optische Koppelstelle mindestens einen der zweiten optischen Koppelstelle zugeordneten geführten Eigenmodus aufweist, und
      ∘ mindestens eine dritte optische Koppelstelle mindestens einen der dritten optischen Koppelstelle zugeordneten geführten Eigenmodus aufweist,
   - wobei das wellenleiterbasierte optische Koppelelement dazu eingerichtet ist, Licht mit hoher Effizienz bidirektional zwischen
      o zwischen mindestens einem ersten, der ersten optischen Koppelstelle zugeordneten geführten Eigenmodus und dem mindestens einen der zweiten optischen Koppelstelle zugeordneten geführten Eigenmodus sowie
      o zwischen mindestens einem zweiten, der ersten optischen Koppelstelle zugeordneten geführten Eigenmodus und dem mindestens einen der dritten optischen Koppelstelle zugeordneten geführten Eigenmodus
         zu übertragen;
c) Herstellen des wellenleiterbasierten optischen Koppelelements an der mindestens einen weiteren optischen Koppelstelle des mindestens einen optischen Bauteils mittels des Freiform-Mikrostrukturierungsverfahrens.

Die Durchführung der Schritte a) bis c) muss nicht streng sequentiell erfolgen, sondern kann auch in andere, parallel ablaufende Fertigungsprozesse eingebunden sein. Hierbei kann jeder der Schritte a) bis c) auch mehrfach durchgeführt und es können zumindest aufeinanderfolgende Schritte auch zumindest teilweise gleichzeitig ausgeführt werden. Darüber hinaus können weitere Schritte ausgeführt werden. Insbesondere wird erfindungsgemäß der unten aufgeführte Schritt d) zusätzlich ausgeführt. Insbesondere kann der in Schritt b) erzeugte Datensatz neben dem wellenleiterbasierten optischen Koppelelement zur modenselektiven Trennung oder Überlagerung von optischen Feldern auch noch einfache Verbindungswellenleiter oder mikro-optische Elemente wie Linsen oder Spiegel enthalten, deren Design ebenfalls auf der Position und Orientierung bestimmter optischer Koppelstellen beruht, und die sich gemeinsam mit dem wellenleiterbasierten optischen Koppelelement gemäß Schritt c) herstellen lassen. Ferner kann die in Schritt c) erzeugte Grundstruktur des wellenleiterbasierten optischen Koppelelements weiteren, nachgelagerten Nachbearbeitungsschritten unterzogen werden, in denen die erzeugte Grundstruktur beispielsweise lokal oder global in optisch niedrigbrechende Mantelmaterialien eingebettet oder mit einer aufgedampften Beschichtung versehen werden kann. Zum lokalen Aufbringen entsprechender Mantelmaterialien können beispielsweise Dispens- oder Druckverfahren oder Mikrostrukturierungsverfahren ähnlich zu den in Schritt c) verwendeten Verfahren eingesetzt werden. Ein entsprechender Datensatz kann neben dem wellenleiterbasierten optischen Koppelelement zur modenselektiven Trennung oder Überlagerung von optischen Feldern können auch noch einfache Verbindungswellenleiter oder mikrooptische Elemente wie Linsen oder Spiegel enthalten, deren Design ebenfalls auf der Position und Orientierung bestimmter optischer Koppelstellen beruht, und die sich gemeinsam mit dem wellenleiterbasierten optischen Koppelelement in Schritt c) herstellen lassen.

Erfindungsgemäß wird, vorzugsweise im Anschluss an Schritt c), der nachfolgende Schritt d) durchgeführt: d) Einbetten des wellenleiterbasierten optischen Koppelements zumindest bereichsweise in einen an das optische wellenleiterbasierte Koppelelement als Kernbereich angrenzenden Mantelbereich, wobei der Kernbereich vorzugsweise einen Brechungsindex von 1,3 bis 1,8 aufweist, und wobei zwischen dem Kernbereich und dem Mantelbereich ein Brechungsindexunterschied von mindestens 0,05 und vorzugsweise bis 0,7 auftritt.

Die Fertigung der Anordnung erfolgt vorzugsweise *in situ,* d.h. direkt an der Zielposition, mittels eines dafür eingerichteten Mikrostrukturierungsverfahrens. Hierbei betrifft der verwendete Begriff des "Mikrostrukturierungsverfahrens" ein subtraktives oder additives Herstellungsverfahren, mit welchem sich dreidimensionale Strukturen, bevorzugt Freiformstrukturen, mit von der Betriebswellenlänge der beschriebenen Struktur abhängigen Abmessungen im Mikrometerbereich und/oder Millimeterbereich herstellen lassen. Ein zur Herstellung von Freiformstrukturen eingerichtetes Mikrostrukturierungsverfahren wird im Folgenden als "Freiform-Mikrostrukturierungsverfahren" bezeichnet. Unter einer "Freiform" oder "Freiformstruktur" wird eine Struktur verstanden, die, im Rahmen technischer Begrenzungen in Bezug auf Auflösung und Genauigkeit, zumindest bereichsweise beliebig gekrümmte Oberflächen aufweisen kann. Ein Freiformstruktur unterscheidet sich damit insbesondere von Strukturgeometrien, die sich durch klassische planare Mikrostrukturierungsverfahren, z.B. durch eine Kombination von Dünnschichtabscheidungsverfahren, zweidimensionalen Lithographieverfahren, wie z.B. Projektionslithographie, und Ätzprozessen auf ebenen Halbleitersubstraten herstellen lassen. Eine Kombination dieser klassischen planaren Mikrostrukturierungsverfahren führt in der Regel zu prismenähnlichen dreidimensionalen Strukturgeometrien, welche je eine, im Wesentlichen zur Substratoberfläche parallele Grundfläche und Deckfläche aufweisen, die ihrer Form identisch oder sehr ähnlich sind, und die durch zur Substratoberfläche, abhängig vom jeweiligen Ätzprozess oder Abscheideprozess, senkrechte, geneigte oder nach innen oder außen gewölbte Seitenwände miteinander verbunden werden. Die Form der Grundfläche und der Deckfläche wird dabei im Wesentlichen durch die zum lokalen Ätzen oder Abscheiden verwendete, oftmals lithographisch strukturierte Maske vorgegeben. Durch eine mehrmalige Wiederholung des Ätz- oder Abscheideprozesses mit verschiedenen Masken lassen sich mehrschichtige, aus mehreren prismenähnlichen Teilstrukturen bestehende Strukturen aufbauen; der mit der Wiederholung verbundene Zusatzaufwand ist enorm und die erzielte Strukturqualität in vielen Fällen auch durch die Überlagerungsgenauigkeit (engl. *overlay accuracy*) beschränkt, so dass die Zahl der Schichten in der Praxis oft auf einige wenige, z.B. drei, begrenzt ist. Dies führt zu geometrischen Einschränkungen der mit klassischen Mikrostrukturierungsverfahren mit vertretbarem Aufwand herstellbaren Strukturen und damit zu funktionellen Einschränkungen der dadurch gebildeten Bauteile. Der mit der mehrschichtigen Strukturierung verbundene Zusatzaufwand ist in vielen Fällen sehr hoch und verkompliziert die Herstellungsprozesse der zugehörigen optischen Bauteile enorm, besonders dann, wenn die zugehörigen Zusatzschichten nicht für andere, auf dem Chip vorhandene Bauteile mitgenutzt werden können.

Im Gegensatz hierzu sind durch Freiform-Mikrostrukturierungsverfahren hergestellte Freiformstrukturen diesen Einschränkungen nicht oder nicht in demselben Maße unterworfen, da ihre Strukturgeometrie nicht auf eine Kombination einer vergleichsweise geringen Zahl von ebenen, prismenähnlichen Teilstrukturen eingeschränkt ist. Damit wird es insbesondere möglich, wellenleiterbasierte optische Koppelelemente mit nicht-planaren Strukturen zu erzeugen, bei denen die Mittelinien der das Koppelelement bildenden Wellenleiter nicht in einer gemeinsamen oder in zueinander parallelen Ebenen liegen müssen. Hierbei ist anzumerken, dass Freiformstrukturen in vielen Fällen zwar ebenfalls aus einer Vielzahl einzelner Schichten hergestellt werden, z.B. mittels eines mehrlagigen Materialauftrags beim 3D-Druck oder durch eine Aushärtung verschiedener Schichten bei 3D-Lithographieverfahren. Freiform-Mikrostrukturierungsverfahren erlauben es jedoch, die Anzahl der Schichten mit vertretbarem Herstellungsaufwand so groß zu wählen, dass sich eine gute Approximation der Freiformstruktur ergibt und dass die Diskretisierung in einzelne Schichten keine praktisch funktionsrelevante Einschränkung der herstellbaren Strukturgeometrien mehr darstellt.

Das wellenleiterbasierte optische Koppelelement wird dabei bevorzugt aus mindestens 6, besonders bevorzugt aus mindestens 10, insbesondere aus mindestens 20 oder 30 Schichten aufgebaut. Die Dicke einer Schicht beträgt hierbei bevorzugt von 10 nm bis 1000 nm, besonders bevorzugt von 30 nm bis 500 nm, insbesondere von 50 nm bis 300 nm. Das hierzu eingesetzte Freiform-Mikrostrukturierungsverfahren ermöglicht es, Freiformstrukturen mit einer Genauigkeit von bevorzugt besser als 1000 nm, besonders bevorzugt besser als 500 nm, insbesondere besser als 100 nm zu erzeugen. Die Auflösung des Freiform-Mikrostrukturierungsverfahrens ist bevorzugt besser als 3 µm, besonders bevorzugt besser als 1 µm, insbesondere besser als 500 nm. Die aufgeführten Werte beziehen sich hierbei jeweils auf die Herstellung von Freiformstrukturen, die für eine Vakuum-Betriebswellenlänge von ca. 1,5 µm vorgesehen sind; für andere Betriebswellenlängen lassen sich die Abmessungen der Freiformstrukturen und damit die Anforderungen an Genauigkeit und Auflösung des zur Herstellung verwendeten Freiform-Mikrostrukturierungsverfahrens, insbesondere unter Berücksichtigung der Brechungsindizes der verwendeten Materialien, skalieren.

Im Unterschied hierzu offenbart WO 92/00185 A1 wellenleiterbasierte optische Anordnungen, bei denen allein durch eine lithographische Bestrahlung eine lokale Erhöhung des Brechungsindex eines photostrukturierbaren Materials erreicht wird. Das in WO 92/00185 A1 beschriebene Verfahren sieht - im Gegensatz zur vorliegenden Anmeldung - insbesondere keinen Entwicklungsschritt vor, bei dem die nicht belichteten Bereiche selektiv entfernt und durch ein niedrigbrechendes Mantelmaterial ersetzt werden. Damit ist der erreichbare Brechungsindexunterschied typischerweise auf Werte unterhalb von 0.025 begrenzt, wodurch eine Herstellung kompakter polarisationsempfindlicher Strukturen deutlich erschwert wird. Insbesondere erscheint eine Herstellung eines wellenleiterbasierten Polarisationsstrahlteilers, der zwei sich überlagernde Teilwellenleiter umfasst, gemäß WO 92/00185 A1 nicht durchführbar; die beiden orthogonal polarisierten Eigenmoden der Teilwellenleiter weisen in Folge des geringen Indexkontrastes praktisch identisch effektive Brechungsindizes auf und werden damit gleich stark geführt. Eine Trennung der orthogonal polarisierten Eigenmoden durch ein Auseinanderführen der Teilwellenleiter erscheint unter Einhaltung praktisch realisierbarer Bauteillängen daher nicht möglich.

In einer bevorzugten Ausgestaltung können das Freiform-Mikrostrukturierungsverfahren und/oder eine ein derartiges Verfahren ermöglichende Freiform-Mikrostrukturierungseinheit auf einem lithographischen Verfahren beruhen, das insbesondere Stereolithographie oder direktschreibende, bevorzugt dreidimensional-direktschreibende, Lithographieverfahren nutzt. Dabei können additive oder subtraktive Fertigungsverfahren verwendet werden, wobei der Begriff des "additiven Fertigungsverfahrens" ein Herstellungs-Verfahren bezeichnet, bei welchem Material kontinuierlich an oder auf eine Struktur an- oder aufgebracht wird, während der Begriff des "subtraktiven Fertigungsverfahrens" ein alternatives Herstellungs-verfahren beschreibt, bei welchem Material von einer Struktur entfernt wird. Der Materialauftrag oder Materialabtrag lässt sich in der bevorzugten Ausführungsform mit lithographischen Verfahren unter Verwendung geeigneter Fotolacke, insbesondere Negativ- oder Positivlacke, erreichen. In einer bevorzugten Ausgestaltung können dabei Flächenlichtmodulatoren, die eine schnelle Strukturierung erlauben, in den Stereolithographieverfahren verwendet werden. In einer bevorzugten Ausgestaltung können Mehrphotonen-Lithographieverfahren, insbesondere mittels gepulster Laserquellen, als direktschreibende Lithographieverfahren verwendet werden. Dabei können Lichtpulse mit einer Pulsdauer von bevorzugt höchstens 10 ps, bevorzugt von höchstens 1 ps, besonders bevorzugt höchstens 200 fs, insbesondere höchstens 100 fs, bei einer Wiederholrate von bevorzugt mindestens 1 MHz, bevorzugt von 10 MHz, besonders bevorzugt von mindestens 25 MHz, insbesondere von mindestens 100 MHz, verwendet werden. Hierfür eignen sich insbesondere Laserlichtquellen ausgewählt aus faserbasierten Femtosekundenlasern oder gepulsten Festkörperlasern wie Titan:Saphir-Laser oder Diodenlaser, die sich mit Frequenzkonversionseinheiten, beispielsweise zur Frequenzvervielfachung, zur Summenfrequenzerzeugung oder zur Differenzfrequenzerzeugung kombinieren lassen. Abhängig vom verwendeten Lithographieverfahren können dabei bevorzugt Wellenlängen im nahinfraroten, sichtbaren oder ultravioletten Spektralbereich oder im Bereich der extremen UV-Strahlung (EUV) oder der Röntgenwellenlängen zum Einsatz kommen. In einer besonders bevorzugten Ausführungsform werden Wellenlängen von 150 nm bis 1700 nm, insbesondere von 300 nm bis 1100 nm verwendet. Im Fall von gepulsten Lasern können durch eine geeignete Wahl von Pulsdauer und Pulsenergie gezielt Zwei-, Drei- oder Mehrphotonenabsorptionseffekte erreicht werden. Bei auf Einphotonenabsorption beruhenden Lithographieverfahren mit Dauerstrichlasern bieten sich Dioden-Laser mit Emissionswellenlängen von 360 nm bis 550 nm, also beispielsweise um 365 nm, 385 nm, 405 nm, 550 nm und 532 nm, an. Zur Steigerung der Auflösung von Lithographie-Verfahren kann mit geeigneten Photoinitiatoren *"Stimulated Emission Depletion"* (STED) in Anlehnung an entsprechende Mikroskopieverfahren genutzt werden. Darüber hinaus sind weitere Mikrostrukturierungsverfahren zur Herstellung des wellenleiterbasierten optischen Koppelelements denkbar, insbesondere Verfahren, die auf Materialextrusion, pulverbettbasiertem Schmelzen (engl. *powder-bed fusion*)*,* Material-Jetting, Binder-Jetting, selektivem Lasersintern oder Elektronenstrahlschmelzen basieren können. Verfahren wie Metalldruck oder Laserauftragsschweißen lassen sich z.B. für die Herstellung von Hohlwellenleitern im Mikro- und Millimeterwellenlängenbereich einsetzen. Abhängig vom jeweils verwendeten Mikrostrukturierungsverfahren kann das wellenleiterbasierte optische Koppelelement ein Polymer, bevorzugt ein optisch additiv oder subtraktiv strukturierbares Acrylat, Epoxidharz, oder ein Fluorpolymer, ein Metall oder ein metallbeschichtetes Dielektrikum umfassen. In einer bevorzugten Ausgestaltung kann das wellenleiterbasierte Koppelelement ein anderes Material als das optische Bauteil umfassen. Zur Herstellung der Strukturen kann es vorteilhaft sein, weitere Nachbearbeitungsschritte durchzuführen, in denen die erzeugten Strukturen lokal oder global in optisch niedrigbrechende Mantelmaterialien eingebettet oder mit einer aufgedampften Beschichtung versehen werden können.

Durch die Verwendung eines Freiform-Mikrostrukturierungsverfahrens wird es insbesondere möglich, Strukturen mit symmetrischen oder nahezu symmetrischen Geometrien zu erzeugen, die bevorzugt für die beiden voneinander getrennten Moden sehr ähnliche Verluste aufweisen können. Unter einer "nahezu symmetrischen Strukturgeometrie" wird in diesem Zusammenhang eine dreidimensionale Form mit einer Symmetrieebene, einer Symmetrieachse oder einem Symmetriepunkt verstanden, wobei eine perfekte Symmetrie durch Anpassungen der Strukturgeometrie, die insbesondere zur unten beschriebenen Ankopplung des wellenleiterbasierten optischen Koppelelements an Positionen und Richtungen mindestens einer optischer Koppelstelle, die mindestens einem anzubindenden optischen Koppelelement zugeordnet sind, verwendet werden, leicht gestört sein kann. Die Unterschiede der Leistungsverluste für die beiden voneinander getrennten Moden sind bevorzugt kleiner als 3 dB, besonders bevorzugt kleiner als 2 dB, insbesondere kleiner als 1 dB oder 0,5 dB.

Im Allgemeinen können bei Einsatz der erfindungsgemäßen Anordnung als Polarisationsstrahlteiler an den Ausgangskoppelstellen Auslöschungsverhältnisse von bevorzugt besser als 6 dB, besonders bevorzugt besser als 10 dB, insbesondere besser als 15 dB oder 20 dB erreicht werden. Unter dem "Auslöschungsverhältnis" wird dabei ein Quotient der Lichtleistung in dem an der Ausgangskoppelstelle erwünschten Modus zur Lichtleistung in dem jeweils unerwünschten Modus verstanden, wobei der Quotient oftmals durch eine logarithmische Umrechnung in Dezibel (dB) ausgedrückt wird. Die relative optische Bandbreite der Struktur kann dabei bevorzugt größer sein als 1 %, besonders bevorzugt größer als 5 %, insbesondere größer als 10 % oder 20 %. Unter der "relativen optischen Bandbreite" wird dabei ein Verhältnis der Breite des Frequenzbereiches, über den das optische Bauteil die geforderten Leistungsparameter erreicht, zur jeweiligen Mittenfrequenz verstanden.

Ein weiterer Vorteil der vorgeschlagenen Anordnung liegt darin, dass sie sich durch *in-situ* Herstellung, bevorzugt unter Zuhilfenahme von zusätzlichen Verbindungswellenleitern, sehr verlustarm an eine oder mehrere optische Koppelstellen eines oder mehrerer optischer Bauteile ankoppeln lässt, ohne dass die optischen Bauteile in aufwendigen Justageverfahren mit hoher Präzision ausgerichtet werden müssen. Dazu kann, ausgehend von bereits fixierten optischen Bauteilen, die räumliche Position und Richtung der zu diesen optischen Bauteilen gehörenden optischen Koppelstellen in einem ersten Schritt des Herstellungsverfahrens erfasst und bei der Auslegung des optischen Koppelelements und der bevorzugt vorhandenen zusätzlichen Strukturen, wie z.B. Verbindungswellenleiter, berücksichtigt werden. Damit lassen sich Ungenauigkeiten in der Positionierung der optischen Bauteile durch eine entsprechende Anpassung der Form der beanspruchten Anordnung kompensieren, indem die Auslegung des optischen Koppelelements und optional vorhandener zusätzlicher Strukturen so gewählt wird, dass das Licht an den optischen Koppelstellen des wellenleiterbasierten optischen Koppelelements und/oder an den zugeordneten optischen Koppelstellen daran anschließender Zusatzstrukturen, wie z.B. Verbindungswellenleiter, mit erforderlicher Position und Ausbreitungsrichtung zur Verfügung gestellt oder empfangen wird und so eine hohe Effizienz der Ankopplung an die optischen Koppelstellen der optischen Bauteile und/oder an durch die optischen Koppelstellen definierte Wellenleitermoden erreicht wird.

Durch Anpassung der wellenleiterbasierten optischen Koppelelemente an die Positionen und Richtungen der optischen Koppelstellen der anzubindenden optischen Bauteile lassen sich Positionierungsungenauigkeiten der anzubindenden optischen Bauteile ausgleichen, so dass auf eine hochgenaue Ausrichtung dieser Bauteile verzichtet werden kann. Zur Anpassung des wellenleiterbasierten optischen Koppelelements an die Positionen und Richtungen der optischen Koppelstellen der anzubindenden optischen Bauteile können bevorzugt geometrische Parameter des optischen Koppelelements, insbesondere eine Länge eines nachstehend beschriebenen ersten Wellenleiterabschnitts und/oder eine genaue Trajektorie der Teilwellenleiter, variiert werden. Alternativ oder zusätzlich können an ausgewählten optischen Koppelstellen des optischen Koppelelements und/oder der anzubindenden optischen Bauteile zusätzliche Verbindungswellenleiter oder strahlformenden Elemente, die praktisch beliebige 3D-Geometrien aufweisen, angeschlossen werden, die sich ohne großen Zusatzaufwand zusammen mit dem optischen Koppelelement durch ein Freiform-Mikrostrukturierungsverfahren herstellen lassen, und mit deren Hilfe Ungenauigkeiten in der Positionierung der anzubindenden optischen Bauteile kompensiert werden können.

In einer bevorzugten Ausgestaltung kann das Freiform-Mikrostrukturierungsverfahren dazu eingerichtet sein, neben dem wellenleiterbasierten Koppelelement auch sog. "photonische Wirebonds", wie z.B. in US 8 903 205 B2 oder WO 2018/083191 A1 offenbart, herzustellen, vorzugsweise in einem gemeinsamen Herstellungsschritt. Andere Verfahren, beispielsweise dreidimensionalen Druckprozesse, sind ebenfalls denkbar, insbesondere dann, wenn verhältnismäßig große Strukturen zum Betrieb bei Frequenzen im Mikro- und Millimeterwellenbereich hergestellt werden sollen.

Für weitere Einzelheiten in Bezug auf das vorliegende Verfahren wird auf die Beschreibung der Anordnung sowie auf die Ausführungsbeispiele verweisen.

### Kurze Beschreibung der Figuren

Weitere Einzelheiten und Merkmale der vorliegenden Erfindung ergeben sich aus der nachfolgenden Beschreibung bevorzugter Ausführungsbeispiele, insbesondere in Verbindung mit den abhängigen Ansprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente. Im Einzelnen zeigen:
- .Figuren 1 bis 11: jeweils eine schematische Darstellung eines bevorzugten Ausführungsbeispiels der erfindungsgemäßen Anordnung zur optischen Kopplung und zur modenselektiven Trennung oder Überlagerung von optischen Feldern;
- Figuren 12 bis 14: jeweils eine schematische Darstellung einer Anordnung, die einem wellenleiterbasierten Analogon eines Polarisationsstrahlteilers mit vier optischen Koppelstellen entspricht und die sich durch ein Freiform-Mikrostrukturierungsverfahren auf einer Endfläche einer Mehrkernfaser herstellen lässt;
- Figur 15: eine schematische Darstellung einer zu einem optischen Polarisationsmultiplex-Heterodyn-Empfänger gehörenden passiven optischen Wellenleiterstruktur, die sich mittels eines Freiform-Mikrostrukturierungsverfahrens auf einer Endfläche einer Siebenkernfaser herstellen lässt;
- Figur 16: eine schematische Darstellung einer Polarisationsanalysator-Struktur, die sich mittels eines Freiform-Mikrostrukturierungsverfahrens auf einer Endfläche einer Einmodenfaser herstellen lässt;
- Figur 17: eine schematische Darstellung eines reflektiven Polarisations-Swappers, der ähnlich zu einem Faraday-Rotator-Spiegel Signalanteile, die beispielsweise in zwei orthogonal zueinander polarisierten Grundmoden (sog. LP01-Moden) einer Glasfaser vorliegen, vertauscht und in entgegengesetzter Polarisationsrichtung in die Faser zurückkoppelt;
- Figuren 18 und 19: jeweils eine schematische Darstellung einer Anwendung der erfindungsgemäßen Anordnung in Form eines polarisationsempfindlichen Bildsensors;
- Figur 20: eine schematische Darstellung einer Kaskade mehrerer wellenleiterbasierter optischer Koppelelemente, die sich gemeinsam mittels eines Freiform-Mikrostrukturierungsverfahrens herstellen lassen;
- Figuren 21 und 22: jeweils eine schematische Darstellung einer Anordnung, in der das wellenleiterbasierte optische Koppelelement mit einer optischen Koppelstelle an eine Einmodenfaser angeschlossen ist, während die anderen optischen Koppelstellen durch eine zusätzliche Struktur mechanisch stabilisiert werden; und
- Figur 23: eine schematische Darstellung einer Verwendung der erfindungsgemäßen Anordnung als Polarisationsfilter.

### Beschreibung der Ausführungsbeispiele

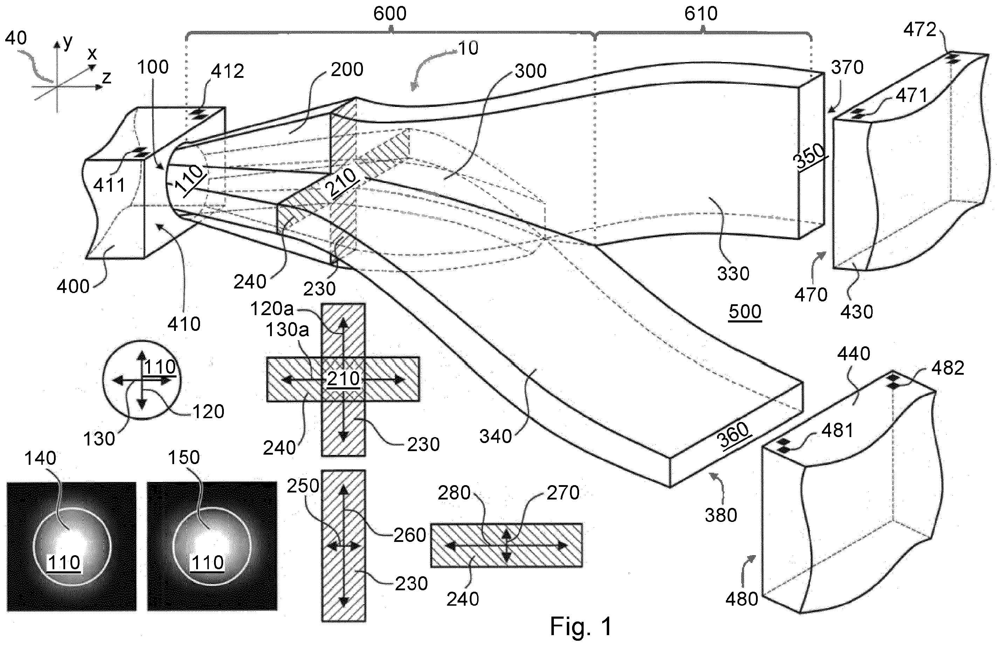

Figur 1 zeigt eine schematische Darstellung eines bevorzugten Ausführungsbeispiels der erfindungsgemäßen Anordnung zur optischen Kopplung und zur modenselektiven Trennung oder Überlagerung von optischen Feldern. Das Ausführungsbeispiel zeigt zur Verdeutlichung der Funktionsweise eines Polarisationsstrahlteilers oder eines Polarisationsstrahlkombinierers die erfindungsgemäße Anordnung umfassend ein wellenleiterbasiertes optisches Koppelelement 10, das mit einer ersten optischen Koppelstelle 100 an ein optisches Bauteil 400 angeschlossen ist. In der nachfolgenden Darstellung erfolgt die Ausbreitung von Licht von einer als Eingangskoppelstelle dienenden ersten optischen Koppelstelle 100 zu als Ausgangskoppelstellen dienenden zweiten optischen Koppelstelle 370 und dritten optischen Koppelstelle 380, um so eine Nutzung des wellenleiterbasierten optischen Koppelelements 10 als Polarisationsstrahlteiler zu ermöglichen. Die Unterscheidung in "Eingangskoppelstelle" und "Ausgangskoppelstelle" dient dabei nur einer einfacheren Beschreibung der Anordnung und ist nicht als Einschränkung im Hinblick auf die Funktionalität des Bauteiles zu verstehen. Vielmehr kann der Lichtweg umgedreht werden, wodurch sich die Rolle von "Eingang" und "Ausgang" vertauscht und eine Verwendung der Anordnung als Polarisationsstrahlkombinierer möglich wird.

Das in Figur 1 schematisch dargestellte wellenleiterbasierte optische Koppelelement 10 umfasst in der dargestellten Ausführungsform einen ersten Wellenleiterabschnitt 200, der einen ersten Wellenleiterquerschnitt 110 und eine erste optische Koppelstelle 100 aufweist, die im Falle des Polarisationsstrahlteilers als Eingangskoppelstelle dient. Der an der ersten optischen Koppelstelle 100 vorliegende erste Wellenleiterquerschnitt 110 weist zwei der ersten optischen Koppelstelle 100 zugeordnete zueinander orthogonale, möglicherweise entartete Eigenmoden 120, 130 auf, die jeweils beispielsweise über ein elektrisches Modenfeld mit dominierenden, linear polarisierten transversalen Komponenten des E-Feld-Vektors verfügen, und deren Intensitätsverteilungen 140, 150 sehr ähnlich sein und einen starken Überlapp aufweisen können. Im Falle dominierender transversaler Polarisationsanteile in den beiden zueinander orthogonalen Modenfeldern stehen die zugehörigen transversalen E-Feld-Vektoren der transversalen Komponenten im wesentlich senkrecht zueinander; die Auftrennung der Modenfelder ist dann in guter Näherung gleichbedeutend mit einer Auftrennung der zugehörigen linearen Polarisationen.

Das in Figur 1 schematisch dargestellte wellenleiterbasierte optische Koppelelement 10 umfasst ferner einen zweiten, sich verzweigenden Wellenleiterabschnitt 300, der sich an den ersten Wellenleiterabschnitt 200 anschließt, und der zwei sich räumlich überscheidende Teilwellenleiter 330, 340 umfasst, die, einzeln betrachtet, jeweils mindestens zwei Eigenmoden mit unterschiedlichen Polarisationsrichtungen und stark unterschiedlichen effektiven Brechungsindizes aufweisen, so dass eine Kopplung zwischen den Wellenleitermoden während der Propagation nur sehr schwach ausgeprägt ist. Grundsätzlich werden Moden desselben Wellenleiters, die stark unterschiedliche effektive Brechungsindizes aufweisen, auch als "stark entkoppelte Moden" bezeichnet. Der Unterschied der effektiven Brechungsindizes der beiden Moden beträgt dabei bevorzugt mehr als 0,005, besonders bevorzugt mehr als 0,05, und ganz besonders bevorzugt mehr als 0,1. Es sind auch Ausführungen denkbar, bei denen in mindestens einem Teilwellenleiter 330, 340 jeweils nur ein geführter, in der Regel entlang der längeren Ausdehnung des Wellenleiterquerschnittes polarisierter Eigenmodus vorliegt. Die Teilwellenleiter 330, 340 legen die beiden weiteren optische Koppelstellen 370, 380 mit zugehörigen Querschnitten 350, 360 fest. Die beiden weiteren optischen Koppelstellen 370, 380 werden im Falle eines Polarisationsstrahlteilers als Ausgang genutzt, d.h. die beiden der ersten optischen Koppelstelle 100 zugeordneten orthogonalen ersten Eigenmoden 120, 130 des als Eingang fungierenden ersten Wellenleiterquerschnitts 110 werden auf jeweils einen Wellenleitermodus der beiden als Ausgangswellenleiter fungierenden Teilwellenleiter 330, 340 aufgeteilt, während der jeweils andere Wellenleitermodus des jeweiligen als Ausgangswellenleiter fungierenden Teilwellenleiters 330, 340, abgesehen von einem unerwünschtem Übersprechen (engl. *cross-talk*), nicht angeregt wird.

Die Funktionalität der in Figur 1 skizzierten Anordnung beruht insbesondere darauf, dass im ersten Wellenleiterabschnitt 200 der erste Wellenleiterquerschnitt 110 kontinuierlich in einen Wellenleiterquerschnitt 210 überführt wird, der eine Überlagerung zweier Wellenleiterquerschnitte 230, 240 umfasst, wobei die zwei Wellenleiterquerschnitte 230, 240 jeweils weitere Eigenmoden 250, 260; 270, 280 mit stark unterschiedlichen effektiven Brechungsindizes aufweisen. Diese kontinuierliche Überführung des ersten Wellenleiterquerschnittes 110 auf den zweiten Wellenleiterquerschnitt 210 kann dabei bevorzugt so ausgelegt werden, dass sich eine stufenlose Deformation des Querschnitts des wellenleiterbasierten optischen Koppelelements 10 entlang der Propagationsrichtung des Lichtes ergibt. Der erste Wellenleiterbereich 200 weist bevorzugt eine Länge von 0,1 λ bis 30 λ, besonders bevorzugt von 0,2 λ bis 15 λ, insbesondere von 0,2 λ bis 10 λ auf, während die entlang seiner größten Ausdehnung gemessene Länge des gesamten wellenleiterbasierten optischen Koppelelements 10 bevorzugt weniger als 50 λ, besonders bevorzugt weniger als 25 λ, insbesondere weniger als 10 λ beträgt, wobei λ die Vakuumwellenlänge des verwendeten Lichts angibt, wobei ein Brechungsindex des verwendeten Materials von ca. 1,5 angenommen wird.

Die Wellenleiterquerschnitte 230, 240 sind in Form und Größe angepasst an die Querschnitte der Teilwellenleiter 330, 340, die diese an der Grenzfläche zwischen dem ersten Wellenleiterabschnitt 200 und dem zweiten Wellenleiterabschnitt 300 aufweisen. Dabei ist es nicht erforderlich, dass die Wellenleiterquerschnitte 230, 240, wie in Figur 1 skizziert, genau identisch sind mit den Querschnitten der Teilwellenleiter 330, 340 in der den Wellenleiterquerschnitts 210 enthaltenden Grenzfläche zwischen dem ersten Wellenleiterabschnitt 200 und dem zweiten Wellenleiterabschnitt 300. Es genügt vielmehr, die Querschnitte derart aneinander anzupassen, dass eine möglichst gute optische Kopplung zwischen dem ersten Wellenleiterabschnitt 200 und dem zweiten Wellenleiterabschnitt 300 auftritt. Ferner sind auch die in Figur 1 schematisch als rechteckig skizzierten Querschnitte der verschiedenen Teilwellenleiter als beispielhaft zu verstehen; hier können nach fachmännischer Überlegung auch andere, beispielsweise elliptische Formen verwendet werden, die sich unter Umständen als robuster gegenüber Fabrikationsungenauigkeiten erweisen können.

Wie weiterhin in Figur 1 schematisch dargestellt, werden innerhalb des zweiten Wellenleiterabschnitts 300 die sich anfangs überlagernden Wellenleiterquerschnitte 230, 240 der Teilwellenleiter 330, 340 kontinuierlich in räumlich disjunkte Ausgangswellenleiterquerschnitte 350, 360 auseinander geführt. Das Auseinanderführen kann hierbei derart erfolgen, dass die Änderung eines Strukturquerschnittes in axialer Richtung hinreichend langsam erfolgt, um damit einen adiabatischen Übergang der Modenfelder und damit eine möglichst störungsfreie und verlustarme räumliche Trennung zu ermöglichen. Bei dieser Trennung kann der Umstand genutzt werden, dass die stark geführten Moden der beiden Teilwellenleiter 330, 340 der Trajektorie des jeweiligen Teilwellenleiters folgen und dabei kaum an schwach geführte Moden koppeln und auch nicht in nennenswertem Maße abgestrahlt werden. Damit wird es möglich, optische Signale, die in den ersten beiden orthogonalen Eigenmoden 120, 130 der als Eingang dienenden ersten optischen Koppelstelle 100 vorliegen, in einer Ebene des Wellenleiterquerschnitts 210 zunächst in erste Modenfelder 120a, 130a zu überführen, und die ersten Modenfelder 120a, 130a dann mit geringen Verlusten und geringem Übersprechen auf jeweils einen Grundmodus der beiden als Ausgang betrachteten beiden weiteren optischen Koppelstellen 370, 380 aufzuteilen.

Im Falle, dass die Anfangsquerschnitte 230, 240 der Teilwellenleiter 330, 340, wie Figur 1 zeigt, rechteckig ausgeführt sind, wird vorzugsweise eine Ausführung angestrebt, in der jeweils der effektive Brechungsindex nₑ₁ des stark geführten, entlang der längeren Seite des rechteckeckigen Querschnittes 230, 240, polarisierten Grundmodus, den effektiven Brechungsindex nₑ₂ des schwach geführten, entlang der kürzeren Seite des rechteckigen Querschnittsprofils polarisierten Grundmodus um bevorzugt mehr als 0,005, besonders bevorzugt mehr als 0,05, insbesondere mehr als 0,1 übersteigt. Dies lässt sich beispielsweise dadurch erreichen, dass für die Teilwellenleiter 330, 340 stark elongierte, beispielsweise elliptische oder rechteckige Querschnitte mit hohem Aspektverhältnis verwendet werden. Unter dem "Aspektverhältnis" eines als planare Figur repräsentierten Wellenleiterquerschnittes wird dabei das größtmögliche Verhältnis zweier in zueinander orthogonalen Richtungen gemessenen Ausdehnungen dieser Figur verstanden. Bei rechteckigen Querschnittsfiguren ist das Aspektverhältnis gleichbedeutend mit dem Seitenverhältnis; bei elliptischen Querschnittsfiguren mit dem Verhältnis der Halbachsen. Abhängig von den jeweils gewählten Wellenleitermaterialien beträgt das Aspektverhältnis der Querschnitte der Teilwellenleiter 330, 340 zumindest in begrenzten Abschnitten bevorzugt mehr als 1,5, besonders bevorzugt mehr als 2,5, insbesondere mehr als 3,5 oder 4,5. Für dielektrische Wellenleiter ist darüber hinaus zur Erzielung großer Unterschiede der effektiven Brechungsindizes der stark und schwach geführten Moden ein hoher Brechungsindexunterschied zwischen einem hochbrechenden Kernbereich und einem niedrigbrechenden Mantelbereich des wellenleiterbasierten optischen Koppelelements 10 vorteilhaft.

Für das wellenleiterbasierte optische Koppelelement 10, dessen Kernbereich vorzugsweise durch eine lithographische Strukturierung von Polymerwerkstoffen erzeugt wird, liegt der Brechungsindex im Kernbereich bevorzugt zwischen 1,2 und 2, besonders bevorzugt zwischen 1,3 und 1,8; insbesondere zwischen 1,4 und 1, 7. Der Brechungsindex im Mantelbereich liegt bevorzugt zwischen 1,0 bis 1,5, besonders bevorzugt zwischen 1,0 und 1,45. Damit liegt der Brechungsindexunterschied zwischen dem Kernbereich und dem Mantelbereich bevorzugt zwischen 0,05 und 0,7, besonders bevorzugt zwischen 0,1 und 0,7, insbesondere zwischen 0,15 bis 0,6. Der Brechungsindexunterschied lässt sich bei Bedarf durch Verwendung eines geeigneten Deckmaterials oder Mantelmaterials 500 einstellen, in das der Kernbereich des wellenleiterbasierten optischen Koppelelements ganz oder teilweise eingebettet wird, wobei sich das Deckmaterial oder das Mantelmaterial 500 vorzugsweise in einem nachgelagerten Verfahrensschritt lokal oder global auf den mittels des Freiform-Mikrostrukturierungsverfahrens erzeugten Kernbereich des wellenleiterbasierten optischen Koppelelements 10 aufbringen lässt. Bei polymerbasierten Kernbereichen bieten sich als Mantelmaterialien 500 vorzugsweise niedrigbrechende Polymere an, die insbesondere fluoriniert sein können oder auch polysiloxan-basierte Komponenten aufweisen können. Der Brechungsindex des den Wellenleiterkern zumindest bereichsweise umgebenden Mantelmaterials 500 ist bevorzugt von 1,2 bis 1,5 insbesondere von 1,3 bis 1,45.

Bei dieser Anordnung kann somit Licht über den als "Eingangsfacette" bezeichneten ersten Wellenleiterquerschnitt 110 in das optische Koppelelement 10 eingekoppelt und über die als "Ausgangsfacetten" bezeichneten Wellenleiterquerschnitte 350, 360 wieder aus dem wellenleiterbasierten optischen Koppelelement 10 ausgekoppelt werden; das wellenleiterbasierte optische Koppelelement 10 wird in diesem Fall als Polarisationsstrahlteiler genutzt. Dieser Lichtweg lässt sich auch umkehren, so dass sich die Rollen von Eingangs- und Ausgangsfacetten entsprechend vertauschen. Dadurch lässt sich das wellenleiterbasierte optische Koppelelement 10 auch zur Kombination zweier optischer Signale verwenden, die in jeweils einen Eigenmodus der beiden weiteren, räumlich getrennten optischen Koppelstellen 370, 380 eingekoppelt werden und die in zueinander orthogonale Eigenmoden der ersten optischen Koppelstelle 100 überführt werden. Dadurch lässt sich das wellenleiterbasierte optische Koppelelement 10 auch als Polarisationsstrahlkombinierer verwenden.

Mit dem wellenleiterbasierten optischen Koppelelement 10 wird es möglich, zwei an der ersten optischen Koppelstelle 100 vorliegende räumlich überlappende der ersten optischen Koppelstelle 100 zugeordnete Eigenmoden 120, 130, die zueinander orthogonal oder nahezu orthogonal sind, räumlich zu trennen und sie optional einer weiteren Manipulation der der zweiten optischen Koppelstelle 370 und der dritten optischen Koppelstelle 380 zugeordneten Eigenmoden 260, 280 zu unterziehen. Durch diese Trennung und die optionale weitere Manipulation lassen sich vorzugsweise die der ersten optischen Koppelstelle 100 zugeordneten Eigenmoden 120, 130 ursprünglich vorliegenden Leistungen und/oder Amplituden und Phasen durch ein dafür eingerichtetes Verfahren, insbesondere ein kohärentes Detektionsverfahren, bestimmen und damit der zugehörige Polarisationszustand ermitteln. Dazu können vorzugsweise die zunächst getrennten der ersten optischen Koppelstelle 100 zugeordneten Eigenmoden 120, 130 miteinander und/oder mit zusätzlichen Referenzfeldern zur Interferenz gebracht werden. Weiterhin lassen sich vorzugsweise auch die räumlich getrennten, der zweiten optischen Koppelstelle 370 und der dritten optischen Koppelstelle 380 zugeordneten Eigenmoden 260, 280 so manipulieren, dass jede der Moden zur Anregung eines Eigenmodus eines über die als Ausgangskoppelstellen eingerichteten beiden weiteren optischen Koppelstellen 370, 380 an das wellenleiterbasierte optische Koppelelement 10 anschließenden Bauteils bzw. Wellenleiters 430, 440 eingerichtet ist. Bei einem eingangsseitig an die erste optische Koppelstelle 100 angeschlossenen Bauteil 400 lassen sich somit die zugehörigen entarteten oder nichtentarteten der ersten optischen Koppelstelle 100 zugeordneten Eigenmoden 120, 130 des optischen Bauteils 400 aufteilen und so in zwei integriert-optische, an die Ausganskoppelstellen des wellenleiterbasierten optischen Koppelelements 10 angeschlossene Bauteile oder Wellenleiter 430, 440 einkoppeln, dass das Licht aus jeweils einem Eigenmodus des als Wellenleiter ausgeführten optischen Bauteils 400 in einen Eigenmodus jeweils eines der integriert-optischen Wellenleiter überführt wird.

Die in Figur 1 beispielhaft skizzierte Anordnung lässt sich in vielfältiger Hinsicht modifizieren. So bleibt in Figur 1 der im wesentlichen rechteckige Querschnitt der Teilwellenleiter 330, 340 entlang der Propagationsrichtung erhalten und wird nur in Bezug auf die laterale Position und Orientierung modifiziert. In alternativen Ausführungen ist es möglich, auch die Form und/oder die Größe des Querschnitts entlang der Ausbreitungsrichtung zu ändern und insbesondere kontinuierlich von einer rechteckigen Form in eine andere Form, insbesondere in eine quadratische, elliptische oder runde Form überführen. Weitere Ausführungen sind denkbar. Die Form lässt sich insbesondere an die Querschnitte und die Modenfeldprofile der optischen Koppelstellen 370, 380 der anzubindenden optischen Bauteile 430, 440 anpassen, um so eine effiziente Kopplung zu erreichen. Damit wird es mit der erfindungsgemäßen Anordnung möglich, zusätzlich zur Trennung von Moden eine verlustarme Verbindung zwischen mindestens zwei optischen Bauteilen zu erreichen, deren optische Koppelstellen durch Modefelder stark unterschiedlicher Größe oder Position gekennzeichnet sind.

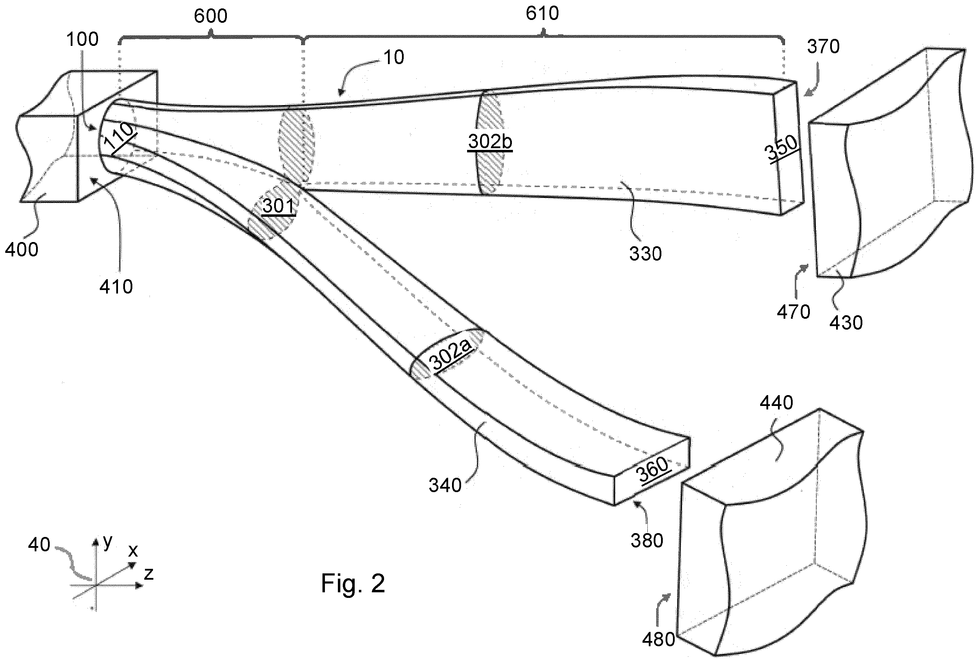

Wie beispielhaft in Figur 2 dargestellt, sind darüber hinaus weitere Ausführungen der in Figur 1 skizzierten Anordnung möglich, in denen die in Figur 1 klar als unterscheidbar dargestellten Wellenleiterabschnitte 200, 300 ohne eindeutige geometrische Abgrenzung nahtlos ineinander übergehen oder ganz oder teilweise vereinigt werden. Die Funktionsweise des wellenleiterbasierten optischen Koppelelements 10 zur Polarisationsstrahlteilung oder zur Polarisationsstrahlkombination basiert insbesondere darauf, dass das wellenleiterbasierte optische Koppelelement 10 mindestens zwei Teilwellenleiter 330, 340 umfasst, die in einem ersten Bereich 600 sehr nahe beieinander liegen oder sich räumlich überschneiden, was durch das Bezugszeichen 301 in Figur 2 angedeutet ist, die, isoliert voneinander betrachtet, zumindest abschnittsweise Eigenmoden mit stark unterschiedlichen effektiven Indizes aufweisen, während die mindestens zwei Teilwellenleiter 330, 340 in einem zweiten Bereich 610 räumlich disjunkt sind, was durch Bezugszeichen 302a, 302b in Figur 2 angedeutet ist. Der Begriff der in einem ersten Bereich 600 "sehr nahe beieinanderliegenden Teilwellenleiter" bedeutet dabei, dass die in den beiden Teilwellenleitern 330, 340 geführten Eigenmoden sich zumindest bereichsweise überlagern und damit miteinander wechselwirken können.

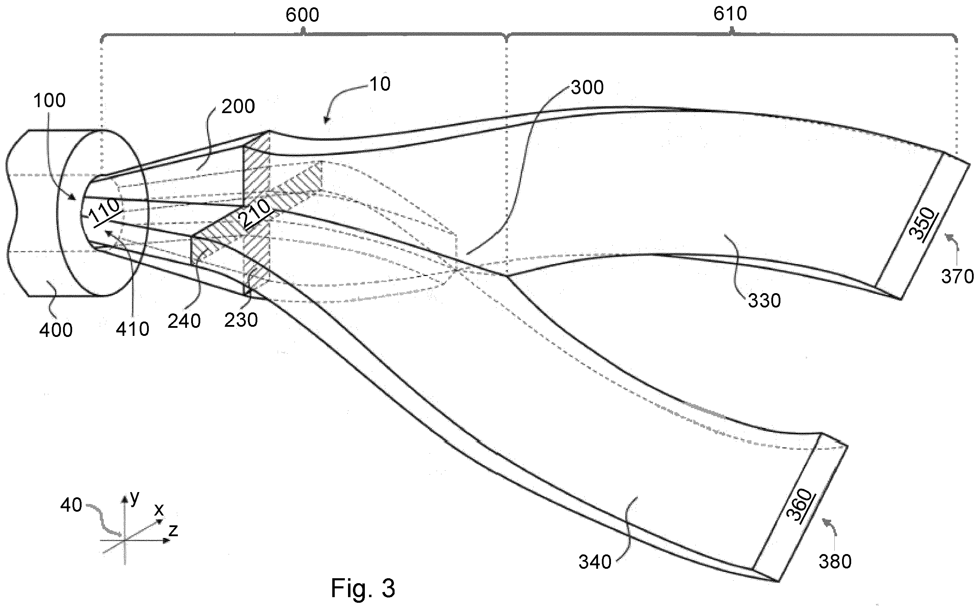

In den in den Figuren 1 und 2 skizzierten Anordnungen werden die beiden Modenfelder 120a, 130a durch die Teilwellenleiter 330, 340 nur räumlich auseinandergeführt, ohne dass eine Änderung der Polarisationsrichtung erfolgt. In anderen Fällen ist es dagegen wünschenswert, die Polarisationsrichtung der auseinandergeführten Modenfelder zu verändern, um diese beispielsweise in zwei TE-Moden von integriert-optischen Wellenleiter zu überführen. Entsprechende Anordnungen sind Gegenstand einiger nachfolgender Ausführungsbeispiele, siehe z.B. Figur 3, 8, 9, oder 10.

Weiterhin kann die erfindungsgemäße Anordnung auch zur Trennung beliebiger Moden, insbesondere zweier Moden derselben Polarisation, aber unterschiedlicher Feldverteilungen verwendet werden. In dieser Ausführung wird die Form des wellenleiterbasierten optischen Koppelelements 10, wie oben bereits beschrieben, entsprechend modifiziert. Dabei kann beispielsweise - ähnlich zur vorstehend beschriebenen Trennung von Moden unterschiedlicher Polarisationsrichtungen - die Tatsache ausgenutzt werden, dass die zu trennenden Moden in geeignet geformten Wellenleiter unterschiedlich stark geführt werden, und dass somit eine Trennung durch ein geometrisches Auseinanderführen der Wellenleiter erreicht werden kann. Darüber hinaus sind Implementierungen denkbar, bei denen unterschiedlich starke Kopplungen der zu trennenden Moden an parallel verlaufende Wellenleiter (ähnlich zu sog. Richtkopplern) ausgenutzt werden. Eine weitere Möglichkeit besteht in der gezielten Konversion von Moden durch eine in axialer Richtung periodische Modulation des Wellenleiterquerschnittes, wobei die Fundamentalwellenzahl dieser Modulation dem Unterschied der Wellenzahlen der zu koppelnden Moden entspricht. Damit können beliebige Moden in Feldformen konvertiert werden, die sich - beispielsweise mit Hilfe der vorstehend beschriebenen Konzepte - besonders verlustarm und zuverlässig voneinander trennen lassen. Ein potentielles Einsatzgebiet ist dabei beispielsweise die Auftrennung von Moden an der Facette einer Mehrmoden- oder einer sog. *Few*-Mode-Faser und die Einkopplung der entsprechenden optischen Signale in verschiedene optische Koppelstellen eines optischen Bauteils. Die einer solchen Aufgabenstellung entsprechenden Ausgestaltungen des Koppelelements lassen sich unter anderem durch sog. Topologieoptimierungsverfahren ermitteln, bei denen nicht einzelne Geometrieparameter, sondern die gesamte Form der Koppelstruktur numerisch optimiert werden. Die dadurch enthaltenen Strukturgeometrien entziehen sich einer allgemeingültigen Beschreibung, ermöglichen aber ebenfalls die Realisierung der erfindungsgemäßen Anordnung zur optischen Kopplung und Modentrennung.

In eine speziellen Ausführungsform wird das wellenleiterbasierte optische Koppelelement 10 an mehrere optische Komponenten 400, 430, 440 angeschlossen. Zur Anpassung der Form des wellenleiterbasierten optischen Koppelelements 10 an Positionierungsungenauigkeiten dieser Komponenten ist es vorteilhaft, Positionen und Richtungen von zugehörigen weiteren optischen Koppelstellen 410, 470, 480 sehr präzise in dem Koordinatensystem 40 der zur Herstellung des optischen Koppelelements verwendeten Freiform-Mikrostrukturierungseinheit zu erfassen. Hierzu können vorzugsweise in Figur 1 schematisch dargestellten Justiermarken 411, 412, 471, 472, 481, 482 oder alternative Strukturelemente (nicht dargestellt) auf den anzubindenden optischen Koppelstellen 400, 430, 440 herangezogen werden, deren Lage relativ zu den weiteren optischen Koppelstellen 410, 470, 480 sehr genau bekannt ist. Die Erfassung der Justiermarken 411, 412, 471, 472, 481, 482 oder der alternativen Strukturelemente kann vorzugsweise über ein bildgebendes Verfahren, insbesondere über ein kamerabasiertes Verfahren, erfolgen, das bevorzugt eine Lokalisierung der Justiermarken 411, 412, 471, 472, 481, 482 oder der alternativen Strukturelemente im dreidimensionalen Raum erlaubt. Dabei können vorzugsweise auch konfokale bildgebende Verfahren verwendet werden. Hierbei ist insbesondere möglich, Teile eines optischen Strahlengangs der Freiform-Mikrostrukturierungseinheit sowohl zur Erfassung der Justiermarken 411, 412, 471, 472, 481, 482 als auch zur Belichtung des herzustellenden wellenleiterbasierten optischen Koppelelements 10 zu verwenden. Die Erfassung der Justiermarken 411, 412, 471, 472, 481, 482 oder der alternativen Strukturelemente kann mit möglichst hoher Genauigkeit erfolgen, wobei Abweichungen bevorzugt kleiner als 500 nm, besonders bevorzugt kleiner als 200 nm, insbesondere kleiner als 100 nm oder 50 nm sind. Die Positioniergenauigkeit des durch das Freiform-Mikrostrukturierungsverfahren herzustellenden wellenleiterbasierten optischen Koppelelements 10 und der weiteren optischen Koppelstellen 410, 470, 480 auf den anzubindenden optischen Koppelstellen 400, 430, 440 ist bevorzugt besser als 500 nm, besonders bevorzugt besser als 200 nm, insbesondere besser als 100 nm oder 50 nm. Diese Werte beziehen sich auf die Herstellung von erfindungsgemäßen Anordnungen und Strukturen, die für eine Vakuum-Betriebswellenlänge von ca. 1,5 µm vorgesehen sind.

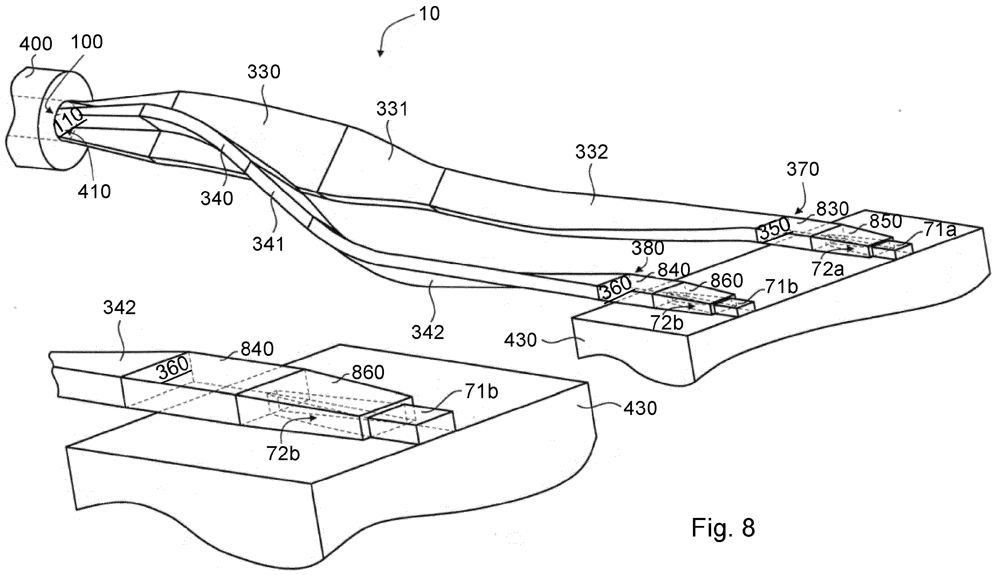

In der in Figur 3 skizzierten Ausführung ist das optische Bauteil 400 als Einmoden-Glasfaser mit rotationssymmetrischem Indexprofil ausgestaltet, die zwei entartete oder nahezu entartete näherungsweise linear polarisierte Wellenleitermoden (z.B. sog. LP0l-Moden) aufweist. Der Begriff "entartete oder nahezu entartete Moden" beschreibt dabei Wellenleitermoden mit sehr ähnlichen effektiven Brechungsindizes, deren Unterschied typischerweise kleiner als 0,001 ist. Bei Standard-Einmodenfasern weisen die beiden unterschiedliche polarisierten Grundmoden sehr ähnliche Intensitätsverteilungen auf, d.h. das normierte Überlappintegral der räumlichen Intensitätsverteilungen liegt nahe bei 1 und ist bevorzugt größer als 0,9 oder 0,95. Das wellenleiterbasierte optische Koppelelement 10 erlaubt es, die beiden der ersten optischen Koppelstelle 100 zugeordneten ersten Eigenmoden 120, 130 oder zueinander orthogonale Linearkombinationen der beiden Eigenmoden 120, 130 zu trennen, d.h. ein erster Eigenmodus 120 des optischen Bauteils 400 oder die erste Linearkombination der Eigenmoden 120, 130 wird in einen Eigenmodus 260, beispielsweise einen sog. TE-Modus, des ersten integriert-optischen Bauteils 430, das in Figur 8 mit dem Bezugszeichen 71a bezeichnet ist, überführt, während ein zweiter Eigenmodus 130 des Bauteils 400 oder die zweite Linearkombination der Eigenmoden 120, 130 in einen Eigenmodus 280, beispielsweise wieder einen sog. TE-Modus, des zweiten integriert-optischen Bauteils 440, das in Figur 8 mit dem Bezugszeichen 71b bezeichnet ist, überführt wird. Die zweiten, beispielsweise als "TM" bezeichneten Moden der Ausgangswellenleiter 430, 440 werden in dieser Ausführung, abgesehen von unerwünschtem Übersprechen (engl. *cross-talk),* nicht angeregt.

Wie Figur 3 zeigt, kann dies bevorzugt durch eine kontinuierliche Torsion der Teilwellenleiter 330, 340 erfolgen. Weitere Beispiele finden sich in den Figuren 8, 9 und 10. Auch diese Struktur lässt sich in vielfältiger Weise modifizieren. So ist es vorzugsweise möglich, die Torsion der Wellenleiter bereits im ersten Bereich 600 des wellenleiterbasierten optischen Koppelelements 10 beginnen zu lassen, in dem die Wellenleiter noch nicht auseinandergeführt sind. Darüber hinaus sind weitere Strukturgeometrien des wellenleiterbasierten optischen Koppelelements 10 denkbar, die sich bevorzugt durch numerische Parameter- oder Topologieoptimierungsverfahren ermitteln lassen.

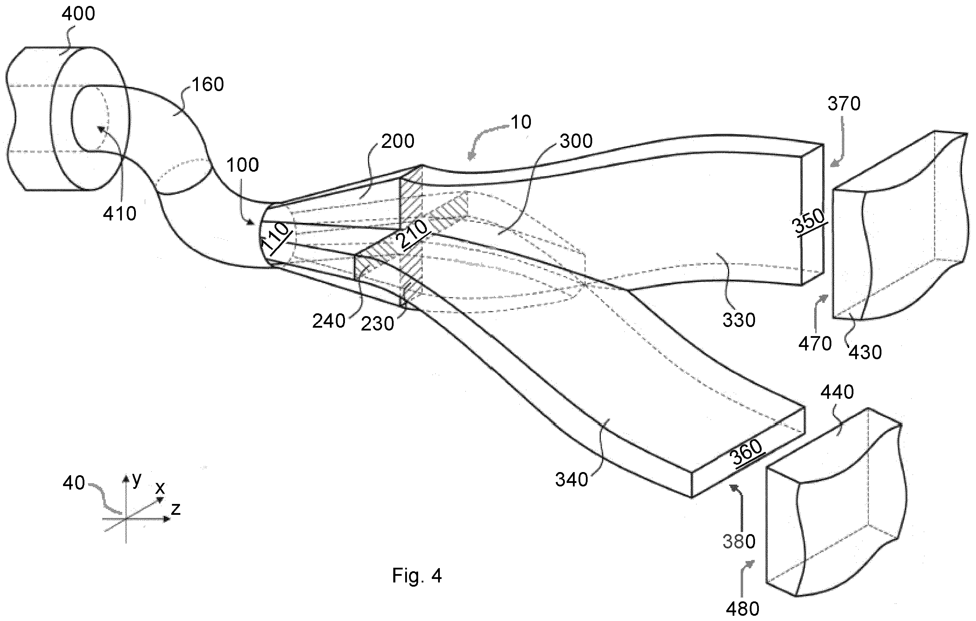

Wie beispielhaft in Figur 4 dargestellt, lässt sich das wellenleiterbasierte optische Koppelelement 10 durch ein dreidimensionales Freiform-Mikrostrukturierungsverfahren *in situ* an der optischen Koppelstelle 410 des optischen Bauteils 400 oder zwischen mindestens zwei weiteren optischen Koppelstellen 410, 470, 480 mindestens eines optischen Bauteils 400, 430, 440 herstellen und dabei in Position, Form und Größe an die Position und Orientierung der mindestens zwei weiteren optischen Koppelstellen 410, 470, 480 des mindestens eines optischen Bauteils 400, 430, 440 anpassen. Im Hinblick auf eine schnelle und durchsatzstarke Fertigung sind für das wellenleiterbasierte optische Koppelelement 10 möglichst einfache Formen mit möglichst geringen Volumina bevorzugt. Vorteilhaft im Hinblick auf die Form sind beispielsweise einfach zusammenhängende Gebiete mit wenigen Strukturdetails oder Topologien, die im dreidimensionalen Raum möglichst wenige so genannte "Löcher" aufweisen. Optische Gitter, die sich ebenfalls zur Trennung optischer Felder eignen, weisen oft das Problem auf, dass sie zu sehr detailreichen Strukturen mit hohen Genauigkeitsanforderungen führen, die aufwendige Strukturierungsschritte erfordern. Kleine Volumina können durch Ausnutzung der zumindest abschnittsweise vorhandenen wellenleitenden Eigenschaften des optischen Koppelelements erzeugt werden. Ein Volumen des durch ein Freiform-Mikrostrukturierungsverfahren erzeugten wellenleiterbasierten optischen Koppelelements 10 umfasst dabei bevorzugt weniger als 1000 µm³, besonders bevorzugt weniger als 500 µm³, insbesondere bei weniger als 250 µm³ oder 150 µm³, gegebenenfalls zuzüglich optionaler Verbindungswellenleiter oder anderer mechanischer oder optischer Zusatzstrukturen. Diese Werte beziehen sich auf wellenleiterbasierte optische Koppelelemente 10, die für eine Vakuum-Betriebswellenlänge von ca. 1,5 µm vorgesehen sind und die ein Material mit einem Brechungsindex von ca. 1.5 umfassen. Für andere Betriebswellenlängen lassen sich die Volumina der optischen wellenleiterbasierten Koppelelemente 10 proportional zur dritten Potenz der Betriebswellenlänge unter jeweiliger Berücksichtigung der Brechungsindizes der verwendeten Materialien skalieren.

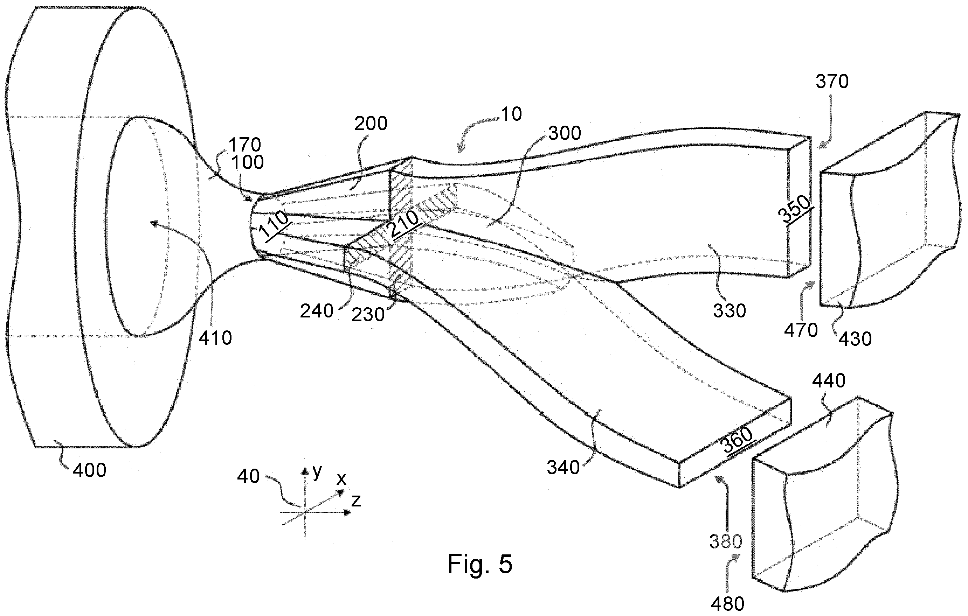

Der vorstehend verwendete Begriff der Herstellung "an einer optischen Koppelstelle" beschreibt eine Ausführung, in der eine optische Kopplung zwischen dem wellenleiterbasierten optischen Koppelelement 10 und der dem optischen Bauteil 400 zugeordneten weiteren optischen Koppelstelle 410 ermöglicht wird. Dazu kann, wie schematisch in Figur 1 dargestellt, vorzugsweise ein direkter physikalischer Kontakt zwischen dem optischen Bauteil 400 und dem wellenleiterbasierten optischen Koppelelement 10 im Bereich der ersten optischen Koppelstelle 100 vorliegen. Alternativ kann, wie die Figuren 4 und 5 zeigen, eine Übertragung von Licht zwischen dem wellenleiterbasierten optischen Koppelelement 10 und der dem optischen Bauteil 400 zugeordneten weiteren optischen Koppelstelle 410 durch eine weitere, besonders bevorzugt als Verbindungswellenleiter 160, 170 ausgestaltete Struktur erfolgen. Die Verbindungswellenleiter 160, 170 können vorzugsweise zusammen mit dem wellenleiterbasierten optischen Koppelelement 10 durch ein Freiform-Mikrostrukturierungsverfahren *in-situ,* d.h. direkt an der Zielposition, die insbesondere die erste optische Koppelstelle 100 betreffen kann, hergestellt werden, um so in vorteilhafter Weise eine sehr präzise Ausrichtung der optischen Elemente zueinander und zu dem wellenleiterbasierten optischen Koppelelement 10 zu ermöglichen.

Figur 4 zeigt beispielhaft eine Anordnung, bei der zwischen der weiteren Koppelstelle 410 des als Glasfaser, insbesondere als Einmodenfaser, ausgelegten optischen Bauteils 400 und der ersten optischen Koppelstelle 100 des wellenleiterbasierten optischen Koppelelements 10 ein S-förmiges Wellenleitersegment als Verbindungswellenleiter 160 eingefügt wurde, mit dem eine Translation und/oder eine Rotation des wellenleiterbasierten optischen Koppelelements 10 relativ zu dem fest montierten Bauteil 400 erreicht werden kann. Damit wird es möglich, die Lage des wellenleiterbasierten optischen Koppelelements 10 an die Position und/oder Orientierung der zweiten weiteren optischen Koppelstelle 470, die dem weiteren fest montierten optischen Bauteil 430 zugeordnet ist, anzupassen, auch wenn die Relativpositionen der Bauteile 400, 430 unvermeidlichen, aus Fertigungstoleranzen resultierenden Schwankungen unterworden sind. Zusätzlich zu der in Figur 4 dargestellten Ausführung kann auch zwischen der zweiten weiteren optischen Koppelstelle 470 des optischen Bauteils 430 und der zugehörigen optischen Koppelstelle 370 des wellenleiterbasierten optischen Koppelelements 10 ein Wellenleitersegment (nicht dargestellt) eingefügt werden, mit dem sich die Freiheitsgrade in Bezug auf eine Positionierung des wellenleiterbasierten optischen Koppelelements 10 weiter erhöhen lassen.

Alternativ oder zusätzlich können die zusätzlichen Verbindungswellenleiter 160, 170 auch dazu dienen, an der weiteren optischen Koppelstelle 410 des optischen Bauteils 400 vorliegende Modenfelder an das der zugeordneten ersten optischen Koppelstelle 100 des wellenleiterbasierten optischen Koppelelements 10 anzupassen. Wie beispielhaft in Figur 5 dargestellt, kann der zusätzlich Verbindungswellenleiter 170 als Taper ausgelegt sein. Der Begriff "Taper" bezeichnet hierbei ein Wellenleitersegment, das eine Verjüngung in eine Richtung aufweist. Der Taper kann hierbei derart ausgelegt sein, dass eine möglichst verlustarme adiabatische Anpassung der räumlichen Modenverteilung erfolgt, d.h. dass der überwiegende Anteil der Leistung der ersten Modenverteilung in die zweite Modenverteilung überführt wird und nicht abgestrahlt und nicht absorbiert wird. Dabei ist es auch möglich, dass der zur Modenfeldanpassung verwendete zusätzliche Verbindungswellenleiter 170 zumindest abschnittsweise multimodig ausgeführt ist, obwohl sowohl das daran angeschlossene optischen Bauteil 400 als auch das wellenleiterbasierte optischen Koppelelement 10 einmodige optische Koppelstellen aufweisen. Diese Ausführung kann bei einem an eine Glasfaser angeschlossenen taperförmigen Verbindungswellenleiter 170 auftreten, der aufgrund des gewählten Mantelmaterials einen höheren Brechungsindexkontrast als die Glasfaser aufweist, dessen anfänglicher Durchmesser aber an den Brechungsindex der Glasfaser angepasst ist. In dieser Ausführung kann durch ein geeignetes Design erreicht werden, dass dennoch eine effiziente Kopplung möglich ist, insbesondere indem die Anregung höherer Moden in dem multimodigen Abschnitt vermieden wird. Abweichend von den in Figur 4 und Figur 5 skizzierten Anordnungen können der Verbindungswellenleiter 160, 170 und/oder die im optischen Bauteil 400 enthaltenen und der optischen Koppelstelle 410 zugeordneten Wellenleiter nicht-rotationssymmetrische, beispielsweise rechteckige oder elliptische Querschnitte mit nicht-entarteten Wellenleitermoden unterschiedlicher Polarisation aufweisen. In diesem Fall kann der Verbindungswellenleiter 160, 170 entlang der Propagationsrichtung eine Torsion aufweisen, durch die sie die Polarisationsrichtung der nicht-entarteten Eigenmoden kontinuierlich verändern lässt.

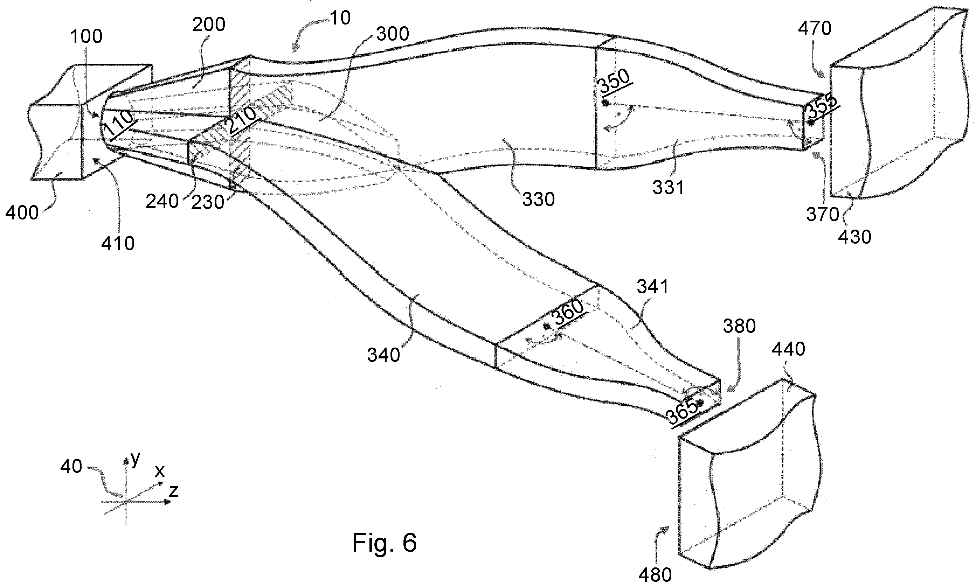

Multimodige Wellenleiter können auch dann auftreten, wenn das wellenleiterbasierte optische Koppelelement 10 mindestens zwei Teilwellenleiter 330, 340 umfasst, die durch ein hohes Aspektverhältnis gekennzeichneten Querschnitte enthält, vorzugsweise um einen großen Unterscheid der effektiven Brechungsindizes und damit eine starke Entkopplung der beiden unterschiedlich polarisierten Grundmoden zu erreichen. Dabei kann der Fall auftreten, dass bei der zum stark geführten Grundmodus gehörenden Polarisation zusätzlich zum Grundmodus höhere Moden ausbreitungsfähig werden. In diesem Fall kann die Anregung dieser höheren Moden durch eine geeignete Formgebung der Teilwellenleiter 330, 340 komplett vermieden werden. Wie in Figur 6 schematisch dargestellt, kann dies insbesondere dadurch erreicht werden, dass die multimodigen Teilwellenleiter 330, 340 mit stark elongierten Querschnitten 350, 360, nach dem Auseinanderführen der Teilwellenleiter 330, 340 und der damit einhergehenden räumlichen Trennung der stark geführten Grundmoden, durch geeignete Taper 331, 341 wieder auf einmodige Querschnitte 355, 365 zurückgeführt werden.

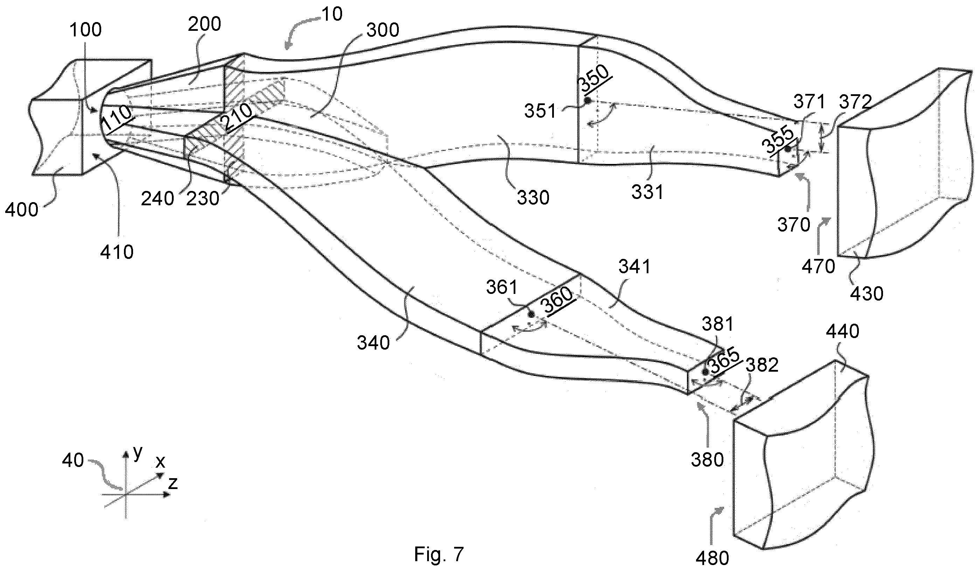

Alternativ kann die Anregung höherer Moden bewusst in Kauf genommen werden und es können geeignet geformte Taper 331, 341 vorgesehen sein, die eine Rückführung der interferierenden Modenfelder auf ein wohldefiniertes, stark lokalisiertes, an den Grundmodus eines nachfolgenden Wellenleiters angepasstes Ausgangsfeld ermöglichen. Im Ausführungsbeispiel gemäß Figur 7 ist zur Ausgestaltung der Taper 331, 341 jeweils ein lateraler Versatz 372, 382 der Schwerpunkte 371, 381 der Taperendfläche 355, 365 in Bezug auf die Schwerpunkte 351, 361 der jeweiligen Anfangsfläche 350, 360 eingerichtet, die sich vorzugsweise numerisch optimieren lassen.

Die in den Figuren 6 und 7 dargestellten Taper 331, 341 sind als beispielhaft zu verstehen und lassen sich in vielfältiger Weise modifizieren. So ist es vorzugsweise möglich, durch geeignete Krümmungen der Wellenleitertrajektorien oder durch flossenförmige, an den Wellenleiterkern angesetzte Hilfsstrukturen eine starke Auslöschung des schwach geführten Modus zu erreichen und damit das Auslöschungsverhältnis zu erhöhen. Weiterhin können die Teilwellenleiter 330, 340 ohne klare geometrische Abgrenzung in die Taperabschnitte 331, 341 übergehen oder ganz mit diesen zusammengefasst werden. Ferner ist es möglich, entsprechende Strukturen durch numerische Parameteroptimierungsverfahren oder Topologieoptimierungsverfahren zu entwerfen und/oder, ausgehend von den Geometrien gemäß den Figur 6 und 7, zu verbessern.

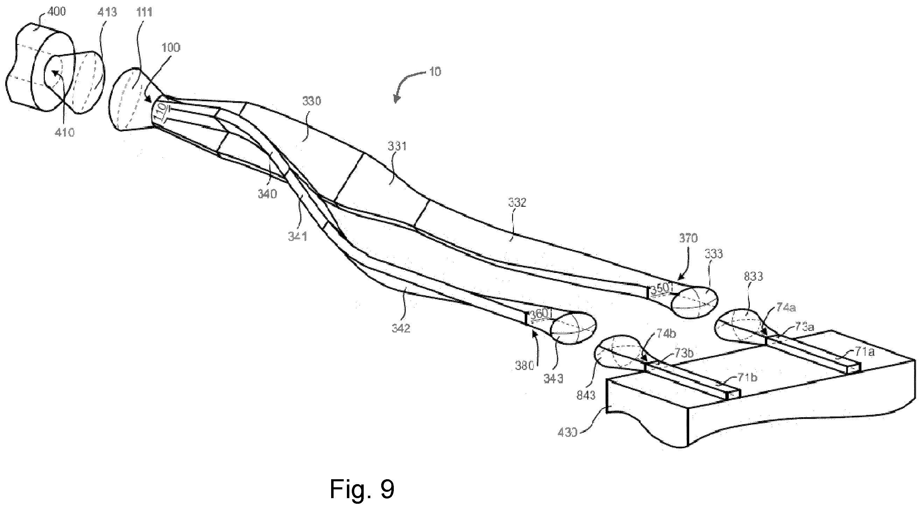

Verschiedene Möglichkeiten der optischen Kopplung des wellenleiterbasierten optischen Koppelelements 10 an optische Komponenten sind in den Figuren 8, 9 und 10 beispielhaft dargestellt. So sind beispielsweise Anordnungen denkbar, in denen die erste optische Koppelstelle 100 des wellenleiterbasierten Koppelelements 10 nicht in einem direkten physikalischen Kontakt mit der weiteren optischen Koppelstelle 410 des optischen Bauteils 400 steht und in denen auch keine Verbindung durch zusätzliche Verbindungswellenleiter 160, 170 vorliegt. Stattdessen kann das Licht zwischen den optischen Koppelstellen 100, 410 durch ein zumindest bereichsweise homogenes Medium propagieren. Dabei kann es sich anbieten, die erste optische Koppelstelle 100 des wellenleiterbasierten optischen Koppelelements 10 und/oder die weitere optische Koppelstelle 410 des optischen Bauteils 400 mit strahlformenden Elementen 111, 413 zu versehen, um so eine effiziente optische Kopplung zu ermöglichen, wie in Figur 9 beispielsweise dargestellt. Die strahlformenden Elemente 111, 413 können vorzugsweise zusammen mit dem wellenleiterbasierten optischen Koppelelement 10 durch ein Freiform-Mikrostrukturierungsverfahren hergestellt werden, was insbesondere eine sehr präzise Ausrichtung in Bezug auf die betreffenden optischen Koppelstellen 100, 410 ermöglicht.

Figur 8 zeigt eine Ausführungsform, in der die optische Kopplung zwischen den beiden weiteren optischen Koppelstellen 370, 380 des wellenleiterbasierten optischen Koppelelements 10 und den integriert-optischen Wellenleitern 71a, 71b auf einem optischen Chip 430 durch zusätzliche Verbindungswellenleiter 830, 840 in Kombination mit Taperstrukturen 850, 860 auf der Seite der Verbindungswellenleiter 830, 840 und mit Taperstrukturen 72a und 72b auf der Seite der integriert-optischen Wellenleitern 71a, 71b erfolgt. Die Verbindungswellenleiter 830, 840 sowie die zugehörigen Taperstrukturen 850, 860 lassen sich im selben Schritt wie das wellenleiterbasierte optische Koppelelement 10 durch ein Freiform-Mikrostrukturierungsverfahren *in situ,* also an der Zielposition, herstellen und dabei mit hoher Präzision an den auf dem optischen Chip 430 vorhandenen Wellenleiterstrukturen ausrichten.

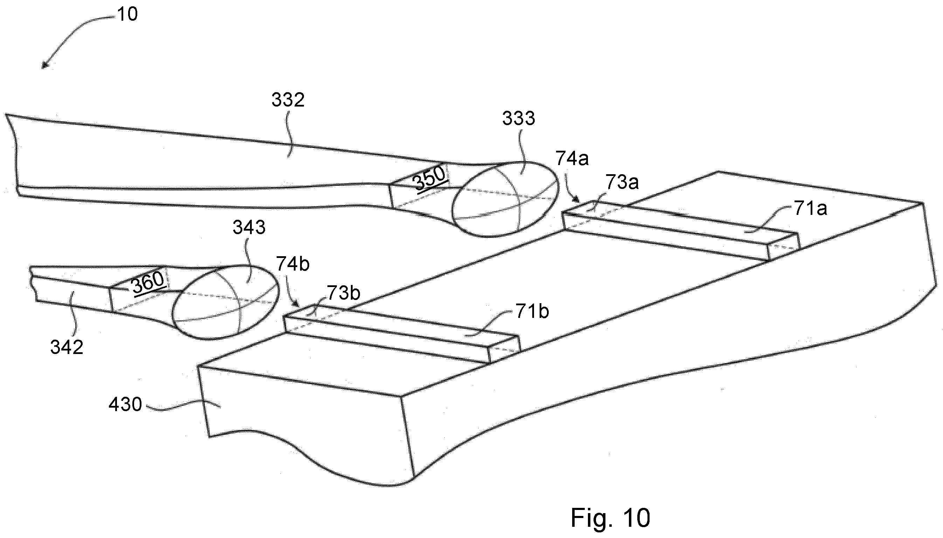

Die Figuren 9 und 10 zeigen Ausführungsformen, in denen die beiden weiteren optischen Koppelstellen 370, 380 des wellenleiterbasierten optischen Koppelelements 10 nicht in direktem physikalischen Kontakt mit den zugehörigen optischen Koppelstellen 74a, 74b des integriert-optischen Chips 430 stehen. Stattdessen propagiert hier das Licht zwischen den optischen Koppelstellen durch einen zumindest bereichsweise homogenen Bereich, der entweder frei von Materialien sein kann (Vakuum) oder durch bestimmte Gase, Flüssigkeiten oder Festkörper, insbesondere optisch transparente Deckmaterialien zum Schutz und zur Stabilisierung der gesamten Anordnung, ausgefüllt sein kann. Zur Verbesserung der Koppeleffizienz sind hierbei an den Endflächen 350, 360 weitere strahlformende Elemente 333, 343 angebracht, die vorzugsweise zusammen mit dem wellenleiterbasierten optischen Koppelelement 10 durch ein Freiform-Mikrostrukturierungsverfahren hergestellt werden können und die damit sehr präzise an den jeweiligen optischen Koppelstellen ausgerichtet werden können.

Figur 9 zeigt eine Ausführung, in der auch auf der Seite des optischen Chips 430 an den Facetten 73a, 73b der integriert-optischen Wellenleiter 71a und 71b strahlformende Elemente 833, 843 angebracht sind, die, zusammen mit den strahlformenden Elementen 333, 343 auf der Seite des wellenleiterbasierten optischen Koppelelements 10 eine Ausrichtungstoleranz bei der Montage der Anordnung erhöhen. Zusätzlich können, zur Verbesserung der Koppeleffizienz zwischen der weiteren optischen Koppelstelle 410 des optischen Bauteils 400 und der ersten optischen Koppelstelle 100 des wellenleiterbasierten Koppelelements 10, auf den beiden optischen Koppelstellen 100, 410 die weiteren strahlformenden Elemente 413, 111 angebracht sein. Alternativ dazu ist es möglich, strahlformende Elemente, wie in Figur 10 gezeigt, nur auf einer einzigen Seite der jeweiligen optischen Koppelstelle anzubringen.

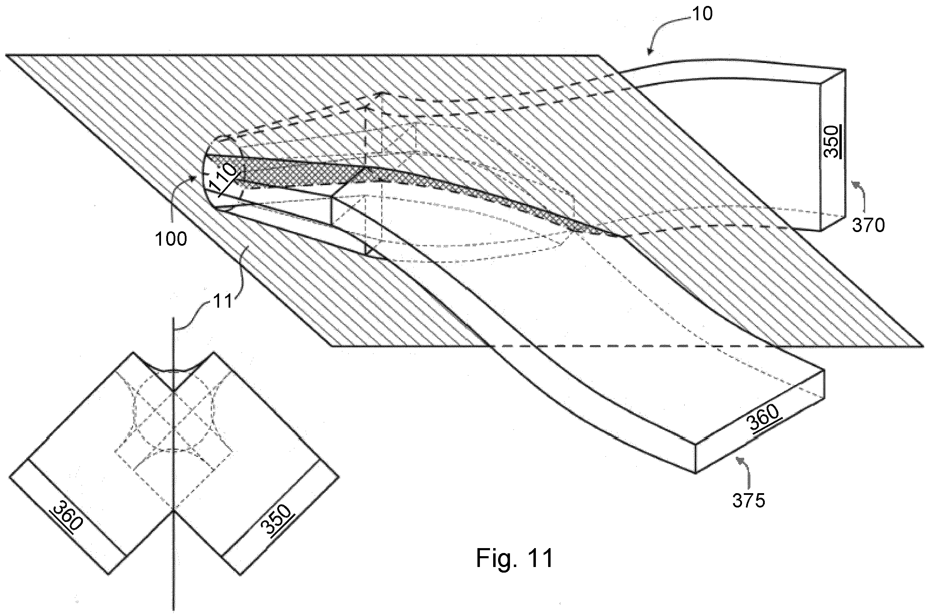

Wie oben erwähnt, ermöglicht es das Freiform-Mikrostrukturierungsverfahren, insbesondere, Strukturen mit symmetrischen oder nahezu symmetrischen Geometrien zu erzeugen, die für die beiden voneinander getrennten Moden sehr ähnliche Verluste aufweisen können. Wie in Figur 11 schematisch dargestellt, bezeichnet die nahezu symmetrische Strukturgeometrie in diesem Zusammenhang eine dreidimensionale Form umfassend eine Symmetrieebene 11 wobei eine perfekte Symmetrie durch etwaige Anpassungen der Strukturgeometrie leicht gestört sein kann, die insbesondere zur Ankopplung des wellenleiterbasierten optischen Koppelelements 10 an Positionen und Richtungen der optischen Koppelstellen der anzubindenden optischen Koppelelemente erforderlich sein können.

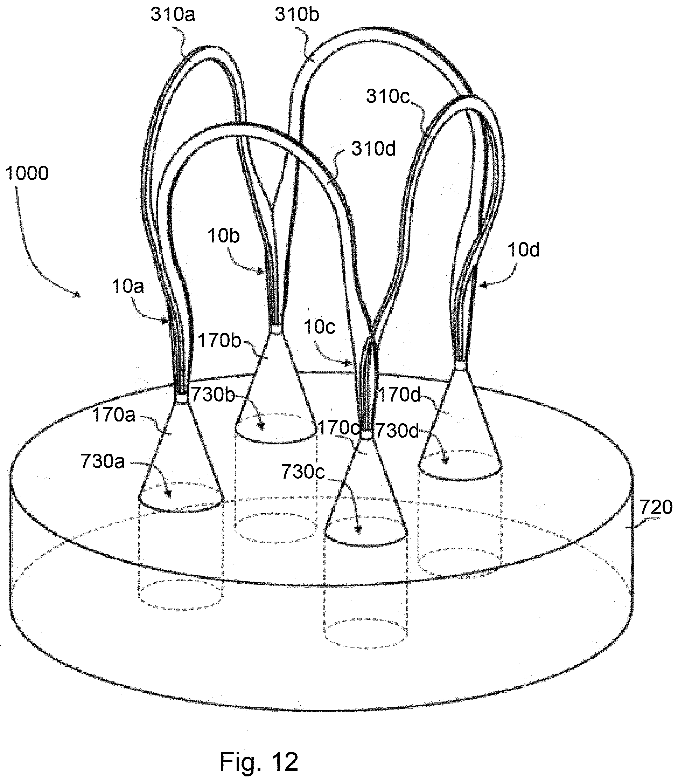

Die vorstehend beschriebenen Ausführungen sind als Beispiele zu verstehen und spiegeln keinesfalls den vollen Einsatzbereich der erfindungsgemäßen Anordnung wider. So lassen sich insbesondere die wellenleiterbasierten optischen Koppelelemente 10 auch mit zusätzlichen funktionalen optischen Elementen oder Anordnungen solcher Elemente kombinieren, die gemeinsam mit dem jeweiligen wellenleiterbasierten optischen Koppelelement 10 durch ein Mikrostrukturierungsverfahren, bevorzugt ein Freiform-Mikrostrukturierungsverfahren, *in situ,* also an der jeweiligen Zielposition hergestellt werden können, und die damit sehr präzise an das jeweilige wellenleiterbasierte optische Koppelelement 10 angeschlossen und/oder an diesen ausgerichtet werden können. Vorzugsweise können die funktionalen optischen Elemente weitere Verbindungswellenleiter, Taper, optische Leistungsteiler oder optische Freiformelemente, insbesondere Spiegel, Linsen oder andere refraktive oder diffraktive Bauteile, umfassen und hierbei durch weitere Hilfsstrukturen, insbesondere durch weitere mechanische Stützstrukturen, ergänzt werden. Dadurch wird es möglich, komplexere funktionale optische Anordnungen, etwa zur Polarisationsanalyse, auf der Facette optischer Fasern oder integriert-optischer Wellenleiter oder auch auf ausgedehnten Arrays von Fotodetektoren, wie z.B. Kamerachips, zu erzeugen. Derartige Ausführungsbeispiele finden sich in den Figuren 12 bis 23.

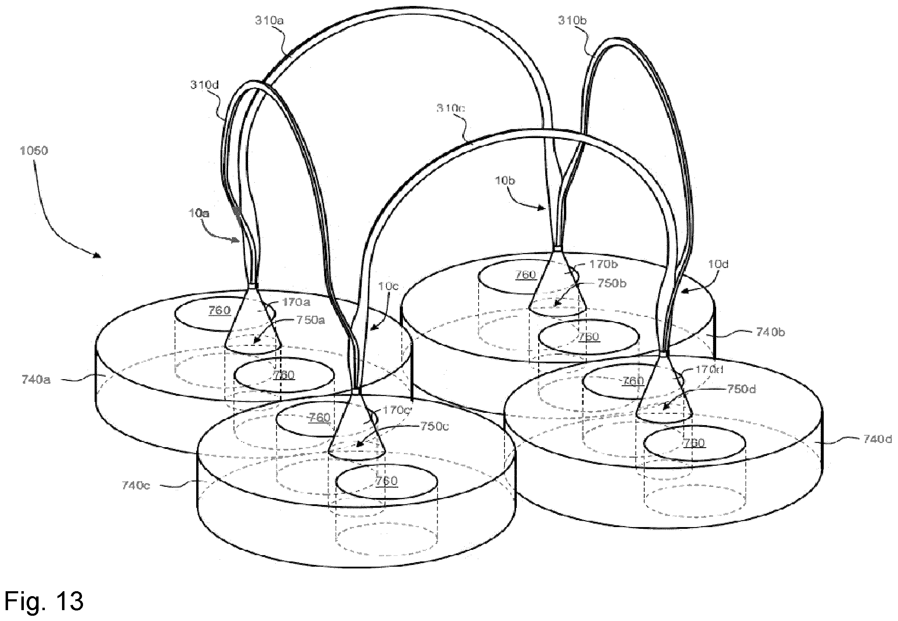

Figur 12 zeigt eine Anordnung 1000, die einem wellenleiterbasierten Analogon eines Polarisationsstrahlteiler-Würfels mit vier optischen Koppelstellen entspricht und die sich durch ein Freiform-Mikrostrukturierungsverfahren auf einer Endfläche einer Mehrkernfaser 720 herstellen lässt. Im Gegensatz zu einem einzelnen optischen Koppelelement ist es mit der in Figur 12 gezeigten Anordnung im Prinzip möglich, verschiedene Polarisationen bidirektional und ohne Leistungsverluste zu trennen und/oder zusammenzuführen. Die Mehrkernfaser 720 übernimmt an dieser Stelle die Rolle des mindestens einen optischen Bauteils 400, das im skizzierten Fall über vier optische Koppelstellen verfügt. Die dargestellte Anordnung umfasst vier, auf der Endfläche der Vierkernfaser 720 angeordnete wellenleiterbasierte optische Koppelelemente 10a, 10b, 10c, 10d, die durch zusätzliche Verbindungswellenleiter 310a, 310b, 310c, 310d miteinander verbunden sind. Die Faserkerne können dabei einen kreisförmigen Querschnitt aufweisen. Alternativ können sie auch als polarisationserhaltende Faserkerne mit zweifach-rotationssymmetrischen Querschnitten ausgestaltet sein - dies ist in Figur 13 anhand von vier polarisationserhaltenden Einzelfasern skizziert. Das wellenleiterbasierte optische Koppelelement 10a verteilt zwei durch unterschiedliche Polarisationsrichtungen gekennzeichnete LP01-Moden des Faserkerns 730a auf die Wellenleiter 310a, 310d und koppelt sie von dort in je einen LP01-Modus der Faserkerne 730b, 730c ein. In gleicher Weise verteilt das wellenleiterbasierte optische Koppelelement 10d die zwei durch unterschiedliche Polarisationsrichtungen gekennzeichneten LP01-Moden des Faserkerns 730d auf die Wellenleiter 310b, 310c und koppelt sie von dort in die jeweils noch freien LP01-Moden der Faserkerne 730b, 730c ein. In dieser Ausführung fungieren die wellenleiterbasierten optischen Koppelelemente 10a, 10d gemeinsam als Polarisationsstrahlteiler, während die wellenleiterbasierten optischen Koppelelemente 10b, 10c gemeinsam als Polarisationsstrahlkombinierer genutzt werden. Durch Umkehrung des Lichtwegs lassen sich diese Rollen vertauschen, und die gesamte Anordnung kann als fasergekoppelter Polarisationsstrahlteiler genutzt werden. Für eine effiziente Ankopplung an den jeweiligen Faserkern werden hier zusätzliche Taperstrukturen 170a, 170b, 170c und 170d verwendet.

Figur 13 zeigt eine zu Figur 12 analoge Anordnung 1050 auf Basis von vier polarisationserhaltenden Einzelfasern 740a, 740b, 740c, 740d mit zugehörigen Faserkernen 750a, 750b, 750c, 750d. Die Einzelfasern 740a, 740b, 740c, 740d übernehmen an dieser Stelle die Rolle des mindestens einen optischen Bauteils 400. Die zugehörigen Faserquerschnitte haben in der dargestellten Anordnung 1050, wie bei vielen polarisationserhaltenden Fasern üblich, durch zusätzliche spannungserzeugende Elemente 760 eine zweifache-Rotationssymmetrie. Durch eine 90°-Rotation der polarisationserhaltenden Einzelfasern 740a und 740d um ihre Längsachse lässt sich die Funktionalität der Anordnung um den Aspekt der Polarisationsdrehung erweitern; entsprechend einer Verwendung von zusätzlichen Halbwellenplatten in der klassischen Freistrahl-Optik.

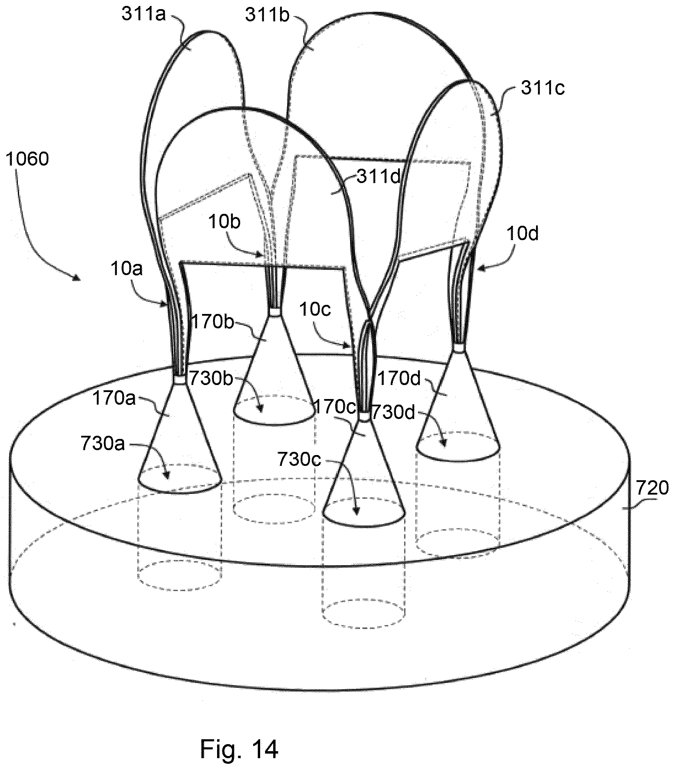

Die zwischen den wellenleiterbasierten optischen Koppelelementen 10a, 10b, 10c, 10d verlaufenden Verbindungswellenleiter 310a, 310b, 310c, 310d sind in den Figuren 12 und 13 als Freiformwellenleiter mit rechteckigem Querschnitt skizziert. Wie die in Figur 14 dargestellte Anordnung 1060 zeigt, kann die Lichtübertragung zwischen den wellenleiterbasierten optischen Koppelelementen 10a, 10b, 10c, 10d alternativ mittels so genannter "Flüstergaleriemoden" (engl. *whispering-gallery mode)* erreicht werden. In dieser Ausführung wird die Tatsache genutzt, dass Licht entlang einer geeignet dimensionierten konvexen Außenkontur eines optisch hochbrechenden Gebietes geführt werden kann. Dies erlaubt es beispielsweise, die optischen Verbindungen zwischen den wellenleiterbasierten optischen Koppelelementen 10a, 10b, 10c, 10d durch flächige Strukturelemente 311a, 311b, 311c, 311d mit höherer mechanischen Stabilität zu stützen. Die Strukturelemente 311a, 311b, 311c, 311d können zusätzlich in dem von dem geführten Licht nicht tangierten Bereich an weiteren mechanischen Stützstrukturen befestigt werden, ohne dass dies einen negativen Einfluss auf die optischen Übertragungseigenschaften hat.

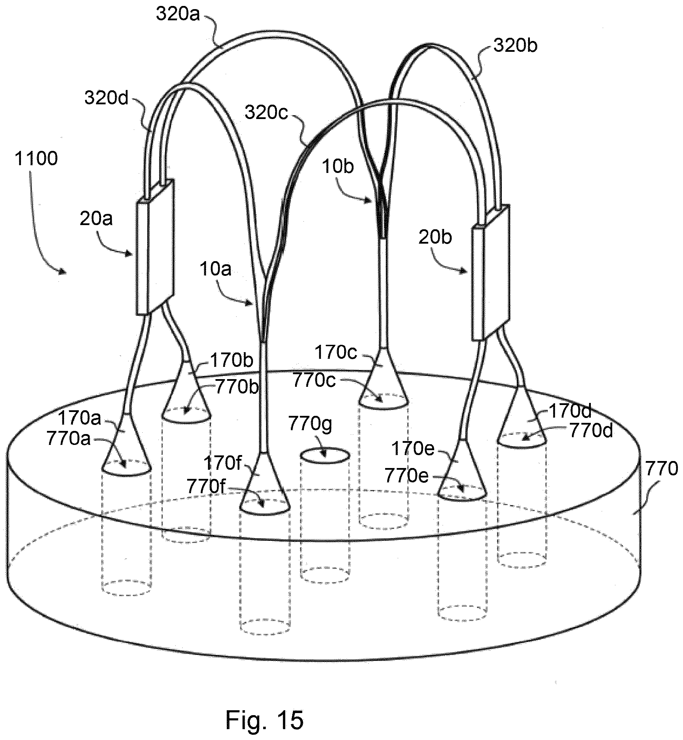

Figur 15 zeigt eine zu einem optischen Polarisationsmultiplex-Heterodyn-Empfänger gehörende passive optische Wellenleiterstruktur 1100, die sich mittels eines Freiform-Mikrostrukturierungsverfahrens auf einer Endfläche einer Siebenkernfaser 770 herstellen lässt, die an dieser Stelle die Rolle des mindestens einen optischen Bauteils 400 übernimmt. Die Anordnung 1100 umfasst zwei wellenleiterbasierte optische Koppelelemente 10a, 10b zur Polarisationstrennung, zwei Multimodeninterferenzkoppler 20a, 20b zur kohärenten Überlagerung der in den einzelnen Polarisationen enthaltenen Signale, sowie weitere Verbindungswellenleiter 320a, 320b, 320c, 320d und Taper 170a, 170b, 170c, 170d, 170e, 170f. Zur Nutzung als kohärenter optischer Polarisationsmultiplex-Empfänger können die Faserkerne 770a, 770b, 770c, 770d, 770e, 770f wie folgt an externe Bauteile angeschlossen werden:
- Faserkerne 770a, 770b an einen ersten balancierten Fotodetektor;
- Faserkerne 770d, 770e an einen zweiten balancierten Fotodetektor;
- Faserkern 770g ist nicht angeschlossen;
- Faserkern 770c an eine Datensignal-Quelle und Faserkern 770f an einen Lokaloszillator, oder umgekehrt.

Durch das am Datensignal-Eingang angeschlossene wellenleiterbasierte optische Koppelelement 10b wird das Datensignal in zwei Signalkomponenten zerlegt, die den beiden entarteten orthogonal polarisierten LP0l-Eigenmoden des zugehörigen Faserkerns entsprechen. In ähnlicher Weise wird das Lokaloszillatorsignal durch das am Lokaloszillator-Eingang angeschlossene wellenleiterbasierte optische Koppelelement 10a in zwei Signalkomponenten zerlegt, die den beiden entarteten orthogonal polarisierten LP0l-Eigenmoden des zugehörigen Faserkerns entsprechen. Die Polarisationsrichtungen dieser Datensignalanteile und Lokaloszillatorsignalanteile werden durch die Torsion der an den optischen Koppelelementen anschließenden Wellenleiter 320a, 320b; 320c, 320d angeglichen und durch die Multimoden-Interferenzkoppler 20a, 20b überlagert. Die Überlagerungssignale werden den balancierten Fotodetektoren zugeführt. Die Rekonstruktion des Polarisationsmultiplex-Datensignals erfolgt durch eine, in der Regel digitale, Verarbeitung der elektrischen Signale, die durch die als Mischer dienenden Fotodetektoren erzeugt werden können. Im Zuge dieser Verarbeitung lassen sich etwaige Imperfektionen der gezeigten Verteilerstruktur kompensieren.

Die in Figur 15 dargestellte Anordnung 1100 ist als beispielhaft zu verstehen und lässt sich in vielfältiger Weise modifizieren. So kann durch die Hinzunahme zusätzlicher Faserkerne und durch eine entsprechend erweiterte Signalüberlagerung, bevorzugt mittels 2-auf-4-Multimodeninterferenzkopplern, ein Polarisationsmultiplex-Homodyn-Empfänger bereitgestellt werden. Ferner lässt sich der mit dem Lokaloszillator verbundene Polarisationsstrahlteiler durch einen einfachen Leistungsteiler ersetzen. Die Struktur kann nicht nur auf der Endfläche einer Mehrkernfaser hergestellt werden, alternativ kann auch ein eindimensionales Faserarray oder ein zweidimensionales Faserarray oder eine Anordnung von anderen, beispielsweise integriert-optischen Wellenleitern zum Einsatz kommen. Ähnlich zu der in Figur 13 gezeigten Ausführung können auch hier polarisationserhaltende Fasern verwendet werden.

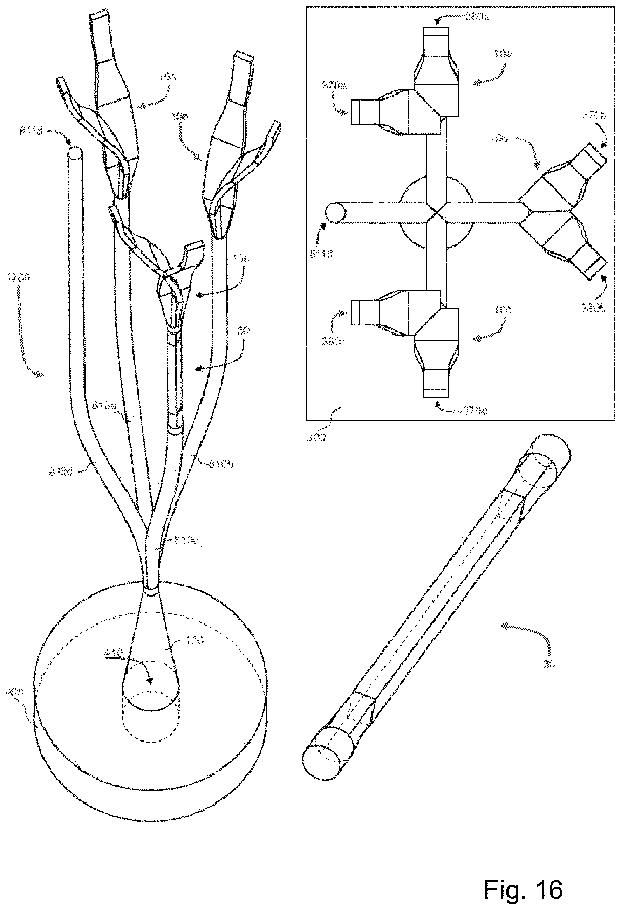

Figur 16 zeigt eine Polarisationsanalysator-Struktur 1200, die sich mittels eines Freiform-Mikrostrukturierungsverfahrens auf einer Endfläche einer Einmodenfaser, die an dieser Stelle die Rolle des mindestens einen optischen Bauteils 400 übernimmt, herstellen lässt. Das über die weiteren optische Koppelstelle 410 von der Faser in die Struktur eingekoppelte Licht wird zunächst gleichmäßig auf vier Wellenleiter 810a, 810b, 810c, 810d verteilt. An den Wellenleitern 810a, 810b sind hierbei zwei mit ihren Hauptachsen gegeneinander um 45° gedrehte wellenleiterbasierte optische Koppelelemente 10a, 10b angeschlossen, mit denen sich die Signalanteile in den zugehörigen, gegeneinander um 45° geneigten Polarisationsrichtungen isolieren lassen. Die Hauptachsen des optischen Koppelelements werden hierbei durch die Polarisationsrichtung der von dem optischen Koppelelement getrennten linearen Polarisationen definiert. Am Wellenleiter 810c ist ein optisch doppelbrechender Wellenleiter 30 angeschlossen, wobei die Länge des Wellenleiters 30 so gewählt wird, dass er sich wie eine Viertelwellenplatte mit einer durch die Orientierung des rechteckigen Querschnittes bestimmten Ausrichtung verhält. Die Doppelbrechung des Wellenleiters 30 erfolgt auf Grund seiner Materialeigenschaften oder seiner Kernquerschnittform die beispielsweise rechteckig und nicht-quadratisch, oder elliptisch und nicht kreisförmig ist. Am Ausgang des doppelbrechenden Wellenleiters 30 ist ein weiteres wellenleiterbasiertes optisches Koppelelement 10c angeschlossen, dessen Hauptachsen um 45° gegenüber den Hauptachsen des als Viertelwellenplatte fungierenden doppelbrechenden Wellenleiters 30 verdreht sind. Die Hauptachsen des Wellenleiters 30 werden durch die Polarisationsrichtungen der zugehörigen Polarisationseigenzustände des doppelbrechenden Wellenleiters 30 definiert und ergeben sich im Falle eines rechteckigen oder elliptischen Querschnittes des Wellenleiters 30 den durch die Seiten des Querschnitts-Rechtecks bzw. durch die Hauptachsen der Querschnitt-Ellipse festgelegten Richtungen. Der Wellenleiter 810d bleibt am Ende offen und dient der reinen Leistungsmessung.

Wird Licht mit einer beliebigen, einem bestimmten Polarisationszustand entsprechenden Überlagerung zweier orthogonal polarisierten LP01-Moden von der Faser in die Struktur eingekoppelt, so ergibt sich an den Ausgängen 811d, 370a, 380a, 370b, 380b, 370c, 380c eine charakteristische Leistungsverteilung, die durch entsprechend positionierte Fotodetektoren gemessen werden kann. Aus dieser Leistungsverteilung lässt sich der Polarisationszustand des in die Struktur eingekoppelten Lichtes eindeutig rekonstruieren; siehe z.B. K. Kikuchi et al., Multi-level signaling in the Stokes space and ist application to large-capacity optical communications, Optics Express, Vol. 22, No. 7, 2014, so dass sich mit Hilfe der Struktur 1200 in Kombination mit einer geeigneten Datenverarbeitung und bevorzugt einer Kalibrierung ein vergleichsweise kostengünstig herstellbarer Polarisationsanalysator bereitstellen lässt. Zur Leistungsdetektion kann dabei ein Fotodiodenarray, vorzugsweise ein Bildsensor einsetzen, der ohne aufwendige Justage in Emissionsrichtung der skizzierten Ausgänge angebracht wird. Alternativ können die verschiedenen Ausgänge 811d, 370a, 380a, 370b, 380b, 370c, 380c mittels zusätzlicher Wellenleiter und/oder mikro-optischer Elemente an weitere optische Bauteile, wie z.B. Fotodetektoren oder Glasfasern, angeschlossen werden.

Durch die in Figur 16 skizzierte Verwendung von drei optischen Koppelelementen, einer Viertelwellenplatte, und einem zur reinen Leistungsmessung verwendeten Ausgang 811d ist der Polarisationszustand am Ausgang der Struktur bereits überbestimmt. Die redundante Information kann dazu genutzt werden, die Zuverlässigkeit der Messung zur überprüfen. Alternativ lässt sich die Struktur auch weiter vereinfachen, indem beispielsweise der zur reinen Leistungsmessung verwendete Ausgang 811d entfällt.

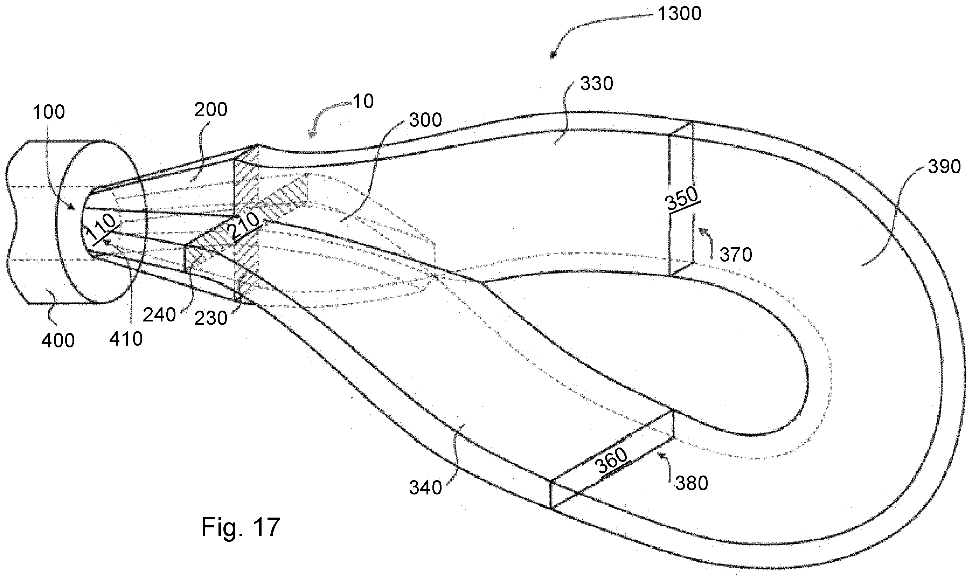

Figur 17 zeigt einen reflektiven Polarisations-Swapper, der ähnlich zu einem Faraday-Rotator-Spiegel Signalanteile, die in zwei orthogonal zueinander polarisierten Grundmoden (sog. LP01-Moden) einer Glasfaser, die an dieser Stelle die Rolle des optischen Bauteils 400 übernimmt, vorliegen, vertauscht und in entgegengesetzter Polarisationsrichtung in die Faser zurückkoppelt. Von den drei optischen Koppelstellen 100, 370, 380 des wellenleiterbasierten optischen Koppelelements 10 ist die erste optische Koppelstelle 100 an die Glasfaser angeschlossen, während die beiden weiteren optischen Koppelstellen 370, 380 durch einen tordierten Wellenleiter 390 miteinander verbunden sind.

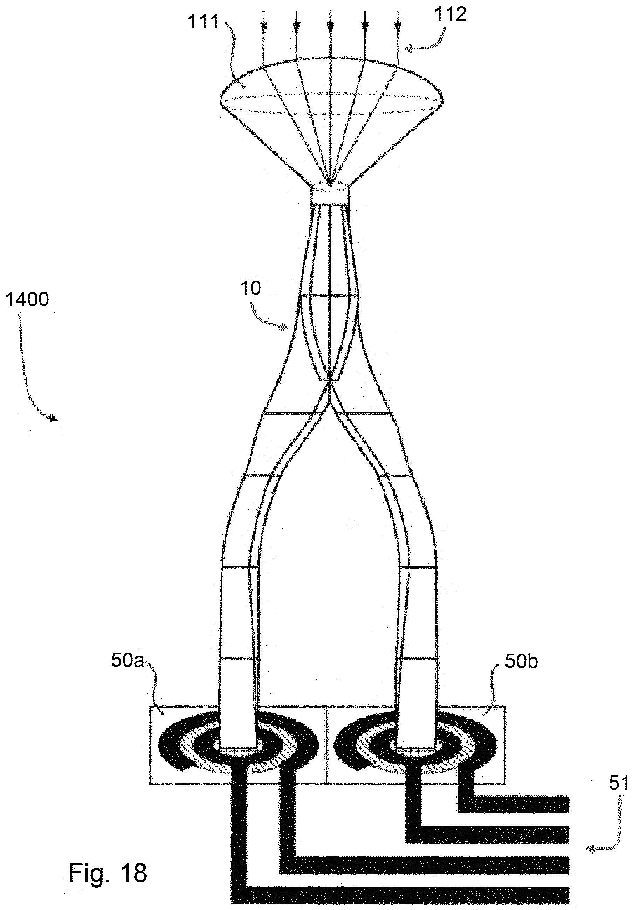

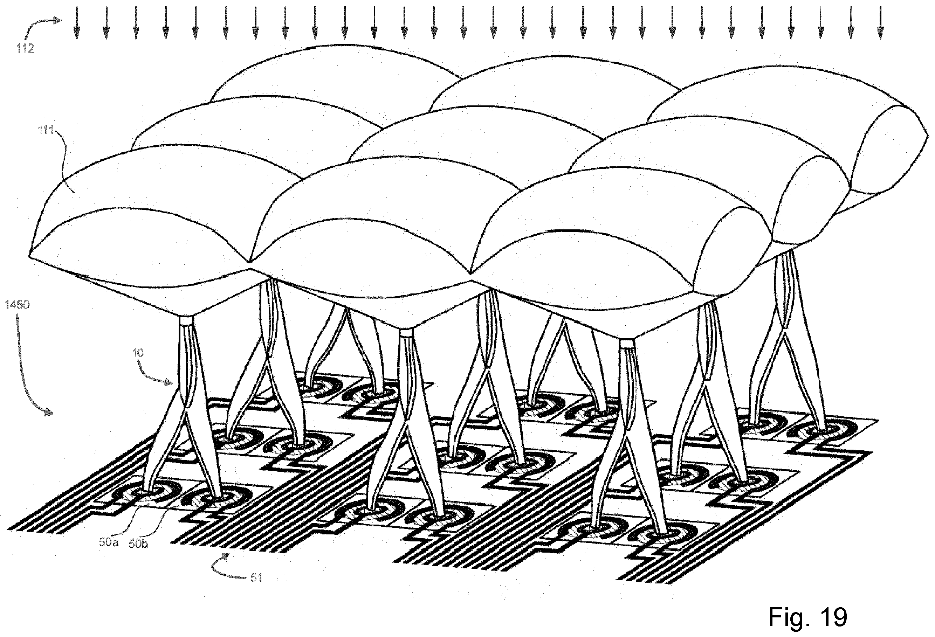

Die Figuren 18 und 19 zeigen eine Anwendung der erfindungsgemäßen Anordnung in Form eines polarisationsempfindlichen Bildsensors 1400, 1450. Die in Figur 18 skizzierte Einzelstruktur umfasst dabei eine Freiform-Linse 111, mit der sich von außen eintreffendes Licht 112 zunächst in das wellenleiterbasierte optische Koppelelement 10 einkoppeln lässt. Nach der Auftrennung der beiden Polarisationen werden die entsprechenden Signalanteile zu zwei, an die beiden weiteren optischen Koppelstellen 370, 380 des wellenleiterbasierten optischen Koppelelements 10 angeschlossenen Fotodetektoren 50a, 50b übertragen und dort in elektrische Signale gewandelt, die durch die elektrischen Leitungen 51 geleitet. Bei den Fotodetektoren 50a, 50b kann es sich vorzugsweise um einzelne Detektoren eines Bildsensors handeln, so dass sich durch eine periodische Fortsetzung der in Figur 18 skizzierten Struktur ein polarisationsempfindlicher Bildsensor aufbauen lässt, mit dem sich die räumliche Verteilung der eintreffenden Leistung getrennt nach beiden Polarisationen erfassen lässt.

Figur 19 zeigt eine arrayartige Wiederholung Strukturen 1400, mittels welcher sich ein polarisationsempfindlicher Bildsensor 1450 oder eine polarisationsempfindliche Kamera mit einer Vielzahl von Pixeln herstellen lässt.

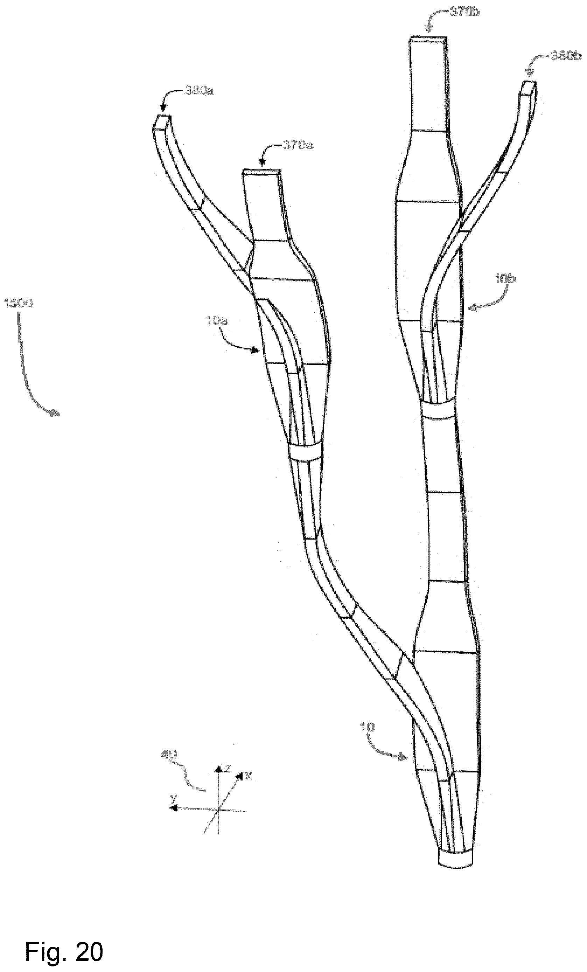

Figur 20 zeigt eine Kaskade 1500 mehrerer wellenleiterbasierter optischer Koppelelemente 10, 10a, 10b, die sich gemeinsam mittels eines Freiform-Mikrostrukturierungsverfahrens herstellen lassen. Mit einer solchen Anordnung wird es insbesondere möglich, das Polarisations-Auslöschungsverhältnis an den optischen Koppelstellen 370a, 380a, 370b, 380b zu verbessern.

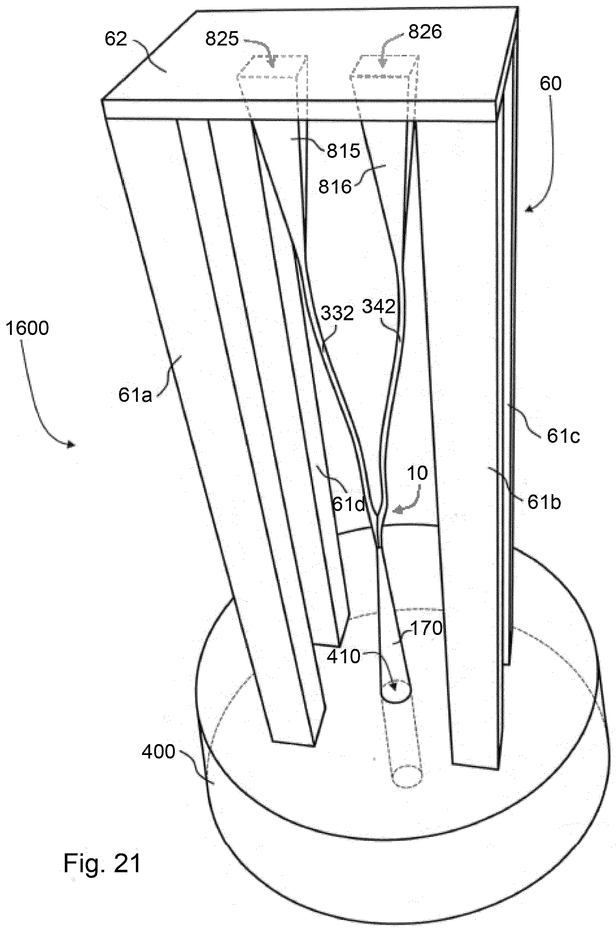

Figur 21 zeigt eine Anordnung 1600, in der das wellenleiterbasierte optische Koppelelement 10 an eine Einmodenfaser, die an dieser Stelle die Rolle des optischen Bauteils 400 übernimmt, angeschlossen ist und dessen Ausgänge durch eine zusätzliche Struktur 60 mechanisch stabilisiert werden. Ein optisches Signal, das an der weiteren optischen Koppelstelle 410 von der Einmodenfaser in den zum wellenleiterbasierten optischen Koppelelement 10 führenden Taper 170 eingekoppelt wird, wird zunächst in zwei Signalanteile aufgeteilt, die den entarteten orthogonal polarisierten LP01-Eigenmoden des zugehörigen Faserkerns entsprechen. Durch die tordierten Wellenleiterabschnitte 332, 342 werden die getrennten Signalanteile dann in ihrer Polarisationsrichtung angeglichen und an optischen Koppelstellen 825, 826 mit einem durch Taper 815, 816 einstellbaren Modenprofil ausgekoppelt. Die Positionen der weiteren optischen Koppelstellen 825, 826 sind an einer plattenförmigen, durch Säulen 61a, 61b, 61c, 61d getragenen Teilstruktur 62 der mechanischen Stützstruktur 60 verankert. Abstand und Position der weiteren optischen Koppelstellen 825, 826 können frei gewählt werden.

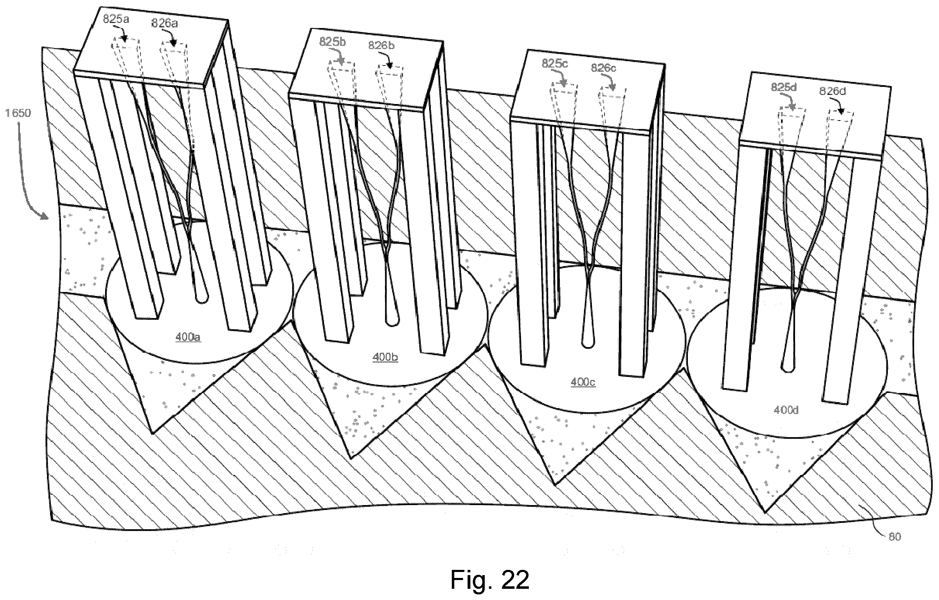

Figur 22 zeigt eine Anordnung 1650, die eine Erweiterung der Anordnung 1600 aus Figur 21 darstellt, auf ein Array 80 von Eingangsfasern 400a, 400b, 400c, 400d. Durch eine Wahl der Abstände der zugehörigen Ausgänge 825a, 826a; 825b, 826b; 825c, 826c; 825d, 826d kann die Anordnung auch ausgangsseitig an ein Faserarray oder an ein sich auf einem Chip befindliches Wellenleiterarray angeschlossen werden. In dieser Ausführung entspricht die Anordnung 1650 einem mehrkanaligen Polarisationsstrahlteiler.

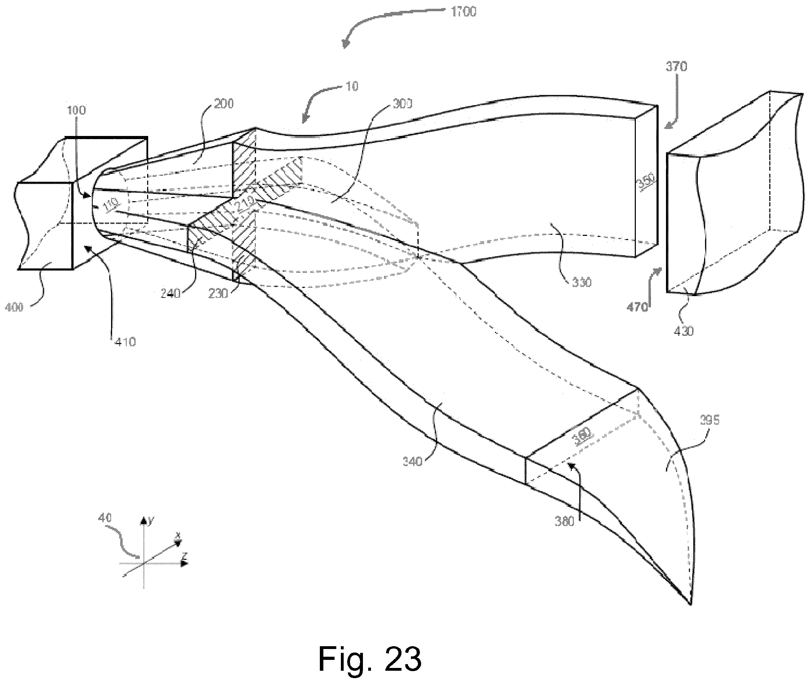

Figur 23 zeigt beispielhaft eine Anordnung 1700, bei der das wellenleiterbasierte optische Koppelelement 10 als Polarisationsfilter verwendet wird. In der skizzierten Anordnung 1700 wird ein in Bezug auf die Polarisation zu filterndes optisches Signal von einem optischen Bauteil 400 emittiert, an dessen optischer Koppelstelle 410 das wellenleiterbasierte optische Koppelement 10 mit seiner ersten optischen Koppelstelle 100 angeschlossen wird. Das gewünschte in Bezug auf die Polarisation gefilterte Signal steht dann in einem der geführten Eigenmoden der zweiten optischen Koppelstelle 370 zur Verfügung, während der durch die Polarisationsfilterung zu unterdrückende Signalanteil einem an die dritte optischen Koppelstelle 380 angeschlossenen optischen Terminationselement (engl. "Beamdump") 395 zugeführt wird. In dem in Figur 23 skizzierten Fall ist das Terminationselement in Form einer sich kontinuierlich verjüngenden Taperstruktur ausgeführt, durch die Licht seitlich, beispielsweise in Richtung einer absorbierenden Fläche abgestrahlt wird. Die in Figur 23 skizzierte Anordnung kann in vielen Aspekten modifiziert werden. So können beispielsweise die Rollen der zweiten optischen Koppelstelle 370 und dritten optischen Koppelstelle 380 miteinander vertauscht werden, ohne dass sich am Funktionsprinzip etwas ändert. Es sind auch Konfigurationen denkbar, bei den Licht an der ersten optischen Koppelstelle 100 aus dem Freiraum eingekoppelt wird, ohne dass dort ein physikalischer Kontakt mit einem optischen Bauteil vorliegt, und bei denen die dritte optische Koppelstelle 370 an ein optisches Bauteil angekoppelt wird. Die Kopplung an ein optisches Bauteil kann entweder unmittelbar oder, wie vorstehend beschrieben, über entsprechende Verbindungswellenleiter oder Freistrahl-Koppelstrecken erfolgen.

### Bezugszeichenliste

| | |
|---|---|
| 10, 10a - 10d. | (wellenleiterbasiertes) optisches Koppelelement |
| 11 | Symmetrieebene |
| 20a,20b | Multimodeninterferenzkoppler |
| 30 | doppelbrechender Wellenleiter, der sich als Viertelwellenplatte verhält |
| 40 | Koordinatensystem des Lithographiesystems |
| 50a,50b | Fotodetektoren |
| 51 | elektrische Leitungen |
| 60 | mechanische Stützstruktur |
| 61a - 61d | Säulen der mechanischen Stützstruktur |
| 62 | Teilstruktur der mechanischen Stützstruktur, getragen von den Säulen |
| 71a, 71b | integriert-optische Wellenleiter |
| 72a, 72b, 170, 170a-170f, 331, 341, 815, 816, 850, 860 | Taperstrukturen |
| 73a, 73b | Facetten der integriert-optischen Wellenleiter |
| 74a, 74b | optische Koppelstellen der integriert-optischen Wellenleiter |
| 80 | Faserarray |
| 100, 370, 370a - 370c, 380, 380a, - 380c | optische Koppelstellen des optischen Koppelelements |
| 110, 350, 360, | Wellenleiterquerschnitte (Facetten) an den optischen Koppelstellen des optischen Koppelelements |
| 111, 333, 343, 413, 833,843 | strahlformende Elemente |
| 112 | eintreffendes Licht |
| 120,130;120a,130a | orthogonale Eigenmoden an der ersten optischen Koppelstelle |
| 140, 150 | Intensitätsverteilungen der Elektrischen-Feld-Vektoren |
| 160, 310a - 310d, 320a - 320d, 830, 840 | Verbindungswellenleiter |
| 200, 300 | Wellenleiterabschnitte des optischen Koppelelements |
| 210 | Wellenleiterquerschnitt bestehend aus einer Überlagerung von Wellenleiterquerschnitten |
| 230,240 | Wellenleiterquerschnitte |
| 250, 260; 270, 280 | orthogonale Eigenmoden an der zweiten und dritten optischen Koppelstelle |
| 301 | Querschnitt einer Überlagerung von Teilwellenleitern in einem Wellenleiterbereich |
| 302a, 302b | Querschnitte der Teilwellenleiter in einem Wellenleiterbereich |
| 311a - 311d | Flächige Strukturelemente für Flüstergalerienmoden-Leitung |
| 330, 340, 332, 342, 390 | Teilwellenleiter bzw. (tordierte) Wellenleitersegmente des optischen Koppelelements |
| 351, 361 | Schwerpunkte der Wellenleiterquerschnitte 350, 360 |
| 355, 365 | Einmodige Querschnitte der Taperstrukturen 331, 341 |
| 371, 381 | Schwerpunkte der Querschnitte 355, 365 |
| 372, 382 | Lateraler Versatz der Schwerpunkte 371, 381 in Bezug auf die Schwerpunkte 351, 361 |
| 395 | Terminationselement ("Beamdump") |
| 400, 430, 440 | optische Bauteile |
| 400a - 400d | optische Faser |
| 410, 470, 480 | optische Koppelstellen der optischen Bauteile |
| 411, 412, 471, 472, 481,482 | Justiermarken |
| 500 | Deckmaterial oder Mantelmaterial |
| 600 | Wellenleiterbereich des optischen Koppelelements, in dem die Teilwellenleiter sehr nahe beieinander liegen oder sich räumlich überschneiden |
| 610 | Wellenleiterbereich des optischen Koppelelements, in dem die Teilwellenleiter räumlich disjunkt sind |
| 720, 770 | Mehrkernfaser |
| 730a - 730d, 770a - 770g | Kerne der Mehrkernfaser |
| 740a - 740d | Polarisationserhaltende Faser |
| 750a - 750d | Faserkerne |
| 760 | spannungserzeugendes Element |
| 810a - 810d | Verbindungswellenleiter |
| 811d, 825a - 825d, 826a - 826d | weitere optische Koppelstellen |
| 1000, 1050, 1060, 1100, 1200, 1300, 1400, 1450, 1500, 1600, 1650, 1700 | zusätzliche funktionale optische Elemente oder Anordnungen derartiger Elemente, die gemeinsam mit dem wellenleiterbasierten optischen Koppelelement *in situ* hergestellt werden |

## Patentansprüche

1. Anordnung zur optischen Kopplung und zur modenselektiven Trennung oder Überlagerung von optischen Feldern, umfassend
- ein wellenleiterbasiertes optisches Koppelelement (10), das mindestens drei optische Koppelstellen (100, 370, 380) aufweist, wobei das wellenleiterbasierte optische Koppelelement (10) einen Kernbereich und einen an den Kernbereich angrenzenden Mantelbereich umfasst, wobei zwischen dem Kernbereich und dem Mantelbereich ein Brechungsindexunterschied von mindestens 0,05 auftritt, wobei das wellenleiterbasierte optische Koppelelement (10) in Form einer dreidimensionalen Freiformstruktur ausgestaltet ist, wobei die Freiformstruktur durch eine geschichtete Struktur aus mindestens sechs Schichten angenähert ist, wobei
∘ mindestens eine erste optische Koppelstelle (100) mindestens zwei voneinander verschiedene, der ersten optischen Koppelstelle (100) zugeordnete geführte Eigenmoden (120, 130) aufweist,
o mindestens eine zweite optische Koppelstelle (370) mindestens einen der zweiten optischen Koppelstelle (370) zugeordneten geführten Eigenmodus (260) aufweist, und
∘ mindestens eine dritte optische Koppelstelle (380) mindestens einen der dritten optischen Koppelstelle (380) zugeordneten geführten Eigenmodus (280) aufweist,
- mindestens ein optisches Bauteil (400), das mindestens eine weitere optische Koppelstelle (410) aufweist;
wobei mindestens eine der optischen Koppelstellen (100, 370, 380) des wellenleiterbasierten optischen Koppelelements (10) an die mindestens eine weitere optische Koppelstelle (410) des optischen Bauteils (400) optisch angeschlossen ist, und
wobei das wellenleiterbasierte optische Koppelelement (10) dazu eingerichtet ist, Licht mit hoher Effizienz bidirektional
∘ zwischen mindestens einem ersten, der ersten optischen Koppelstelle (100) zugeordneten geführten Eigenmodus (120) und dem mindestens einen der zweiten optischen Koppelstelle (370) zugeordneten geführten Eigenmodus (260) sowie
∘ zwischen mindestens einem zweiten, der ersten optischen Koppelstelle (100) zugeordneten geführten Eigenmodus (130) und dem mindestens einen der dritten optischen Koppelstelle (380) zugeordneten geführten Eigenmodus (280)
zu übertragen.

2. Anordnung nach dem vorangehenden Anspruch, wobei mindestens eine der zweiten optischen Koppelstelle (370) oder der dritten optischen Koppelstelle (380) an ein weiteres optisches Bauteil (430, 440) angekoppelt ist.

3. Anordnung nach einem der vorangehenden Ansprüche, wobei die zweite optische Koppelstelle (370) und die dritte optische Koppelstelle (380) räumlich voneinander getrennt sind, und wobei das wellenleiterbasierte optische Koppelelement (10) dazu eingerichtet ist, ein an der ersten optischen Koppelstelle (100) vorliegendes optisches Eingangsfeld in Teilfelder unterschiedlicher Polarisation zu trennen und von den Teilfeldern umfasste optische Signale an der zweiten optischen Koppelstelle (370) und der dritten optischen Koppelstelle (380) auszukoppeln, oder wobei das wellenleiterbasierte optische Koppelelement (10) dazu eingerichtet ist, an der zweiten optischen Koppelstelle (370) und an der dritten optischen Koppelstelle (380) eingekoppelte optische Signale in Form von räumlich überlappenden Teilfeldern unterschiedlicher Polarisation zu überlagern und an der ersten optischen Koppelstelle (100) zur Verfügung zu stellen.

4. Anordnung nach einem der vorangehenden Ansprüche, wobei das wellenleiterbasierte optische Koppelelement (10) zu einer Trennung der mindestens zwei der ersten optischen Koppelstelle (100) zugeordneten geführten Eigenmoden (120, 130) in unterschiedlicher Polarisation und zu einer nachfolgenden Drehung einer Richtung der Polarisationen der getrennten Eigenmoden (120, 130) eingerichtet ist, um ein Angleichen der Richtungen der Polarisationen an den mindestens einen der zweiten optischen Koppelstelle (370) zugeordneten geführten Eigenmodus (260) und an den mindestens einen der dritten optischen Koppelstelle (380) zugeordneten geführten Eigenmodus (280) zu ermöglichen.

5. Anordnung nach einem der vorangehenden Ansprüche, wobei das wellenleiterbasierte optische Koppelelement (10) mindestens zwei Teilwellenleiter umfasst, wobei die Teilwellenleiter in einem ersten Bereich (600) nahe beieinander angeordnet sind oder sich räumlich überschneiden, wobei die Teilwellenleiter, isoliert voneinander betrachtet, zumindest abschnittsweise stark entkoppelte Eigenmoden aufweisen, und wobei die Teilwellenleiter in einem zweiten Bereich (610) räumlich disjunkt sind.

6. Anordnung nach einem der vorangehenden Ansprüche, wobei das wellenleiterbasierte optische Koppelelement (10)
- mindestens einen an die erste optische Koppelstelle (100) anschließenden ersten Wellenleiterbereich (200), in dem ein erster Wellenleiterquerschnitt (110) kontinuierlich in einen zweiten Wellenleiterquerschnitt (210) überführt wird, der eine Überlagerung zweier Wellenleiterquerschnitte (230, 240), die einzeln stark entkoppelte Eigenmoden (250, 260, 270, 280) aufweisen, umfasst, wobei die mindestens zwei der ersten optischen Koppelstelle (100) zugeordnete geführte Eigenmoden (120, 130) in dem ersten Wellenleiterquerschnitt (110) orthogonal zueinander angeordnet sind oder zwei zueinander orthogonale Linearkombinationen der mindestens zwei der ersten optischen Koppelstelle (100) zugeordneten geführten Eigenmoden (120, 130) aus dem ersten Wellenleiterquerschnitt (110) in die stark geführten Eigenmoden (260, 280) der beiden Wellenleiterquerschnitte (230, 240) überführt werden; und
- mindestens einen an den ersten Wellenleiterbereich (200) anschließenden zweiten Wellenleiterbereich (300), in dem die sich die anfangs überschneidenden Wellenleiterquerschnitte (230, 240) in disjunkte Querschnitte (330, 340) auseinandergeführt werden, die die zweite optische Koppelstelle (370) und die dritte optische Koppelstelle (380) festlegen,
umfasst.

7. Anordnung nach dem vorangehenden Anspruch, wobei die Überführung des ersten Wellenleiterquerschnittes (110) in den zweiten Wellenleiterquerschnitt (210) in dem ersten Wellenleiterbereich (200) durch eine stufenlose Deformation des Querschnittes entlang der Propagationsrichtung des Lichtes erfolgt.

8. Anordnung nach einem der beiden vorangehenden Ansprüche, wobei die Wellenleiterquerschnitte (230, 240) jeweils ein einfach zusammenhängendes Gebiet mit einem Aspektverhältnis von mindestens 1,5 bilden.

9. Anordnung nach einem der vorhergehenden Ansprüche, wobei
- die erste optische Koppelstelle (100) unmittelbar oder mittelbar über weitere Wellenleitersegmente oder strahlformende Strukturelemente optisch an einen Wellenleiter mit geringem Indexkontrast und entarteten oder nahezu entarteten orthogonalen Eigenmoden oder an eine optische Faser (400) angekoppelt ist; und/oder
- wobei die zweite optische Koppelstelle (370) oder die dritte optische Koppelstelle (380) unmittelbar oder mittelbar über weitere Wellenleitersegmente oder strahlformende Strukturelemente an einen Wellenleiter mit hohem Indexkontrast und stark entkoppelten orthogonalen Eigenmoden oder an einen halbleiterbasierten integriert-optischen Wellenleiter (71a) oder (71b) optisch angekoppelt ist.

10. Anordnung nach einem der vorangehenden Ansprüche, wobei die erste optische Koppelstelle (100)
- in direktem physikalischem Kontakt mit der weiteren optischen Koppelstelle (410) des optischen Bauteils (400) steht; oder
- nicht in direktem physikalischem Kontakt mit der weiteren optischen Koppelstelle (410) des optischen Bauteils (400) steht, wobei das Licht zwischen der ersten optischen Koppelstelle (100) und der weiteren optischen Koppelstelle (410) durch ein zumindest bereichsweise homogenes Medium propagiert.

11. Anordnung nach einem der vorangehenden Ansprüche, wobei die erste optische Koppelstelle (100) zum Empfang von Licht aus einem Freiraum eingerichtet ist, oder wobei die erste optische Koppelstelle (100) über eine Linse verfügt, die zur Lichteinkopplung aus dem Freiraum eingerichtet ist.

12. Anordnung nach einem der vorangehenden Ansprüche, wobei der Kernbereich einen Brechungsindex von 1,3 bis 1,8 aufweist.

13. Verwendung einer Anordnung nach einem der vorangehenden Ansprüche als:
- Polarisationsfilter, umfassend eine Anordnung nach einem der vorangehenden Ansprüche, sowie ein an eine der zweite optischen Koppelstelle (370) oder an die dritte optischen Koppelstelle (380) des wellenleiterbasierten optischen Koppelelements (10) angeschlossenes optisches Terminationselement (395);
- wellenleiterbasierter Polarisationsstrahlteiler mit mindestens einem Verbindungswellenleiter (310a - 310d);
- passive optische Wellenleiterstruktur für einen kohärenten Polarisationsmultiplex-Empfänger in einer Kombination von mindestens zwei wellenleiterbasierten Koppelelementen (10a, 10b, 10c, 10d) mit mindestens einem Verbindungswellenleiter (320a - 320d);
- passive optische Wellenleiterstruktur für einen Polarisationsanalysator in einer Kombination von mindestens zwei wellenleiterbasierten Koppelelementen (10a, 10b, 10c, 10d) mit mindestens einem Leistungsteiler;
- passive optische Wellenleiterstruktur für einen polarisationsempfindlichen Bildsensor in einer Kombination von mindestens zwei wellenleiterbasierten Koppelelementen (10a, 10b, 10c, 10d) mit mindestens einem mikrooptischen Freiform-Element.

14. Verfahren zur Herstellung eines wellenleiterbasierten optischen Koppelelements (10), das zur modenselektiven Trennung oder Überlagerung von optischen Feldern, an mindestens einer weiteren optischen Koppelstelle (410) mindestens eines optischen Bauteils (400) eingerichtet ist, umfassend die folgenden Schritte:
a) Bereitstellen mindestens eines optischen Bauteils (400) und Lokalisierung mindestens einer weiteren optischen Koppelstelle (410) des mindestens einen optischen Bauteils (400) in einem Koordinatensystem (40) einer zur Durchführung eines Freiform-Mikrostrukturierungsverfahrens eingerichteten Freiform-Mikrostrukturierungseinheit;
b) Erzeugen eines Datensatzes, welcher eine dreidimensionale Form des wellenleiterbasierten optischen Koppelelements (10) in dem Koordinatensystem (40) der Mikrostrukturierungseinheit beschreibt, wobei
- das wellenleiterbasierte optische Koppelelement (10) mindestens drei optische Koppelstellen (100, 370, 380) aufweist, wobei
∘ mindestens eine erste optische Koppelstelle (100) mindestens zwei voneinander verschiedene, der ersten optischen Koppelstelle (100) zugeordnete geführte Eigenmoden (120, 130) aufweist,
∘ mindestens eine zweite optische Koppelstelle (370) mindestens einen der zweiten optischen Koppelstelle (370) zugeordneten geführten Eigenmodus (260) aufweist, und
∘ mindestens eine dritte optische Koppelstelle (380) mindestens einen der dritten optischen Koppelstelle (380) zugeordneten geführten Eigenmodus (280) aufweist,
- wobei das wellenleiterbasierte optische Koppelelement (10) dazu eingerichtet ist, Licht mit hoher Effizienz bidirektional
o zwischen mindestens einem ersten, der ersten optischen Koppelstelle (100) zugeordneten geführten Eigenmodus (120) und dem mindestens einen der zweiten optischen Koppelstelle (370) zugeordneten geführten Eigenmodus (260) sowie
∘ zwischen mindestens einem zweiten, der ersten optischen Koppelstelle (100) zugeordneten geführten Eigenmodus (130) und dem mindestens einen der dritten optischen Koppelstelle (380) zugeordneten geführten Eigenmodus (280)
zu übertragen;
c) Herstellen des wellenleiterbasierten optischen Koppelelements (10) an der mindestens einen weiteren optischen Koppelstelle (410) des mindestens einen optischen Bauteils (400) mittels des Freiform-Mikrostrukturierungsverfahrens;
d) Einbetten des wellenleiterbasierten optischen Koppelements (10) zumindest bereichsweise in einen an das optische wellenleiterbasierte Koppelelement (10) als Kernbereich angrenzenden Mantelbereich, wobei zwischen dem Kernbereich und dem Mantelbereich ein Brechungsindexunterschied von mindestens 0,05 auftritt.

15. Verfahren nach dem vorangehenden Anspruch, wobei mindestens eine der zweiten optischen Koppelstelle (370) oder der dritten optischen Koppelstelle (380) an das mindestens ein optisches Bauteil (400) oder an ein weiteres optisches Bauteil (430, 440) optisch angekoppelt ist, wobei die Position des mindestens einen optischen Bauteils (400) oder der weiteren optischen Bauteile (430, 440) in erfasst und in Schritt b) bei dem Erzeugen des Datensatzes berücksichtigt werden.

16. Verfahren nach einem der vorangehenden Verfahrensansprüche, wobei der Kernbereich einen Brechungsindex von 1,3 bis 1,8 aufweist.

17. Verfahren nach einem der vorangehenden Verfahrensansprüche, wobei mittels des Freiform-Mikrostrukturierungsverfahrens zusätzlich mindestens ein weiteres optisches Element, ausgewählt aus einem Verbindungswellenleiter (30, 160, 170, 310a - 310d, 320a - 320d, 830, 840), einer Taperstruktur (72a, 72b, 170, 170a- 170f, 331, 341, 815, 816, 850, 860), einem optischen Koppler (20a, 20b), einem strahlformenden Strukturelement (111, 411) oder einer mechanischen Stützstruktur (60), hergestellt werden.

18. Verfahren nach einem der vorangehenden Verfahrensansprüche, wobei das Freiform-Mikrostrukturierungsverfahren ein Lithographieverfahren ist, ausgewählt aus Stereolithographie, insbesondere mittels Flächenlichtmodulatoren, oder aus direktschreibender Laserlithographie, insbesondere Mehrphotonenpolymerisation.

## Claims

1. Arrangement for optical coupling and for mode-selective separation or superposition of optical fields, comprising
- a waveguide-based optical coupling element (10) having at least three optical coupling points (100, 370, 380), wherein the waveguide-based optical coupling element (10) comprises a core region and a cladding region adjoining the core region, with a refractive index difference of at least 0.05 occurring between the core region and the cladding region, wherein the waveguide-based optical coupling element (10) is designed in form of a three-dimensional free-form structure, wherein the free-form structure is approximated by a layered structure of at least six layers, wherein
∘ at least one first optical coupling point (100) has at least two differing guided eigenmodes (120, 130) assigned to the first optical coupling point (100),
o at least one second optical coupling point (370) has at least one guided eigenmode (260) assigned to the second optical coupling point (370), and
∘ at least one third optical coupling point (380) has at least one guided eigenmode (280) assigned to the third optical coupling point (380),
- at least one optical component part (400) which has at least one further optical coupling point (410);
wherein at least one of the optical coupling points (100, 370, 380) of the waveguide-based optical coupling element (10) is optically connected to the at least one further optical coupling point (410) of the optical component part (400) and
wherein the waveguide-based optical coupling element (10) is configured to bidirectionally transfer light with high efficiency
o between at least one first guided eigenmode (120) assigned to the first optical coupling point (100) and the at least one guided eigenmode (260) assigned to the second optical coupling point (370) and
o between at least one second guided eigenmode (130) assigned to the first optical coupling point (100) and the at least one guided eigenmode (280) assigned to the third optical coupling point (380).

2. Arrangement according to the preceding claim, wherein at least one of the second optical coupling point (370) and the third optical coupling point (380) is coupled to a further optical component part (430, 440).

3. Arrangement according to either of the preceding claims, wherein the second optical coupling point (370) and the third optical coupling point (380) are spatially separated from one another and wherein the waveguide-based optical coupling element (10) is configured to separate an optical input field present at the first optical coupling point (100) into partial fields of different polarization and to output couple optical signals comprised by the partial fields at the second optical coupling point (370) and the third optical coupling point (380), or wherein the waveguide-based optical coupling element (10) is designed to superpose optical signals in the form of spatially overlapping partial fields of different polarization input coupled at the second optical coupling point (370) and the third optical coupling point (380) and provide said superposition at the first optical coupling point (100).

4. Arrangement according to any one of the preceding claims, wherein the waveguide-based optical coupling element (10) is configured to separate the at least two guided eigenmodes (120, 130) assigned to the first optical coupling point (100) into different polarizations and to subsequently rotate one direction of the polarizations of the separated eigenmodes (120, 130) in order to facilitate an alignment of the directions of the polarizations to the at least one guided eigenmode (260) assigned to the second optical coupling point (370) and to the at least one guided eigenmode (280) assigned to the third optical coupling point (380).

5. Arrangement according to any one of the preceding claims, wherein the waveguide-based optical coupling element (10) comprises at least two partial waveguides, the partial waveguides being arranged close together or in spatially intersecting fashion in a first region (600), the partial waveguides, when considered in isolation from one another, having strongly decoupled eigenmodes at least sectionally, and the partial waveguides being spatially disjoint in a second region (610).

6. Arrangement according to any one of the preceding claims, wherein the waveguide-based optical coupling element (10) comprises
- at least one first waveguide region (200) which adjoins the first optical coupling point (100) and in which a first waveguide cross section (110) is continuously converted into a second waveguide cross section (210) which comprises a superposition of two waveguide cross sections (230, 240) that individually have strongly decoupled eigenmodes (250, 260, 270, 280), with the at least two guided eigenmodes (120, 130) assigned to the first optical coupling point (100) being arranged orthogonal to one another in the first waveguide cross section (110) or two mutually orthogonal linear combinations of the at least two guided eigenmodes (120, 130) assigned to the first optical coupling point (100) from the first waveguide cross section (110) being converted into the strongly guided eigenmodes (260, 280) of the two waveguide cross sections (230, 240); and
- at least one second waveguide region (300) which adjoins the first waveguide region (200) and in which the initially overlapping waveguide cross sections (230, 240) are guided apart into disjoint cross sections (330, 340) which define the second optical coupling point (370) and the third optical coupling point (380).

7. Arrangement according to the preceding claim, wherein the transformation of the first waveguide cross section (110) into the second waveguide cross section (210) in the first waveguide region (200) is implemented by a continuous deformation of the cross section along the propagation direction of the light.

8. Arrangement according to either of the two preceding claims, wherein the waveguide cross sections (230, 240) in each case form a simply connected region having an aspect ratio of at least 1.5.

9. Arrangement according to any one of the preceding claims, wherein
- the first optical coupling point (100) is directly or indirectly, via further waveguide segments or beam-shaping structure elements, optically coupled to a waveguide with a low index contrast and degenerate or virtually degenerate orthogonal eigenmodes or to an optical fiber (400); and/or
- wherein the second optical coupling point (370) or the third optical coupling point (380) is directly or indirectly, via further waveguide segments or beam-shaping structure elements, optically coupled to a waveguide with a high index contrast and strongly decoupled orthogonal eigenmodes or to a semiconductor-based integrated-optical waveguide (71a) or (71b).

10. Arrangement according to any one of the preceding claims, wherein the first optical coupling point (100)
- is in direct physical contact with the further optical coupling point (410) of the optical component part (400); or
- is not in direct physical contact with the further optical coupling point (410) of the optical component part (400), with the light propagating through an at least regionally homogeneous medium between the first optical coupling point (100) and the further optical coupling point (410).

11. Arrangement according to any one of the preceding claims, wherein the first optical coupling point (100) is configured to receive light from a free space or wherein the first optical coupling point (100) comprises a lens configured to couple light in from the free space.

12. Arrangement according to any one of the preceding claims, wherein the core region has a refractive index of 1.3 to 1.8.

13. Use of an arrangement according to any one of the preceding claims, as:
- a polarization filter, comprising an arrangement according to any one of the preceding claims and a beam dump (395) connected to one of the second optical coupling point (370) or to the third optical coupling point (380) of the waveguide-based optical coupling element (10);
- a waveguide-based polarizing beam splitter with at least one connecting waveguide (310a-310d);
- a passive optical waveguide structure for a coherent polarization multiplex receiver in a combination of at least two waveguide-based coupling elements (10a, 10b, 10c, 10d) with at least one connecting waveguide (320a-320d);
- a passive optical waveguide structure for a polarization analyzer in a combination of at least two waveguide-based coupling elements (10a, 10b, 10c, 10d) with at least one power splitter;
- a passive optical waveguide structure for a polarization-sensitive image sensor in a combination of at least two waveguide-based coupling elements (10a, 10b, 10c, 10d) with at least one micro-optical free-form element.

14. Method for producing a waveguide-based optical coupling element (10) configured for mode-selective separation or superposition of optical fields at at least one further optical coupling point (410) of at least one optical component part (400), comprising the following steps:
a) providing at least one optical component part (400) and localizing at least one further optical coupling point (410) of the at least one optical component part (400) in a coordinate system (40) in a free-form microstructuring unit configured to carry out a free-form microstructuring method;
b) generating a data set which describes a three-dimensional form of the waveguide-based optical coupling element (10) in the coordinate system (40) of the microstructuring unit, wherein
- the waveguide-based optical coupling element (10) has at least three optical coupling points (100, 370, 380), wherein
∘ at least one first optical coupling point (100) has at least two differing guided eigenmodes (120, 130) assigned to the first optical coupling point (100),
o at least one second optical coupling point (370) has at least one guided eigenmode (260) assigned to the second optical coupling point (370), and
∘ at least one third optical coupling point (380) has at least one guided eigenmode (280) assigned to the third optical coupling point (380),
- wherein the waveguide-based optical coupling element (10) is configured to bidirectionally transfer light with high efficiency
o between at least one first guided eigenmode (120) assigned to the first optical coupling point (100) and the at least one guided eigenmode (260) assigned to the second optical coupling point (370) and
o between at least one second guided eigenmode (130) assigned to the first optical coupling point (100) and the at least one guided eigenmode (280) assigned to the third optical coupling point (380);
c) producing the waveguide-based optical coupling element (10) at the at least one further optical coupling point (410) of the at least one optical component part (400) by means of the free-form microstructuring method;
d) embedding the waveguide-based optical coupling element (10) at least regionally in a cladding region adjoining the optical waveguide-based coupling element (10) as core region, with a refractive index difference of at least 0.05 occurring between the core region and the cladding region.

15. Method according to the preceding claim, wherein at least one of the second optical coupling point (370) and the third optical coupling point (380) is optically coupled to the at least one optical component part (400) or to a further optical component part (430, 440), with the position of the at least one optical component part (400) or of the further optical component parts (430, 440) being registered and taken into account in step b) when generating the data set.

16. Method according to either of the preceding method claims, wherein the core region has a refractive index of 1.3 to 1.8.

17. Method according to any one of the preceding method claims, wherein
the free-form microstructuring method is used to additionally produce at least one further optical element, selected from a connecting waveguide (30, 160, 170, 310a-310d, 320a-320d, 830, 840), a taper structure (72a, 72b, 170, 170a-170f, 331, 341, 815, 816, 850, 860), an optical coupler (20a, 20b), a beam-shaping structure element (111, 411) and a mechanical support structure (60).

18. Method according to any one of the preceding method claims, wherein the free-form microstructuring method is a lithography method selected from stereolithography, in particular by means of spatial light modulators, and direct writing laser lithography, in particular multi-photon polymerization.

## Revendications

1. Arrangement pour le couplage optique et la séparation ou la superposition sélective en mode de champs optiques, comprenant
- un élément de couplage optique (10) à base de guide d'ondes qui possède au moins trois points de couplage optique (100, 370, 380), l'élément de couplage optique (10) à base de guide d'ondes comprenant une zone centrale et une zone d'enveloppe adjacente à la zone centrale, une différence d'indice de réfraction d'au moins 0,05 se produisant entre la zone centrale et la zone d'enveloppe, l'élément de couplage optique (10) à base de guide d'ondes étant réalisé sous la forme d'une structure de forme libre tridimensionnelle, la structure de forme libre étant approximée par une structure stratifiée composée d'au moins six couches,
o au moins un premier point de couplage optique (100) possédant au moins deux modes propres guidés (120, 130) différents l'un de l'autre, associés au premier point de couplage optique (100),
o au moins un deuxième point de couplage optique (370) possédant au moins un mode propre guidé (260) associé au deuxième point de couplage optique (370), et
o au moins un troisième point de couplage optique (380) possédant au moins un mode propre guidé (280) associé au troisième point de couplage optique (380),
- au moins un composant optique (400), qui possède au moins un point de couplage optique supplémentaire (410) ;
au moins l'un des points de couplage optique (100, 370, 380) de l'élément de couplage optique (10) à base de guide d'ondes étant relié optiquement à l'au moins un point de couplage optique supplémentaire (410) du composant optique (400), et
l'élément de couplage optique (10) à base de guide d'ondes étant conçu pour transmettre la lumière de manière bidirectionnelle avec une grande efficacité
o entre au moins un premier mode propre guidé (120) associé au premier point de couplage optique (100) et l'au moins un mode propre guidé (260) associé au deuxième point de couplage optique (370), ainsi que
o entre au moins un deuxième mode propre guidé (130) associé au premier point de couplage optique (100) et l'au moins un mode propre guidé (280) associé au troisième point de couplage optique (380).

2. Arrangement selon la revendication précédente, au moins l'un parmi le deuxième point de couplage optique (370) ou le troisième point de couplage optique (380) étant couplé à un composant optique supplémentaire (430, 440) .

3. Arrangement selon l'une des revendications précédentes, le deuxième point de couplage optique (370) et le troisième point de couplage optique (380) étant séparés spatialement l'un de l'autre, et l'élément de couplage optique (10) à base de guide d'ondes étant conçu pour séparer un champ d'entrée optique présent au niveau du premier point de couplage optique (100) en champs partiels de polarisation différente et pour découpler les signaux optiques contenus dans les champs partiels au niveau du deuxième point de couplage optique (370) et du troisième point de couplage optique (380), ou l'élément de couplage optique (10) à base de guide d'ondes étant conçu pour superposer, des signaux optiques injectés au niveau du deuxième point de couplage optique (370) et au niveau du troisième point de couplage optique (380) sous le forme de champs partiels de polarisation différente qui se chevauchent spatialement, et pour les mettre à disposition au niveau du premier point de couplage optique (100).

4. Arrangement selon l'une des revendications précédentes, l'élément de couplage optique (10) à base de guide d'ondes étant conçu pour une séparation des au moins deux modes propres guidés (120, 130) associés au premier point de couplage optique (100) en différentes polarisations et pour ensuite faire tourner une direction des polarisations des modes propres (120, 130) séparés afin de rendre possible un ajustement des directions des polarisations au niveau du mode propre guidé (260) associé à l'au moins un deuxième point de couplage optique (370) et au niveau du mode propre guidé (280) associé à l'au moins un troisième point de couplage optique (380).

5. Arrangement selon l'une des revendications précédentes, l'élément de couplage optique (10) à base de guide d'ondes comprenant au moins deux guides d'ondes partiels, les guides d'ondes partiels étant disposés à proximité les uns des autres dans une première zone (600) ou se chevauchant spatialement, les guides d'ondes partiels, considérés isolément les uns des autres, possédant des modes propres fortement découplés au moins par sections, et les guides d'ondes partiels étant spatialement disjoints dans une deuxième zone (610).

6. Arrangement selon l'une des revendications précédentes, l'élément de couplage optique (10) à base de guide d'ondes comprenant
- au moins une première zone de guide d'ondes (200) raccordée au premier point de couplage optique (100), dans laquelle une première section transversale de guide d'ondes (110) est transformée continuellement en une deuxième section transversale de guide d'ondes (210) qui comprend une superposition de deux sections transversales de guide d'ondes (230, 240) qui, individuellement, possèdent des modes propres (250, 260, 270, 280) fortement découplés, les au moins deux modes propres guidés (120, 130) associés au premier point de couplage optique (100) étant disposés orthogonalement les uns par rapport aux autres dans la première section transversale de guide d'ondes (110) ou deux combinaisons linéaires orthogonales l'une par rapport à l'autre des au moins deux modes propres guidés (120, 130) associés au premier point de couplage optique (100) étant transformée de la première section transversale de guide d'ondes (110) en les modes propres fortement guidés (260, 280) des deux sections transversales de guide d'ondes (230, 240) ; et
- au moins une deuxième zone de guide d'ondes (300) raccordée à la première zone de guide d'ondes (200), dans laquelle les sections transversales des guides d'ondes (230, 240) qui se chevauchent au départ sont séparées les unes des autres en sections transversales disjointes (330, 340) qui définissent le deuxième point de couplage optique (370) et le troisième point de couplage optique (380).

7. Arrangement selon la revendication précédente, la transformation de la première section transversale de guide d'ondes (110) en la deuxième section transversale de guide d'ondes (210) dans la première zone de guide d'ondes (200) s'effectuant par une déformation continue de la section transversale le long de la direction de propagation de la lumière.

8. Arrangement selon l'une des deux revendications précédentes, les sections transversales de guide d'ondes (230, 240) formant respectivement une région simple contiguë avec un rapport d'aspect d'au moins 1,5.

9. Arrangement selon l'une des revendications précédentes,
- le premier point de couplage optique (100) étant couplé optiquement, directement ou indirectement par le biais de segments de guide d'ondes supplémentaires ou d'éléments structurels de formation de faisceaux, à un guide d'ondes à faible contraste d'indice et à modes propres orthogonaux dégénérés ou presque dégénérés, ou à une fibre optique (400) ; et/ou
- le deuxième point de couplage optique (370) ou le troisième point de couplage optique (380) étant couplé optiquement, directement ou indirectement, par le biais de segments de guide d'ondes supplémentaires ou d'éléments structurels de mise en forme du faisceau, à un guide d'ondes à contraste d'indice élevé et à modes propres orthogonaux fortement découplés ou à un guide d'ondes optique intégré à semi-conducteurs (71a) ou (71b .

10. Arrangement selon l'une des revendications précédentes, le premier point de couplage optique (100)
- se trouvant en contact physique direct avec le point de couplage optique supplémentaire (410) du composant optique (400) ; ou
- ne se trouvant pas en contact physique direct avec le point de couplage optique supplémentaire (410) du composant optique (400), la lumière se propageant entre le premier point de couplage optique (100) et le point de couplage optique supplémentaire (410) à travers un milieu homogène au moins par endroits.

11. Arrangement selon l'une des revendications précédentes, le premier point de couplage optique (100) étant conçu pour recevoir de la lumière en provenance d'un espace libre, ou le premier point de couplage optique (100) disposant d'une lentille qui est conçue pour l'injection de la lumière en provenance de l'espace libre.

12. Arrangement selon l'une des revendications précédentes, la zone centrale présentant un indice de réfraction de 1,3 à 1,8.

13. Utilisation d'un arrangement selon l'une des revendications précédentes en tant que :
- filtre polarisant comprenant un arrangement selon l'une des revendications précédentes, ainsi qu'un élément de terminaison optique (395) raccordé à l'un des deuxièmes points de couplage optique (370) ou au troisième point de couplage optique (380) de l'élément de couplage optique (10) à base de guide d'ondes ;
- séparateur de faisceaux polarisés à guide d'ondes comprenant au moins un guide d'ondes de connexion (310a - 310d) ;
- structure de guide d'onde optique passive pour un récepteur multiplex à polarisation cohérente dans une combinaison d'au moins deux éléments de couplage (10a, 10b, 10c, 10d) à base de guide d'onde avec au moins un guide d'onde de connexion (320a - 320d) ;
- structure de guide d'onde optique passive pour un analyseur de polarisation dans une combinaison d'au moins deux éléments de couplage (10a, 10b, 10c, 10d) à base de guide d'onde avec au moins un diviseur de puissance ;
- structure de guide d'onde optique passive pour un capteur d'image sensible à la polarisation dans une combinaison d'au moins deux éléments de couplage (10a, 10b, 10c, 10d) à base de guide d'onde avec au moins un élément micro-optique de forme libre.

14. Procédé de fabrication d'un élément de couplage optique (10) à base de guide d'ondes qui est conçu pour la séparation ou la superposition sélective en mode de champs optiques, au niveau d'au moins un point de couplage optique supplémentaire (410) d'au moins un composant optique (400), comprenant les étapes suivantes :
a) mise à disposition d'au moins un composant optique (400) et localisation d'au moins un point de couplage optique supplémentaire (410) de l'au moins un composant optique (400) dans un système de coordonnées (40) d'une unité de microstructuration de forme libre conçue pour la mise en œuvre d'un procédé de microstructuration de forme libre ;
b) génération d'un jeu de données, lequel décrit une forme tridimensionnelle de l'élément de couplage optique (10) à base de guide d'ondes dans le système de coordonnées (40) de l'unité de microstructuration,
- l'élément de couplage optique (10) à base de guide d'ondes possédant au moins trois points de couplage optique (100, 370, 380),
o au moins un premier point de couplage optique (100) possédant au moins deux modes propres guidés (120, 130) différents l'un de l'autre, associés au premier point de couplage optique (100),
o au moins un deuxième point de couplage optique (370) possédant au moins un mode propre guidé (260) associé au deuxième point de couplage optique (370), et
o au moins un troisième point de couplage optique (380) possédant au moins un mode propre guidé (280) associé au troisième point de couplage optique (380),
- l'élément de couplage optique (10) à base de guide d'ondes étant conçu pour transmettre la lumière de manière bidirectionnelle avec une grande efficacité
o entre au moins un premier mode propre guidé (120) associé au premier point de couplage optique (100) et l'au moins un mode propre guidé (260) associé au deuxième point de couplage optique (370), ainsi que
o entre au moins un deuxième mode propre guidé (130) associé au premier point de couplage optique (100) et l'au moins un mode propre guidé (280) associé au troisième point de couplage optique (380).
c) fabrication de l'élément de couplage optique (10) à base guide d'ondes au niveau de l'au moins un point de couplage optique supplémentaire (410) de l'au moins un composant optique (400) au moyen du procédé de microstructuration à forme libre ;
d) incorporation de l'élément de couplage optique (10) à base de guide d'ondes au moins par zones dans une zone d'enveloppe adjacente à l'élément de couplage optique (10) à base de guide d'ondes qui fait office de zone centrale, une différence d'indice de réfraction d'au moins 0,05 se produisant entre la zone centrale et la zone d'enveloppe.

15. Procédé selon la revendication précédente, au moins l'un des deuxièmes points de couplage optique (370) ou des troisièmes points de couplage optique (380) étant couplé optiquement à l'au moins un composant optique (400) ou à un composant optique supplémentaire (430, 440), la position de l'au moins un composant optique (400) ou des composants optiques supplémentaires (430, 440) étant détectée et prise en compte dans l'étape b) lors de la génération du jeu de données.

16. Procédé selon l'une des revendications précédentes, la zone centrale présentant un indice de réfraction de 1,3 à 1,8.

17. Procédé selon l'une des revendications précédentes, au moins un élément optique supplémentaire, choisi parmi un guide d'ondes de connexion (30, 160, 170, 310a à 310d, 320a à 320d, 830, 840), une structure effilée (72a, 72b, 170, 170a à 170f, 331, 341, 815, 816, 850, 860), un coupleur optique (20a, 20b), un élément structurel de mise en forme du faisceau (111, 411) ou une structure de support mécanique (60) étant fabriqué en plus au moyen du procédé de microstructuration à forme libre.

18. Procédé selon l'une des revendications précédentes, le procédé de microstructuration à forme libre étant un procédé lithographique choisi parmi la stéréolithographie, en particulier au moyen de modulateurs de lumière plane, ou la lithographie laser à écriture directe, en particulier la polymérisation multiphotonique.
